(19) Europäisches Patentamt
European Patent Office
Office européen des brevets

(11) **EP 4 283 341 B1**

(12) **EUROPEAN PATENT SPECIFICATION**

(45) Date of publication and mention
of the grant of the patent:
**22.10.2025 Bulletin 2025/43**

(21) Application number: **21927860.3**

(22) Date of filing: **26.02.2021**

(51) International Patent Classification (IPC):
*G01S 17/95* (2006.01)    *G01S 7/48* (2006.01)
*G01S 17/26* (2020.01)    *G01N 21/31* (2006.01)
*G01N 21/39* (2006.01)    *G01N 25/00* (2006.01)
*G01S 7/4912* (2020.01)    *G01S 17/34* (2020.01)
*G01N 21/17* (2006.01)

(52) Cooperative Patent Classification (CPC):
**G01N 21/3151; G01N 21/39; G01S 7/4802;
G01S 7/4917; G01S 17/26; G01S 17/34;
G01S 17/95;** G01N 2021/1795; G01N 2021/392;
G01N 2201/0696; Y02A 90/10

(86) International application number:
**PCT/JP2021/007236**

(87) International publication number:
**WO 2022/180758 (01.09.2022 Gazette 2022/35)**

(54) **LIDAR DEVICE**

LIDAR-VORRICHTUNG

DISPOSITIF LIDAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023 Bulletin 2023/48**

(73) Proprietor: **MITSUBISHI ELECTRIC
CORPORATION
Chiyoda-ku
Tokyo 100-8310 (JP)**

(72) Inventors:
• **IMAKI, Masaharu
Tokyo 100-8310 (JP)**

• **NAKANO, Takayuki
Tokyo 100-8310 (JP)**
• **ITO, Yusuke
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A1- 3 081 961    EP-A1- 3 564 652
JP-A- H1 090 176**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a lidar device.

BACKGROUND ART

Non-Patent Literature 1 below discloses a lidar device that calculates the density of gas present in a space. The lidar device includes a first light source that oscillates a first laser beam having a wavelength included in an absorption wavelength band of an observation target gas and a second light source that oscillates a second laser beam having a wavelength not included in the absorption wavelength band. The absorption rate of the second laser beam by the gas is lower than the absorption rate of the first laser beam by the gas. The gas present in the space corresponds to, for example, a constituent molecule in the air, and the constituent molecule in the air is nitrogen, oxygen, carbon dioxide, or water vapor. The constituent molecules in the air also include air pollutants such as nitrogen oxides (NOx).

In addition, the lidar device includes an optical switch, an optical transmission unit, an optical receiving unit, and a density calculating unit. In the lidar device, the optical switch selects the first laser beam or the second laser beam.

When the optical switch selects the first laser beam, the optical transmission unit emits the first laser beam into the space, and when the optical switch selects the second laser beam, the optical transmission unit emits the second laser beam into the space. The optical receiving unit receives first scattered light that is the first laser beam after being emitted by the optical transmission unit and then scattered by the scatterer floating in the space or second scattered light that is the second laser beam after being scattered by the scatterer, and detects interference light between the first scattered light or the second scattered light and the reference light. The scatterer corresponds to a cloud, smoke, dust, aerosol, raindrops, or the like. Then, the density calculating unit performs frequency analysis on the interference light detected by the optical receiving unit, and calculates the density of the gas from the reception intensity of the analysis result.

EP 3 564 652 A1 describes laser radar devices for calculating a concentration of molecules in the atmosphere.

EP 3 081 961 A1 describes a laser radar device that performs remote measurement of wind directions and speeds in, for example, weather space.

CITATION LIST

NON-PATENT LITERATURE

Non-Patent Literature 1: F. Gibert, D. Edouart, C. Cenac ("e" has an acute accent.), F. Le Mounier, and A. Dumas, "2-$\mu$m Ho emitter-based coherent DIAL for CO2 profiling in the atmosphere", Opt. Lett. 40(13), 3093-3096 (2015).

SUMMARY OF INVENTION

TECHNICAL PROBLEM

In the lidar device disclosed in Non-Patent Literature 1, in order for the density calculating unit to calculate the density of the gas, the lidar device needs to include a first light source and a second light source.

The present disclosure has been made to solve the above problems, and an object thereof is to obtain a lidar device capable of calculating the density of gas without including two light sources.

SOLUTION TO PROBLEM

The invention is set out in the appended set of claims.

ADVANTAGEOUS EFFECTS OF INVENTION

According to the present disclosure, it is possible to calculate the density of gas without including two light sources.

BRIEF DESCRIPTION OF DRAWINGS

FIG. 1 is a configuration diagram illustrating a lidar device 1 according to a first embodiment.

FIG. 2 is a configuration diagram illustrating a density calculating unit 16 of the lidar device 1 according to the first embodiment.

FIG. 3 is a hardware configuration diagram illustrating hardware of the density calculating unit 16 of the lidar device 1 according to the first embodiment.

FIG. 4 is a hardware configuration diagram of a computer in a case where the density calculating unit 16 is implemented by software, firmware, or the like.

FIG. 5 is a flowchart illustrating a processing procedure of the density calculating unit 16.

FIG. 6 is an explanatory diagram illustrating an absorption wavelength band of gas, a wavelength of a laser beam output from a light source 11, a first wavelength, and a second wavelength.

FIG. 7 is an explanatory diagram illustrating an optical frequency of scattered light, an optical frequency of reference light, and a reception spectrum in a signal in a frequency domain.

FIG. 8 is an explanatory diagram illustrating an area of a reception spectrum.

FIG. 9 is an explanatory diagram illustrating an output waveform of a second frequency oscillator 22 capable of changing a frequency $\Delta f$ to be added.

FIG. 10 is an explanatory diagram illustrating wavelength sweep of a second laser beam.

FIG. 11 is a configuration diagram illustrating another lidar device 1 according to the first embodiment.

FIG. 12 is a configuration diagram illustrating a lidar device 1 according to a second embodiment.

FIG. 13 is a configuration diagram illustrating a temperature calculating unit 84 of the lidar device 1 according to the second embodiment.

FIG. 14 is a hardware configuration diagram illustrating hardware of the temperature calculating unit 84 of the lidar device 1 according to the second embodiment.

FIG. 15 is a hardware configuration diagram of a computer in a case where the temperature calculating unit 84 is implemented by software, firmware, or the like.

FIG. 16 is an explanatory diagram illustrating an absorption wavelength band of gas, a wavelength of the laser beam output from the light source 11, a first wavelength, a second wavelength, and a third wavelength.

FIG. 17 is a configuration diagram illustrating a lidar device 1 according to a third embodiment.

FIG. 18 is a configuration diagram illustrating another lidar device 1 according to the third embodiment.

FIG. 19 is a configuration diagram illustrating a lidar device 1 according to a fourth embodiment.

FIG. 20 is an explanatory diagram illustrating a relationship between a digital signal provided to a frequency analysis unit 51 and a distance range corresponding to each time gate.

FIG. 21 is an explanatory diagram illustrating a signal in a frequency domain for each distance range and a reception spectrum for each distance range.

FIG. 22 is an explanatory diagram illustrating an area of a reception spectrum and a frequency difference between two reception spectra.

FIG. 23 is a configuration diagram illustrating a lidar device 1 according to a fifth embodiment.

DESCRIPTION OF EMBODIMENTS

Hereinafter, in order to describe the present disclosure in more detail, embodiments for carrying out the present disclosure will be described with reference to the accompanying drawings.

First Embodiment.

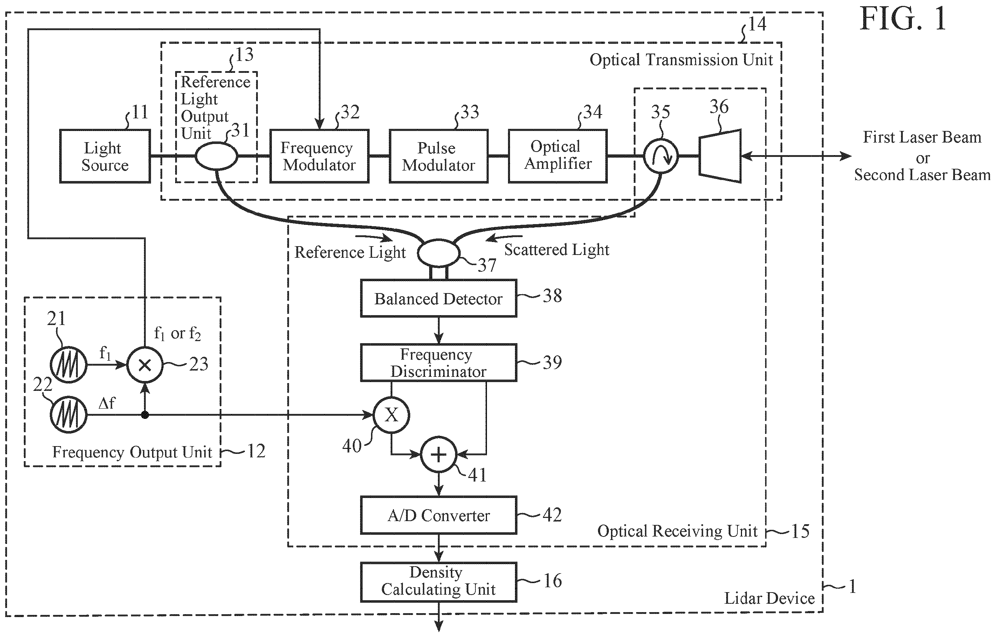

FIG. 1 is a configuration diagram illustrating a lidar device 1 according to a first embodiment.

In the first embodiment, it is assumed that a gas that is a gas to be observed (hereinafter referred to as "observation target gas") is present in the air in which the lidar device 1 is installed. However, this is merely an example, and the observation target gas may not be present in the air in which the lidar device 1 is installed, and the observation target gas may be present in another space via a window or the like.

The lidar device 1 illustrated in FIG. 1 includes a light source 11, a frequency output unit 12, a reference light output unit 13, an optical transmission unit 14, an optical receiving unit 15, and a density calculating unit 16.

The light source 11 is, for example, a laser that emits and a laser beam of a single frequency, and is implemented by a semiconductor laser, a fiber laser, or a solid-state laser whose emission spectrum has a line width of several MHz or less. Alternatively, the light source 11 is implemented by a combination of one or more lasers among a semiconductor laser, a fiber laser, and a solid-state laser.

The light source 11 outputs the first laser beam that is continuous light to each of the reference light output unit 13 and the optical transmission unit 14. The optical frequency of the laser beam output from the light source 11 is $f_0$.

The frequency output unit 12 includes a first frequency oscillator 21, a second frequency oscillator 22, and a frequency mixer 23.

The frequency output unit 12 outputs a first frequency $f_1$ or a second frequency $f_2$ different from the first frequency $f_1$ to the optical transmission unit 14.

The first frequency oscillator 21 oscillates a first frequency $f_1$ and outputs the first frequency $f_1$ to the frequency mixer 23.

The second frequency oscillator 22 intermittently oscillates a frequency $\Delta f$ to be added to the first frequency $f_1$, and intermittently outputs the frequency $\Delta f$ to be added to the frequency mixer 23.

When outputting the frequency $\Delta f$ to be added to the frequency mixer 23, the second frequency oscillator 22 outputs the frequency $\Delta f$ to be added to the frequency mixer 40 described later.

When not outputting the frequency $\Delta f$ to be added to the frequency mixer 23, the second frequency oscillator 22 does not output the frequency $\Delta f$ to be added to the frequency mixer 40.

The frequency mixer 23 is implemented by, for example, a mixer.

When the frequency $\Delta f$ to be added is not output from the second frequency oscillator 22, the frequency mixer 23 outputs the first frequency $f_1$ oscillated by the first frequency oscillator 21 to a frequency modulator 32 described later.

When the frequency $\Delta f$ to be added is output from the second frequency oscillator 22, the frequency mixer 23 outputs the frequency $f_1 + \Delta f$, which is the sum of the first frequency $f_1$ oscillated by the first frequency oscillator 21 and the frequency $\Delta f$ to be added, to the optical transmission unit 14 as the second frequency $f_2$.

The reference light output unit 13 includes an optical distributor 31.

The reference light output unit 13 outputs the laser beam output from the light source 11 to the optical receiving unit 15 as reference light.

The optical distributor 31 is implemented by, for example, a beam splitter or a fiber type coupler.

The optical distributor 31 distributes the laser beam output from the light source 11 at a predetermined ratio. The predetermined ratio is, for example, a ratio of 90 on the frequency modulator 32 side and a ratio of 10 on the optical multiplexer 37 side to be described later.

The optical distributor 31 outputs one of the distributed laser beams to the frequency modulator 32 and outputs the other of the distributed laser beams to the optical multiplexer 37.

The optical transmission unit 14 includes an optical distributor 31, a frequency modulator 32, a pulse modulator 33, an optical amplifier 34, an optical circulator 35, and an optical antenna 36.

The optical transmission unit 14 generates a first laser beam by modulating the optical frequency of the laser beam output from the light source 11 by the first frequency $f_1$, and radiates the first laser beam into space. The first laser beam is laser beam having a first wavelength included in an absorption wavelength band of an observation target gas.

The optical transmission unit 14 generates a second laser beam by modulating the optical frequency of the laser beam output from the light source 11 by the second frequency $f_2$, and radiates the second laser beam into space. The second laser beam is a laser beam having a second wavelength not included in the absorption wavelength band of the observation target gas, and has a lower absorption rate by the gas than that of the first laser beam.

Examples of the gas present in space include constituent molecules in the atmosphere, and examples of the scatterer include clouds, smoke, dust, aerosols, rain drops, and the like. The constituent molecule in the atmosphere is nitrogen, oxygen, carbon dioxide, or water vapor. The constituent molecules in the air also include air pollutants such as nitrogen oxides (NOx). In the lidar device 1 shown in FIG. 1, the absorption wavelength band of the gas is an already-made value. Note that the scatterer may be a hard target such as a structure.

The frequency modulator 32 is implemented by, for example, a modulation element using an acousto-optic element or a modulation element using a lithium niobate crystal.

When the first frequency $f_1$ is output from the frequency mixer 23, the frequency modulator 32 modulates the optical frequency $f_0$ of the laser beam output from the optical distributor 31 by the first frequency $f_1$, and outputs the frequency-modulated laser beam to the pulse modulator 33 as the first laser beam. The optical frequency of the first laser beam is $f_0 + f_1$.

When the second frequency $f_2$ is output from the frequency mixer 23, the frequency modulator 32 modulates the optical frequency $f_0$ of the laser beam output from the optical distributor 31 by the second frequency $f_2$, and outputs the laser beam modulated by the second frequency to the pulse modulator 33 as the second laser beam. The optical frequency of the second laser beam is $f_0 + f_2$.

The pulse modulator 33 is implemented by, for example, a modulation element using an acousto-optic element or a modulation element using a lithium niobate crystal, and an optical amplifier such as a semiconductor optical amplifier.

When the first laser beam is output from the frequency modulator 32, the pulse modulator 33 pulse-modulates the first laser beam. That is, the pulse modulator 33 converts the first laser beam that is continuous light into pulse light having a predetermined pulse width.

The pulse modulator 33 outputs the pulse-modulated first laser beam, which is pulse light, to the optical amplifier 34.

When the second laser beam is output from the frequency modulator 32, the pulse modulator 33 pulse-modulates the second laser beam. That is, the pulse modulator 33 converts the second laser beam, which is continuous light, into pulse light having a predetermined pulse width.

The pulse modulator 33 outputs the pulse-modulated second laser beam, which is pulse light, to the optical amplifier 34.

When the pulse-modulated first laser beam is output from the pulse modulator 33, the optical amplifier 34 amplifies the pulse-modulated first laser beam and outputs the amplified first laser beam to the optical circulator 35.

When the pulse-modulated second laser beam is output from the pulse modulator 33, the optical amplifier 34 amplifies the pulse-modulated second laser beam and outputs the amplified second laser beam to the optical circulator 35.

The optical circulator 35 is implemented by, for example, a polarization beam splitter and a wavelength plate.

When the amplified first laser beam is output from the optical amplifier 34, the optical circulator 35 outputs the amplified first laser beam to the optical antenna 36, and outputs scattered light (described later) collected by the optical antenna 36 to the optical multiplexer 37.

When the amplified second laser beam is output from the optical amplifier 34, the optical circulator 35 outputs the amplified second laser beam to the optical antenna 36, and outputs scattered light collected by the optical antenna 36 to the optical multiplexer 37.

The optical antenna 36 is implemented by, for example, a plurality of refraction lenses or a plurality of mirrors.

When the first laser beam is output from the optical circulator 35, the optical antenna 36 radiates the first laser beam to a space where gas is present.

The optical antenna 36 receives scattered light that is the first laser beam scattered by the scatterer floating in the space, and outputs the scattered light to the optical circulator 35.

When the second laser beam is output from the optical circulator 35, the optical antenna 36 radiates the second laser beam to the space where the gas is present.

The optical antenna 36 receives scattered light that is the second laser beam scattered by the scatterer floating in the space, and outputs the scattered light to the optical circulator 35.

The optical receiving unit 15 includes an optical circulator 35, an optical antenna 36, an optical multiplexer 37, a balanced detector 38, a frequency discriminator 39, a frequency mixer 40, a signal multiplexer 41, and an analog/digital converter (hereinafter referred to as "A/D converter") 42.

The optical receiving unit 15 receives, as scattered light, the first laser beam after being radiated by the optical transmission unit 14 and then scattered by the scatterer or the second laser beam after being radiated by the optical transmission unit 14 and then scattered by the scatterer.

That is, the optical receiving unit 15 receives the first laser beam scattered by the scatterer as scattered light when the optical receiving unit 15 radiates the first laser beam into the space, and receives the second laser beam scattered by the scatterer as scattered light when the optical receiving unit 15 radiates the second laser beam into the space.

The optical receiving unit 15 detects interference light between scattered light and reference light.

The optical multiplexer 37 is implemented by, for example, a beam splitter or a fiber type coupler.

The optical multiplexer 37 detects interference light between scattered light output from the optical circulator 35 and reference light output from the optical distributor 31.

The optical multiplexer 37 outputs the interference light to the balanced detector 38.

For example, in a case where the lidar device 1 is moving, or in a case where the gas and the scatterer are moving due to wind or the like, the scattered light is subjected to the Doppler shift, and the optical frequencies $f_0 + f_1$ and $f_0 + f_2$ of the scattered light are shifted. That is, when the lidar device 1 and the scatterer or the like are close to each other, the optical frequencies $f_0 + f_1$ and $f_0 + f_2$ of the scattered light are increased by, for example, the frequency $\Delta f_{sft}$. When the lidar device 1 and the scatterer or the like are away from each other, the optical frequencies $f_0 + f_1$ and $f_0 + f_2$ of the scattered light are decreased by, for example, the frequency $\Delta f_{sft}$.

Therefore, when the lidar device 1 and the scatterer or the like are close to each other, the optical multiplexer 37 outputs the interference light having the optical frequency $f_1 + \Delta f_{sft}$ to the balanced detector 38 if the scattered light which is the scattered first laser beam is output from the optical circulator 35, and outputs the interference light having the optical frequency $f_2 + \Delta f_{sft}$ to the balanced detector 38 if the scattered light which is the scattered second laser beam is output from the optical circulator 35.

When the lidar device 1 and the scatterer or the like are away from each other, the optical multiplexer 37 outputs the interference light having the optical frequency $f_1 - \Delta f_{sft}$ to the balanced detector 38 if the scattered light which is the scattered first laser beam is output from the optical circulator 35, and outputs the interference light having the optical frequency $f_2 - \Delta f_{sft}$ to the balanced detector 38 if the scattered light which is the scattered second laser beam is output from the optical circulator 35.

When the lidar device 1 is not moved and the gas and the scatterer are not moved, the optical frequencies $f_0 + f_1$ and $f_0 + f_2$ of the scattered light are not shifted. Therefore, the optical multiplexer 37 outputs the interference light having the optical frequency $f_1$ to the balanced detector 38 if the scattered light that is the scattered first laser beam is output from the optical circulator 35, and outputs the interference light having the optical frequency $f_2$ to the balanced detector 38 if the scattered light that is the scattered second laser beam is output from the optical circulator 35.

The balanced detector 38 is implemented by, for example, a balanced receiver that reduces in-phase noise by using two photodiodes.

The balanced detector 38 converts the interference light output from the optical multiplexer 37 into an electric signal.

The balanced detector 38 outputs the electric signal to the frequency discriminator 39.

When the electric signal related to the interference light having the optical frequency $f_2 + \Delta f_{sft}$, the electric signal related to the interference light having the optical frequency $f_2 - \Delta f_{sft}$, or the electric signal related to the interference light having the optical frequency $f_2$ is output from the balanced detector 38, the frequency discriminator 39 outputs these electric signals to the frequency mixer 40.

When the electric signal related to the interference light having the optical frequency $f_1 + \Delta f_{sft}$, the electric signal related to the interference light having the optical frequency $f_1 - \Delta f_{sft}$, or the electric signal related to the interference light having the optical frequency $f_1$ is output from the balanced detector 38, the frequency discriminator 39 outputs these electric signals to the signal multiplexer 41.

The frequency mixer 40 is implemented by, for example, a mixer.

The frequency mixer 40 down-converts the frequency of the electric signal output from the frequency discriminator 39 using the frequency $\Delta f$ to be added output from the second frequency oscillator 22.

That is, when the frequency of the electric signal output from the frequency discriminator 39 is $f_2 + \Delta f_{sft}$, the frequency mixer 40 down-converts the frequency of the electric signal to $f_1 + \Delta f_{sft}$ using the frequency $\Delta f$ to be added.

When the frequency of the electric signal output from the frequency discriminator 39 is $f_2 - \Delta f_{sft}$, the frequency mixer 40 down-converts the frequency of the electric signal to $f_1 - \Delta f_{sft}$ using the frequency $\Delta f$ to be added.

When the frequency of the electric signal output from the frequency discriminator 39 is $f_2$, the frequency mixer 40 down-converts the frequency of the electric signal to $f_1$ using the frequency $\Delta f$ to be added.

The frequency mixer 40 outputs the down-converted electric signal to the signal multiplexer 41.

Upon receiving the electric signal from the frequency discriminator 39, the signal multiplexer 41 outputs the electric signal to the A/D converter 42.

Upon receiving the electric signal from the frequency mixer 40, the signal multiplexer 41 outputs the electric signal to the A/D converter 42.

The A/D converter 42 converts an analog electric signal output from the signal multiplexer 41 into a digital signal.

The A/D converter 42 outputs the digital signal to the density calculating unit 16.

Then, the density calculating unit 16 analyzes a frequency of the interference light detected by the optical receiving unit 15, and calculates the density of the gas from the analysis result of the frequency.

The lidar device 1 illustrated in FIG. 1 includes a density calculating unit 16. However, this is merely an example, and the lidar device 1 may not include the density calculating unit 16, and a computer or the like different from the lidar device 1 may implement the density calculating unit 16. In this case, the A/D converter 42 outputs the digital signal to a computer or the like different from the lidar device 1.

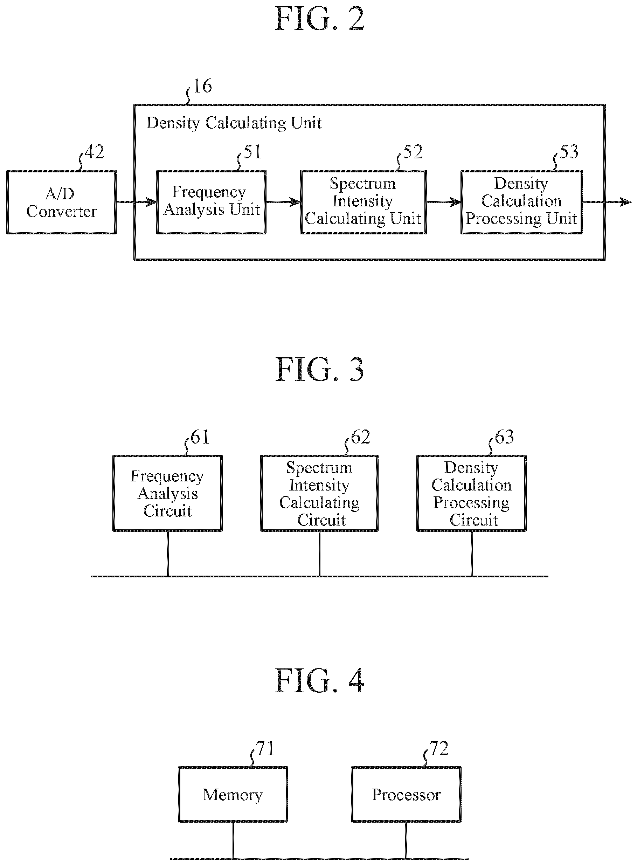

FIG. 2 is a configuration diagram illustrating the density calculating unit 16 of the lidar device 1 according to the first embodiment.

FIG. 3 is a hardware configuration diagram illustrating hardware of the density calculating unit 16 of the lidar device 1 according to the first embodiment.

The density calculating unit 16 illustrated in FIG. 2 includes a frequency analysis unit 51, a spectrum intensity calculating unit 52, and a density calculation processing unit 53.

The frequency analysis unit 51 is implemented by, for example, a frequency analysis circuit 61 illustrated in FIG. 3.

The frequency analysis unit 51 converts the digital signal output from the A/D converter 42 into a signal in a frequency domain by performing fast Fourier transform on the digital signal for each predetermined time gate.

The frequency analysis unit 51 outputs the signal in frequency domain for a plurality of distance ranges to the spectrum intensity calculating unit 52.

The spectrum intensity calculating unit 52 is implemented by, for example, a spectrum intensity calculating circuit 62 shown in FIG. 3.

The spectrum intensity calculating unit 52 calculates the intensity of the reception spectrum for each distance range from the signal in frequency domain for each distance range output from the frequency analysis unit 51.

That is, when the interference light having the optical frequency $f_1 + \Delta f_{sft}$ or the interference light having the optical frequency $f_2 + \Delta f_{sft}$ is detected by the optical multiplexer 37, the spectrum intensity calculating unit 52 calculates the intensity of the reception spectrum at the frequency $f_1 + \Delta f_{sft}$ for each distance range.

When the interference light having the optical frequency $f_1 - \Delta f_{sft}$ or the interference light having the optical frequency $f_2 - \Delta f_{sft}$ is detected by the optical multiplexer 37, the spectrum intensity calculating unit 52 calculates the intensity of the reception spectrum at the frequency $f_1 - \Delta f_{sft}$ for each distance range.

When the interference light having the optical frequency $f_1$ or the interference light having the optical frequency $f_2$ is detected by the optical multiplexer 37, the spectrum intensity calculating unit 52 calculates the intensity of the reception spectrum at the frequency $f_1$ for each distance range.

The spectrum intensity calculating unit 52 outputs the intensity of the reception spectrum for each distance range to the density calculation processing unit 53.

The density calculation processing unit 53 is implemented by, for example, a density calculation processing circuit 63 shown in FIG. 3.

The density calculation processing unit 53 calculates the density of the gas from the intensity of the reception spectrum for each distance range output from the spectrum intensity calculating unit 52.

In FIG. 2, it is assumed that each of the frequency analysis unit 51, the spectrum intensity calculating unit 52, and the density calculation processing unit 53, which are components of the density calculating unit 16, is implemented by dedicated hardware as illustrated in FIG. 3. That is, it is assumed that the density calculating unit 16 is implemented by the frequency analysis circuit 61, the spectrum intensity calculating circuit 62, and the density calculation processing circuit 63.

Each of the frequency analysis circuit 61, the spectrum intensity calculating circuit 62, and the density calculation processing circuit 63 corresponds to, for example, a single circuit, a composite circuit, a programmed processor, a parallel-programmed processor, an application specific integrated circuit (ASIC), a field-programmable gate array (FPGA), or a combination thereof.

The components of the density calculating unit 16 are not limited to those implemented by dedicated hardware, and the density calculating unit 16 may be implemented by software, firmware, or a combination of software and firmware.

The software or firmware is stored in a memory of a computer as a program. The computer means hardware that executes a program, and corresponds to, for example, a central processing unit (CPU), a central processing unit, a processing unit, an arithmetic unit, a microprocessor, a microcomputer, a processor, or a digital signal processor (DSP).

FIG. 4 is a hardware configuration diagram of a computer in a case where the density calculating unit 16 is implemented by software, firmware, or the like.

In a case where the density calculating unit 16 is implemented by software, firmware, or the like, a program for causing a computer to execute respective processing procedures in the frequency analysis unit 51, the spectrum intensity calculating unit 52, and the density calculation processing unit 53 is stored in a memory 71. Then, a processor 72 of the computer executes the program stored in the memory 71.

Furthermore, FIG. 3 illustrates an example in which each of the components of the density calculating unit 16 is implemented by dedicated hardware, and FIG. 4 illustrates an example in which the density calculating unit 16 is implemented by software, firmware, or the like. However, this is merely an example, and some components in the density calculating unit 16 may be implemented by dedicated hardware, and the remaining components may be implemented by software, firmware, or the like.

Next, the operation of the lidar device 1 illustrated in FIG. 1 will be described.

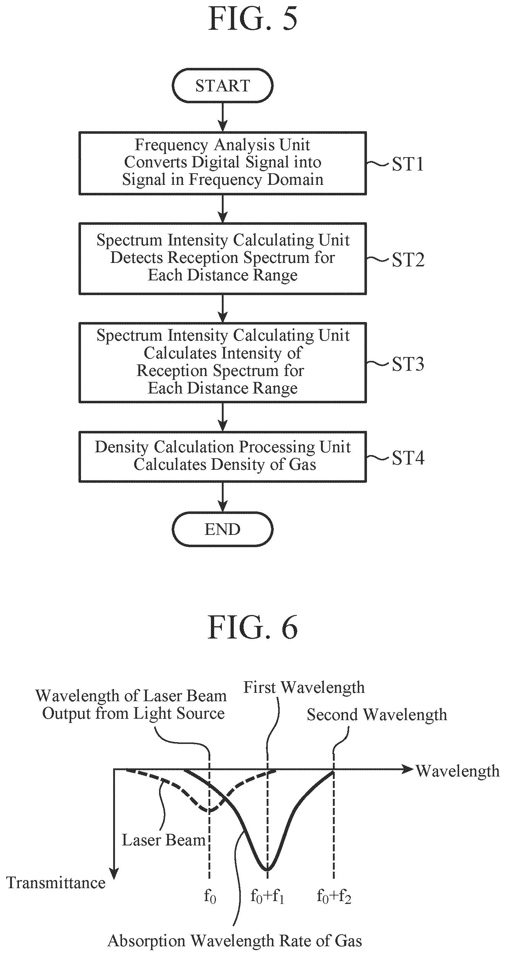

FIG. 5 is a flowchart illustrating a processing procedure of the density calculating unit 16.

The light source 11 outputs a laser beam that is continuous light to the optical distributor 31.

The frequency output unit 12 outputs the first frequency $f_1$ or the second frequency $f_2$ to the optical transmission unit 14. For example, the frequency output unit 12 alternately outputs the first frequency $f_1$ and the second frequency $f_2$ to the optical transmission unit 14.

Hereinafter, the frequency output operation by the frequency output unit 12 will be specifically described.

The first frequency oscillator 21 oscillates a first frequency $f_1$ and outputs the first frequency $f_1$ to the frequency mixer 23.

The second frequency oscillator 22 intermittently oscillates the frequency $\Delta f$ to be added, and intermittently outputs the frequency $\Delta f$ to be added to the frequency mixer 23.

When outputting the frequency $\Delta f$ to be added to the frequency mixer 23, the second frequency oscillator 22 outputs the frequency $\Delta f$ to be added to the frequency mixer 40.

When not outputting the frequency $\Delta f$ to be added to the frequency mixer 23, the second frequency oscillator 22 does not output the frequency $\Delta f$ to be added to the frequency mixer 40.

When the frequency $\Delta f$ to be added is not output from the second frequency oscillator 22, the frequency mixer 23 outputs the first frequency $f_1$ oscillated by the first frequency oscillator 21 to the frequency modulator 32.

When the frequency $\Delta f$ to be added is output from the second frequency oscillator 22, the frequency mixer 23 outputs the frequency $f_1 + \Delta f$ of the sum of the first frequency $f_1$ and the frequency $\Delta f$ to be added to the frequency modulator 32 as the second frequency $f_2$.

The first frequency oscillator 21 generates a sine wave signal corresponding to the first frequency $f_1$ in a case where the frequency modulator 32 is implemented by a modulation element using an acousto-optic element, and generates a sawtooth wave signal to be serrodyne modulation in a case where the frequency modulator 32 is implemented by a modulation element using a lithium niobate crystal.

In addition, also the second frequency oscillator 22, generates a sine wave signal corresponding to the frequency Δf to be added in a case where the frequency modulator 32 is implemented by a modulation element using an acousto-optic element, and generates a sawtooth wave signal to be serrodyne modulation in a case where the frequency modulator 32 is implemented by a modulation element using a lithium niobate crystal.

In general, in a case where the frequency modulator 32 is implemented by a modulation element using an acousto-optic element, frequency modulation by the frequency modulator 32 is about several hundred MHz at most.

On the other hand, in a case where the frequency modulator 32 is implemented by a modulation element using a lithium niobate crystal, frequency modulation by the frequency modulator 32 can be performed up to about several tens of GHz. In a case where the frequency modulator 32 is implemented by a modulation element using a lithium niobate crystal, it is possible to implement a shift of a wavelength larger than the line width of the absorption line of the gas that is the observation target gas. Therefore, the frequency modulator 32 can output the first laser beam having the first wavelength included in the absorption wavelength band of the gas by frequency-modulating the optical frequency $f_0$ of the laser beam having a stable wavelength by the first frequency $f_1$. In addition, the frequency modulator 32 can output the second laser beam having the second wavelength not included in the absorption wavelength band of the gas by frequency-modulating the optical frequency $f_0$ of the laser beam by the second frequency $f_2$.

Upon receiving the laser beam from the light source 11, the optical distributor 31 distributes the laser beam at a predetermined ratio.

The optical distributor 31 outputs one of the distributed laser beams to the frequency modulator 32, and outputs the other of the distributed laser beams to the optical multiplexer 37 as reference light.

The frequency modulator 32 acquires the laser beam from the optical distributor 31.

When acquiring the first frequency $f_1$ from the frequency mixer 23, the frequency modulator 32 modulates the optical frequency $f_0$ of the laser beam output from the optical distributor 31 by the first frequency $f_1$.

The frequency modulator 32 outputs the laser beam modulated by the first frequency $f_1$ to the pulse modulator 33 as the first laser beam. The first laser beam has a first wavelength, and an optical frequency of the first laser beam is $f_0 + f_1$.

When acquiring the second frequency $f_2$ from the frequency mixer 23, the frequency modulator 32 modulates the optical frequency $f_0$ of the laser beam by the second frequency $f_2$.

The frequency modulator 32 outputs the laser beam modulated by the second frequency $f_2$ to the pulse modulator 33 as the second laser beam. The second laser beam has a second wavelength, and the optical frequency of the second laser beam is $f_0 + f_2$.

FIG. 6 is an explanatory diagram illustrating an absorption wavelength band of gas, a wavelength of a laser beam output from the light source 11, a first wavelength, and a second wavelength.

In FIG. 6, the horizontal axis represents the wavelength, and the vertical axis represents the transmittance of the laser beam to the gas.

A broken line indicates a laser beam output from the light source 11, and a solid line indicates an absorption wavelength band of gas. The first wavelength is included in the absorption wavelength band of the gas, and the second wavelength is not included in the absorption wavelength band of the gas. The transmittance of the second wavelength by the gas is greater than the transmittance of the first wavelength by the gas. That is, the absorption rate of the second wavelength by the gas is smaller than the absorption rate of the first wavelength by the gas.

When acquiring the first laser beam from the frequency modulator 32, the pulse modulator 33 pulse-modulates the first laser beam. That is, the pulse modulator 33 converts the first laser beam that is continuous light into pulse light having a predetermined pulse width.

The pulse modulator 33 outputs the pulse-modulated first laser beam, which is pulse light, to the optical amplifier 34.

When acquiring the second laser beam from the frequency modulator 32, the pulse modulator 33 pulse-modulates the second laser beam. That is, the pulse modulator 33 converts the second laser beam, which is continuous light, into pulse light having a predetermined pulse width.

The pulse modulator 33 outputs the pulse-modulated second laser beam, which is pulse light, to the optical amplifier 34.

In the pulse-type lidar device 1, the distance resolution is determined by the pulse width of the pulse light. Assuming that the pulse width is t [s] and the light speed is c [m/s], the distance resolution R [m] is expressed by the following Formula (1).

$$R = c \times t/2 \qquad (1)$$

When acquiring the pulse-modulated first laser beam from the pulse modulator 33, the optical amplifier 34 amplifies the pulse-modulated first laser beam and outputs the amplified first laser beam to the optical circulator 35.

When acquiring the pulse-modulated second laser beam from the pulse modulator 33, the optical amplifier 34 amplifies the pulse-modulated second laser beam and outputs the amplified second laser beam to the optical circulator 35.

When acquiring the amplified first laser beam from the optical amplifier 34, the optical circulator 35 outputs the amplified first laser beam to the optical antenna 36.

When acquiring the amplified second laser beam from the optical amplifier 34, the optical circulator 35 outputs the amplified second laser beam to the optical antenna 36.

Upon receiving the first laser beam from the optical circulator 35, the optical antenna 36 radiates the first laser beam to a space where gas is present.

The optical antenna 36 receives scattered light that is the first laser beam scattered by the scatterer floating in the space, and outputs the scattered light to the optical circulator 35.

The optical circulator 35 outputs the scattered light collected by the optical antenna 36 to the optical multiplexer 37.

Upon receiving the second laser beam from the optical circulator 35, the optical antenna 36 radiates the second laser beam to the space where the gas is present.

The optical antenna 36 receives scattered light that is the second laser beam scattered by the scatterer floating in the space, and outputs the scattered light to the optical circulator 35.

The optical circulator 35 outputs the scattered light collected by the optical antenna 36 to the optical multiplexer 37.

The optical multiplexer 37 acquires the scattered light from the optical circulator 35 and acquires reference light from the optical distributor 31.

The optical multiplexer 37 detects interference light between the scattered light and the reference light.

For example, when the lidar device 1 moves or the gas and the scatterer move, the scattered light is subjected to the Doppler shift, and the optical frequencies $f_0 + f_1$ and $f_0 + f_2$ of the scattered light are shifted. That is, when the lidar device 1 and the scatterer or the like are close to each other, the optical frequencies $f_0 + f_1$ and $f_0 + f_2$ of the scattered light are increased by, for example, the frequency $\Delta f_{sft}$. Since the optical frequency of the reference light is $f_0$, the optical frequencies of the interference light are $f_1 + \Delta f_{sft}$ ($= f_0 + f_1 + \Delta f_{sft} - f_0$) and $f_2 + \Delta f_{sft}$ ($= f_0 + f_2 + \Delta f_{sft} - f_0$).

When the lidar device 1 and the scatterer or the like are away from each other, the optical frequencies $f_0 + f_1$ and $f_0 + f_2$ of the scattered light are decreased by, for example, the frequency $\Delta f_{sft}$. Since the optical frequency of the reference light is $f_0$, the optical frequencies of the interference light are $f_1 - \Delta f_{sft}$ ($= f_0 + f_1 - \Delta f_{sft} - f_0$) and $f_2 - \Delta f_{sft}$ ($= f_0 + f_2 - \Delta f_{sft} - f_0$).

Therefore, when the lidar device 1 and the scatterer or the like are close to each other, if scattered light that is the scattered first laser beam is output from the optical circulator 35, the optical multiplexer 37 outputs interference light having an optical frequency $f_1 + \Delta f_{sft}$ to the balanced detector 38.

Furthermore, when the lidar device 1 and the scatterer or the like are close to each other, if scattered light that is the scattered second laser beam is output from the optical circulator 35, the optical multiplexer 37 outputs interference light having an optical frequency $f_2 + \Delta f_{sft}$ to the balanced detector 38.

When the lidar device 1 and the scatterer or the like are away from each other, if scattered light that is the scattered first laser beam is output from the optical circulator 35, the optical multiplexer 37 outputs interference light having an optical frequency $f_1 - \Delta f_{sft}$ to the balanced detector 38.

Furthermore, when the lidar device 1 and the scatterer or the like are away from each other, if scattered light that is the scattered second laser beam is output from the optical circulator 35, the optical multiplexer 37 outputs interference light having an optical frequency $f_2 - \Delta f_{sft}$ to the balanced detector 38.

When the lidar device 1 does not move and the gas and the scatterer do not move, the optical multiplexer 37 outputs the interference light having the optical frequency $f_1$ to the balanced detector 38 if the scattered light that is the scattered first laser beam is output from the optical circulator 35, and outputs the interference light having the optical frequency $f_2$ to the balanced detector 38 if the scattered light that is the scattered second laser beam is output from the optical circulator 35.

The balanced detector 38 acquires interference light from the optical multiplexer 37 and converts the interference light into an electric signal.

The balanced detector 38 outputs the electric signal to the frequency discriminator 39.

When the frequency discriminator 39 acquires an electric signal related to the interference light having the optical frequency $f_2 + \Delta f_{sft}$, an electric signal related to the interference light having the optical frequency $f_2 - \Delta f_{sft}$, or an electric signal related to the interference light having the optical frequency $f_2$ from the balanced detector 38, the frequency discriminator outputs the acquired electric signal to the frequency mixer 40.

When the frequency discriminator 39 acquires an electric signal related to the interference light having the optical frequency $f_1 + \Delta f_{sft}$, an electric signal related to the interference light having the optical frequency $f_1 - \Delta f_{sft}$, or an electric signal related to the interference light having the optical frequency $f_1$ from the balanced detector 38, the frequency discriminator outputs the acquired electric signal to the signal multiplexer 41.

The frequency mixer 40 receives a frequency $\Delta f$ ($= f_2 - f_1$) to be added output from the second frequency oscillator 22, and acquires an electric signal from the frequency discriminator 39.

When the frequency of the electric signal output from the frequency discriminator 39 is $f_2 + \Delta f_{sft}$, the frequency

mixer 40 down-converts the frequency of the electric signal to $f_1 + \Delta f_{sft}$ using the frequency $\Delta f$ to be added.

When the frequency of the electric signal output from the frequency discriminator 39 is $f_2 - \Delta f_{sft}$, the frequency mixer 40 down-converts the frequency of the electric signal to $f_1 - \Delta f_{sft}$ using the frequency $\Delta f$ to be added.

The frequency mixer 40 outputs the down-converted electric signal to the signal multiplexer 41.

Upon receiving the electric signal from the frequency discriminator 39, the signal multiplexer 41 outputs the electric signal to the A/D converter 42.

That is, when acquiring the electric signal having the frequency $f_1 + \Delta f_{sft}$, the electric signal having the frequency $f_1 - \Delta f_{sft}$, or the electric signal having the frequency $f_1$ from the frequency discriminator 39, the signal multiplexer 41 outputs the electric signal having the frequency $f_1 + \Delta f_{sft}$, the electric signal having the frequency $f_1 - \Delta f_{sft}$, or the electric signal having the frequency $f_1$ to the A/D converter 42.

Upon receiving the electric signal from the frequency mixer 40, the signal multiplexer 41 outputs the electric signal to the A/D converter 42.

That is, when acquiring the electric signal having the frequency $f_1 + \Delta f_{sft}$, the electric signal having the frequency $f_1 - \Delta f_{sft}$, or the electric signal having the frequency $f_1$ from the frequency mixer 40, the signal multiplexer 41 outputs the electric signal having the frequency $f_1 + \Delta f_{sft}$, the electric signal having the frequency $f_1 - \Delta f_{sft}$, or the electric signal having the frequency $f_1$ to the A/D converter 42.

The A/D converter 42 acquires the electric signal from the signal multiplexer 41.

The A/D converter 42 converts the analog electric signal into a digital signal, and outputs the digital signal to the frequency analysis unit 51 of the density calculating unit 16.

The frequency analysis unit 51 of the density calculating unit 16 acquires the digital signal from the A/D converter 42.

That is, when the optical multiplexer 37 has detected the interference light between the scattered light which is the scattered first laser beam and the reference light, the frequency analysis unit 51 acquires the digital signal related to the electric signal output from the frequency discriminator 39 from the A/D converter 42.

When the optical multiplexer 37 has detected the interference light between the scattered light which is the scattered second laser beam and the reference light, the frequency analysis unit 51 acquires the digital signal related to the electric signal output from the frequency mixer 40 from the A/D converter 42.

The frequency analysis unit 51 converts the digital signal into a signal in the frequency domain by performing fast Fourier transform on the acquired digital signal for each predetermined time gate (step ST1 in FIG. 5).

The frequency analysis unit 51 outputs the signal in the frequency domain for a distance range corresponding to each time gate to the spectrum intensity calculating unit 52.

The spectrum intensity calculating unit 52 acquires the signal in the frequency domain for each distance range from the frequency analysis unit 51.

When the lidar device 1 and the scatterer or the like are close to each other, if the optical multiplexer 37 detects the interference light having the optical frequency $f_1 + \Delta f_{sft}$, the spectrum intensity calculating unit 52 detects the reception spectrum at the frequency $f_1 + \Delta f_{sft}$ from the signal in the frequency domain for each distance range (step ST2 in FIG. 5). The reception spectrum at the frequency $f_1 + \Delta f_{sft}$ detected by the spectrum intensity calculating unit 52 is a spectrum obtained by converting a digital signal related to an electric signal having the frequency $f_1 + \Delta f_{sft}$ output from the frequency discriminator 39 into a signal in the frequency domain when the first laser beam is radiated.

Furthermore, when the lidar device 1 and the scatterer or the like are close to each other, if the optical multiplexer 37 detects the interference light having the optical frequency $f_2 + \Delta f_{sft}$, the spectrum intensity calculating unit 52 detects the reception spectrum at the frequency $f_1 + \Delta f_{sft}$ from the signal in the frequency domain for each distance range (step ST2 in FIG. 5). The reception spectrum at the frequency $f_1 + \Delta f_{sft}$ detected by the spectrum intensity calculating unit 52 is a spectrum obtained by converting the digital signal related to an electric signal having the frequency $f_1 + \Delta f_{sft}$ output from the frequency mixer 40 into a signal in the frequency domain when the second laser beam is radiated.

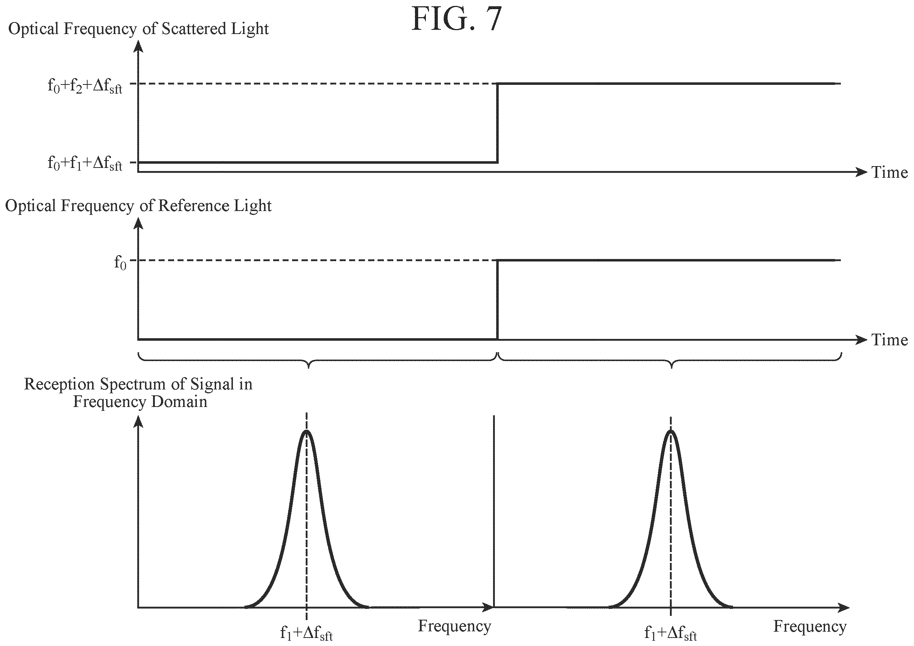

FIG. 7 is an explanatory diagram illustrating an optical frequency of scattered light, an optical frequency of reference light, and a reception spectrum in a signal in the frequency domain.

FIG. 7 illustrates the optical frequencies $f_0 + f_1 + \Delta f_{sft}$ and $f_0 + f_2 + \Delta f_{sft}$ of the scattered light when the lidar device 1 and the scatterer or the like are close to each other due to the movement of the lidar device 1 or the movement of the gas and the scatterer.

The optical frequency of the reference light is $f_0$. The frequency when the reception spectrum of the signal in the frequency domain is at the peak is $f_1 + \Delta f_{sft}$ even when the optical circulator 35 receives scattered light that is the scattered first laser beam or receives scattered light that is the scattered second laser beam.

When the lidar device 1 and the scatterer or the like are away from each other, if the optical multiplexer 37 detects the interference light having the optical frequency $f_1 - \Delta f_{sft}$, the spectrum intensity calculating unit 52 detects the reception spectrum at the frequency $f_1 - \Delta f_{sft}$ for each distance range (step ST2 in FIG. 5). The reception spectrum at the frequency $f_1 - \Delta f_{sft}$ detected by the spectrum intensity calculating unit 52 is a spectrum obtained by converting the digital signal related to the electric signal having the frequency $f_1 - \Delta f_{sft}$ output from the frequency discriminator 39 into a signal in the frequency domain when the first laser beam is radiated.

In addition, when the lidar device 1 and the scatterer or the like are away from each other, if the optical multiplexer 37 detects the interference light having the optical frequency $f_2 - \Delta f_{sft}$, the spectrum intensity calculating unit 52 detects the reception spectrum at the frequency $f_1 - \Delta f_{sft}$ for each distance range (step ST2 in FIG. 5). The reception spectrum at the frequency $f_1 - \Delta f_{sft}$ detected by the spectrum intensity calculating unit 52 is a spectrum obtained by converting the digital signal related to the electric signal having the frequency $f_1 - \Delta f_{sft}$ output from the frequency mixer 40 into a signal in the frequency domain when the second laser beam is radiated.

When the lidar device 1 does not move and the gas and the scatterer do not move, if the optical multiplexer 37 detects the interference light having the optical frequency $f_1$, the spectrum intensity calculating unit 52 detects the reception spectrum at the frequency $f_1$ for each distance range (step ST2 in FIG. 5). The reception spectrum at the frequency $f_1$ detected by the spectrum intensity calculating unit 52 is a spectrum obtained by converting the digital signal related to the electric signal having the frequency $f_1$ output from the frequency discriminator 39 into a signal in the frequency domain when the first laser beam is radiated.

In addition, when the lidar device 1 does not move and the gas and the scatterer do not move, if the optical multiplexer 37 detects the interference light having the optical frequency $f_2$, the spectrum intensity calculating unit 52 detects the reception spectrum at the frequency $f_1$ for each distance range (step ST2 in FIG. 5). The reception spectrum at the frequency $f_1$ detected by the spectrum intensity calculating unit 52 is a spectrum obtained by converting the digital signal related to the electric signal having the frequency $f_1$ output from the frequency mixer 40 into a signal in the frequency domain when the second laser beam is radiated.

If the lidar device 1 and the scatterer or the like are close to each other, the spectrum intensity calculating unit 52 calculates the intensity of the reception spectrum at the frequency $f_1 + \Delta f_{sft}$ for each distance range (step ST3 in FIG. 5).

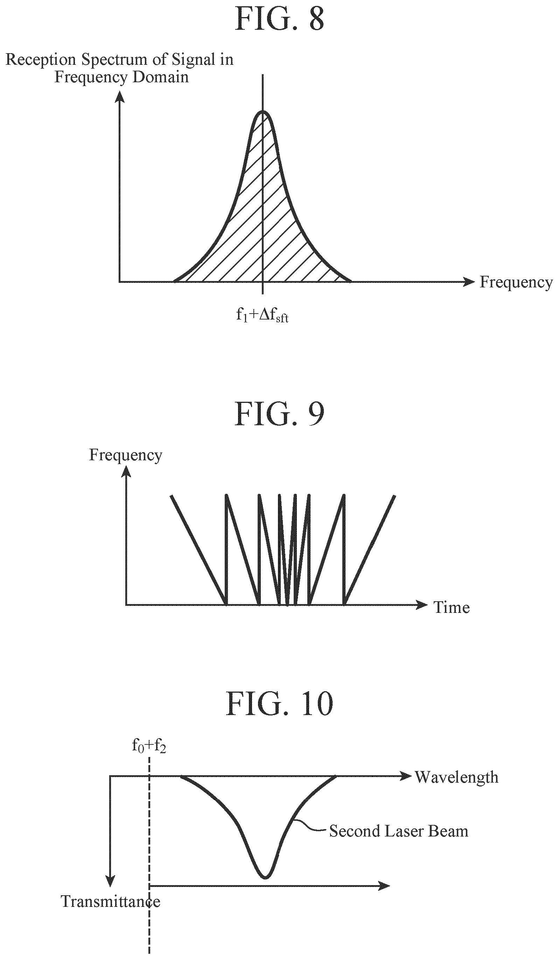

The processing of calculating the intensity of the reception spectrum is disclosed in Non-Patent Literature 2 below, for example. Therefore, although the details of the processing of calculating the intensity of the reception spectrum are omitted, the intensity of the reception spectrum can be calculated from the area of the reception spectrum at the frequency $f_1 + \Delta f_{sft}$ as illustrated in FIG. 8.

FIG. 8 is an explanatory diagram illustrating an area of a reception spectrum.

In FIG. 8, a hatched region indicates the area of the reception spectrum.

[Non-Patent Literature 2]

M. Imaki et al., "Wavelength selection and measurement error theoretical analysis based on ground-based coherent differential absorption lidar using 1.53 μm wavelength for simultaneous vertical profiling of water vapor density and wind speed", Applied optics vol. 59 No. 8 (2020), 2238-2247.

If the lidar device 1 and the scatterer or the like are away from each other, the spectrum intensity calculating unit 52 calculates the intensity of the reception spectrum at the frequency $f_1 - \Delta f_{sft}$ for each distance range (step ST3 in FIG. 5).

Also in this case, the intensity of the reception spectrum can be calculated from the area of the reception spectrum at the frequency $f_1 - \Delta f_{sft}$.

If the lidar device 1 does not move and the scatterer or the like does not move, the spectrum intensity calculating unit 52 calculates the intensity of the reception spectrum at the frequency $f_1$ for each distance range (step ST3 in FIG. 5).

Also in this case, the intensity of the reception spectrum can be calculated from the area of the reception spectrum at the frequency $f_1$.

The spectrum intensity calculating unit 52 outputs the intensity of the reception spectrum for each distance range to the density calculation processing unit 53.

Hereinafter, each of the intensity of the reception spectrum at the frequency $f_1 + \Delta f_{sft}$ when the optical multiplexer 37 detects the interference light having the optical frequency $f_1 + \Delta f_{sft}$, the intensity of the reception spectrum at the frequency $f_1 - \Delta f_{sft}$ when the optical multiplexer detects the interference light having the optical frequency $f_1 - \Delta f_{sft}$, and the intensity of the reception spectrum at the frequency $f_1$ when the optical multiplexer detects the interference light having the optical frequency $f_1$ is referred to as "reception intensity of ON wavelength". The "ON wavelength" means a wavelength included in an absorption wavelength band of a gas.

Each of the intensity of the reception spectrum at the frequency $f_1 + \Delta f_{sft}$ when the optical multiplexer 37 detects the interference light having the optical frequency $f_2 + \Delta f_{sft}$, the intensity of the reception spectrum at the frequency $f_1 - \Delta f_{sft}$ when the optical multiplexer detects the interference light having the optical frequency $f_2 - \Delta f_{sft}$, and the intensity of the reception spectrum at the frequency $f_1$ when the optical multiplexer detects the interference light having the optical frequency $f_2$ is referred to as "reception intensity of OFF wavelength". The "OFF wavelength" means a wavelength not included in the absorption wavelength band of the gas.

The density calculation processing unit 53 acquires the intensity of the reception spectrum for each distance range from the spectrum intensity calculating unit 52.

The density calculation processing unit 53 calculates the density of the gas from the intensity of the reception spectrum for each distance range (step ST4 in FIG. 5).

That is, the density calculation processing unit 53 calculates the density $n(z)$ of the gas by substituting the reception intensity of the ON wavelength and the reception intensity of the OFF wavelength related to the scatterer present at the position of the distance z from the lidar device 1 and the reception intensity of the ON wavelength and the reception intensity of the OFF wavelength related to the scatterer present at the position of the distance z + Δz from the lidar device 1 into the following Formula (2).

$$n(z) = \frac{1}{2 \cdot \Delta z \cdot (k_{ON} - k_{OFF})} \cdot \ln\left[\frac{P_{r\_OFF}(z + \Delta z)}{P_{r\_ON}(z + \Delta z)} \cdot \frac{P_{r\_ON}(z)}{P_{r\_OFF}(z)}\right] \qquad (2)$$

In Formula (2), $P_{r\_ON}(z)$ is the reception intensity of the ON wavelength related to the scatterer present at the position of the distance z from the lidar device 1, and $P_{r\_OFF}(z)$ is the reception intensity of the OFF wavelength of the scatterer present at the position of the distance z from the lidar device 1.

$P_{r\_ON}(z + \Delta z)$ is the reception intensity of the ON wavelength related to the scatterer present at the position of the distance z + Δz from the lidar device 1, and $P_{r\_OFF}(z + \Delta z)$ is the reception intensity of the OFF wavelength related to the scatterer present at the position of the distance z + Δz from the lidar device 1. Δz is a distance between two points in the observation target gas.

$k_{ON}$ is an absorption coefficient of the ON wavelength and is an already-valued coefficient. $k_{OFF}$ is an absorption coefficient of the OFF wavelength, and is an already-valued coefficient. ln is a mathematical symbol indicating a logarithmic function with a base of e.

It is assumed that Δz is, for example, a distance between a distance range (1) and a distance range (3).

When the lidar device 1 and the scatterer or the like are close to each other, the intensity of the reception spectrum at the frequency $f_1 + \Delta f_{sft}$ in the distance range (1) and the intensity of the reception spectrum at the frequency $f_1 + \Delta f_{sft}$ in the distance range (3) when the optical multiplexer 37 detects the interference light having the optical frequency $f_1 + \Delta f_{sft}$ are used as the reception intensity of the ON wavelength. As the reception intensity of the OFF wavelength, the intensity of the reception spectrum at the frequency $f_1 + \Delta f_{sft}$ in the distance range (1) and the intensity of the reception spectrum at the frequency $f_1 + \Delta f_{sft}$ in the distance range (3) when the optical multiplexer 37 detects the interference light having the optical frequency $f_2 + \Delta f_{sft}$ are used.

When the lidar device 1 and the scatterer or the like are away from each other, the intensity of the reception spectrum at the frequency $f_1 - \Delta f_{sft}$ in the distance range (1) and the intensity of the reception spectrum at the frequency $f_1 - \Delta f_{sft}$ in the distance range (3) when the optical multiplexer 37 detects the interference light having the optical frequency $f_1 - \Delta f_{sft}$ are used as the reception intensity of the ON wavelength. As the reception intensity of the OFF wavelength, the intensity of the reception spectrum at the frequency $f_1 - \Delta f_{sft}$ in the distance range (1) and the intensity of the reception spectrum at the frequency $f_1 - \Delta f_{sft}$ in the distance range (3) when the optical multiplexer 37 detects the interference light having the optical frequency $f_2 - \Delta f_{sft}$ are used.

When the lidar device 1 does not move and the scatterer or the like does not move, the intensity of the reception spectrum at the frequency $f_1$ in the distance range (1) and the intensity of the reception spectrum at the frequency $f_1$ in the distance range (3) when the optical multiplexer 37 detects the interference light having the optical frequency $f_1$ are used as the reception intensity of the ON wavelength. As the reception intensity of the OFF wavelength, the intensity of the reception spectrum at the frequency $f_1$ in the distance range (1) and the intensity of the reception spectrum at the frequency $f_1$ in the distance range (3) when the optical multiplexer 37 detects the interference light having the optical frequency $f_2$ are used.

In the first embodiment described above, the lidar device 1 is configured to radiate the first laser beam having the wavelength included in the absorption wavelength band of the observation target gas and the second laser beam having a lower absorption rate by the gas than that of the first laser beam to the space where the gas is present. The lidar device 1 includes a light source 11 to output a laser beam, a frequency output unit 12 to output a first frequency or a second frequency different from the first frequency, a reference light output unit 13 to output the laser beam output from the light source 11 as reference light, an optical transmission unit 14 to generate a first laser beam by modulating an optical frequency of the laser beam output from the light source 11 by the first frequency, generate a second laser beam by modulating an optical frequency of the laser beam output from the light source 11 by the second frequency, and radiate each of the first laser beam and the second laser beam into space, and an optical receiving unit 15 to receive, as scattered light, the first laser beam radiated by the optical transmission unit 14 and then scattered by a scatterer floating in the space or the second laser beam radiated by the optical transmission unit and then scattered by the scatterer, and detect interference light between the scattered light and the reference light. Therefore, the lidar device 1 can calculate the density of the gas without including two light sources.

In the lidar device 1 illustrated in FIG. 1, the optical transmission unit 14 includes an optical amplifier 34. However, this is merely an example, and for example, in a case where it is not necessary to radiate a high-intensity laser beam because the distance z + Δz is short, the optical transmission unit 14 may not include the optical amplifier 34.

In the lidar device 1 illustrated in FIG. 1, the optical transmission unit 14 includes a pulse modulator 33. However, this is merely an example, and for example, the optical transmission unit 14 may radiate a laser beam that is continuous light without including the pulse modulator 33.

In the lidar device 1 illustrated in FIG. 1, the second frequency oscillator 22 outputs the frequency $\Delta f$ to be added to each of the frequency mixer 23 and the frequency mixer 40. As the second frequency oscillator 22, an oscillator capable of changing the frequency $\Delta f$ to be added may be used, and the second frequency oscillator 22 may change the frequency $\Delta f$ to be added.

FIG. 9 is an explanatory diagram illustrating an output waveform of the second frequency oscillator 22 capable of changing the frequency $\Delta f$ to be added.

The horizontal axis in FIG. 9 represents time, and the vertical axis in FIG. 9 represents frequency. FIG. 9 illustrates a state in which the second frequency oscillator 22 changes the frequency $\Delta f$ to be added with the lapse of time.

In a case where the frequency modulator 32 is implemented by, for example, a modulation element using a lithium niobate crystal, wavelength sweep of the second wavelength of the second laser beam can be performed as illustrated in FIG. 10 by changing the slope of the serrodyne modulation or the frequency modulation amount according to the change of the frequency $\Delta f$ to be added.

FIG. 10 is an explanatory diagram illustrating a wavelength sweep of the second laser beam.

By performing the wavelength sweep of the second wavelength of the second laser beam, the lidar device 1 illustrated in FIG. 1 can have a function of a wavelength sweep spectrometer as disclosed in Non-Patent Literature 3 below. In FIG. 10, an arrow indicates that the optical frequency $f_0 + f_2$ of the second laser beam is increased by performing the wavelength sweep.

[Non-Patent Literature 3]
M. P. Arroyo and R. K. Hanson, "Absorption measurements of water-vapor concentration, temperature, and line-shape parameters using a tunable InGaAsP diode laser", Appl. Opt. 32, 6104-6116 (1993)

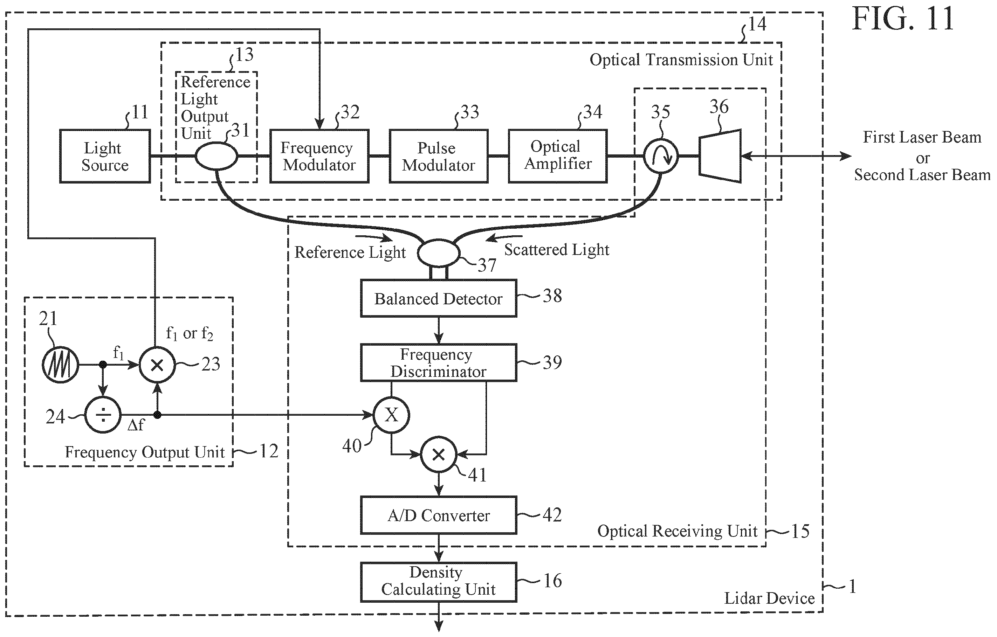

In the lidar device 1 illustrated in FIG. 1, the frequency output unit 12 includes a first frequency oscillator 21, a second frequency oscillator 22, and a frequency mixer 23. However, this is merely an example, and as illustrated in Fig. 11, the frequency output unit 12 may include a frequency conversion unit 24 instead of the second frequency oscillator 22.

FIG. 11 is a configuration diagram illustrating another lidar device 1 according to the first embodiment.

The frequency conversion unit 24 is implemented by, for example, a frequency divider.

The frequency conversion unit 24 converts the first frequency $f_1$ oscillated by the first frequency oscillator 21 into a frequency $\Delta f$ to be added, for example, by dividing the first frequency $f_1$, and outputs the frequency $\Delta f$ to be added to each of the frequency mixer 23 and the frequency mixer 40.

Second Embodiment.

In the second embodiment, the lidar device 1 in which a frequency output unit 81 outputs a first frequency $f_1$ and a second frequency $f_2$ or a third frequency $f_3$ different from each of the first frequency $f_1$ and the second frequency $f_2$ to an optical transmission unit 82 will be described.

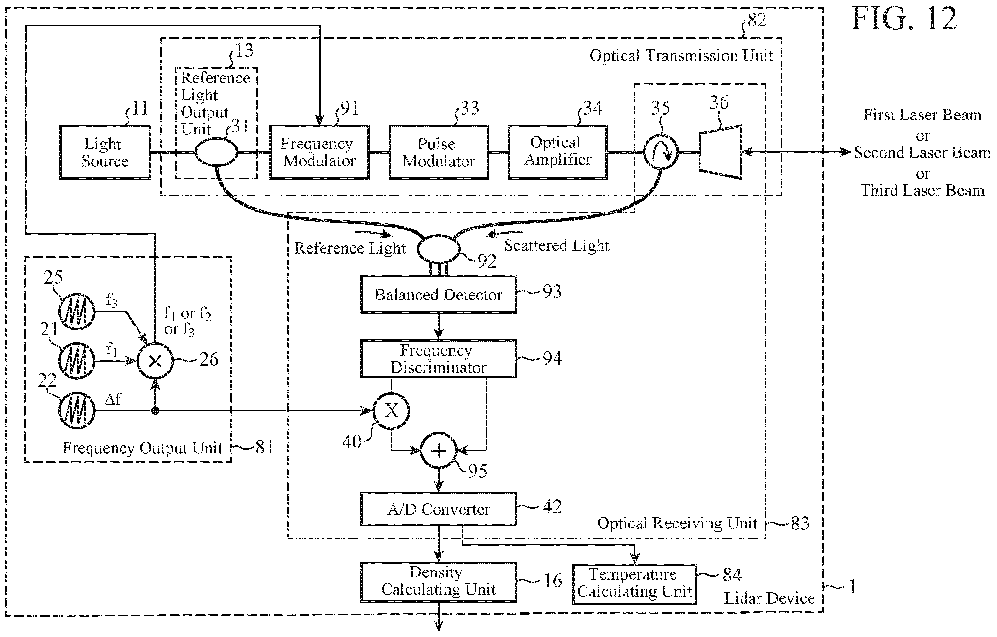

FIG. 12 is a configuration diagram illustrating a lidar device 1 according to the second embodiment. In FIG. 12, the same reference numerals as those in FIG. 1 denote the same or corresponding parts, and thus description thereof is omitted.

The lidar device 1 illustrated in FIG. 12 includes the frequency output unit 81, a reference light output unit 13, the optical transmission unit 82, an optical receiving unit 83, a density calculating unit 16, and a temperature calculating unit 84.

The frequency output unit 81 includes a first frequency oscillator 21, a second frequency oscillator 22, a third frequency oscillator 25, and a frequency mixer 26.

The frequency output unit 81 outputs the first frequency $f_1$, the second frequency $f_2$, or the third frequency $f_3$ to the optical transmission unit 82.

The third frequency oscillator 25 oscillates a third frequency $f_3$ and outputs the third frequency $f_3$ to the frequency mixer 26.

The frequency mixer 26 is implemented by, for example, a mixer.

When the frequency $\Delta f$ to be added is not oscillated by the second frequency oscillator 22, the frequency mixer 26 outputs the first frequency $f_1$ oscillated by the first frequency oscillator 21 or the third frequency $f_3$ oscillated by the third frequency oscillator 25 to a frequency modulator 91 to be described later.

When the frequency $\Delta f$ to be added is oscillated by the second frequency oscillator 22, the frequency mixer 26 outputs the second frequency $f_2$, which is the frequency $f_1 + \Delta f$ of the sum of the first frequency $f_1$ oscillated by the first frequency oscillator 21 and the frequency $\Delta f$ to be added, to the frequency modulator 91.

The optical transmission unit 82 includes an optical distributor 31, a frequency modulator 91, a pulse modulator 33, an optical amplifier 34, an optical circulator 35, and an optical antenna 36.

When the first frequency $f_1$ is output from the frequency output unit 81, the optical transmission unit 82 generates the first laser beam by modulating the optical frequency $f_0$ of the laser beam output from the light source 11 by the first frequency $f_1$, and radiates the first laser beam into space.

When the second frequency $f_2$ is output from the frequency output unit 81, the optical transmission unit 82 generates the second laser beam by modulating the optical frequency $f_0$ of the laser beam output from the light source 11 by the second frequency $f_2$, and radiates the second laser beam into space.

When the third frequency $f_3$ is output from the frequency output unit 81, the optical transmission unit 82 generates the third laser beam by modulating the optical frequency $f_0$ of the laser beam output from the light source 11 by the third frequency $f_3$, and radiates the third laser beam into space. The third laser beam is a laser beam having a third wavelength included in the absorption wavelength band of the observation target gas, and is a laser beam having an absorption rate by the gas different from that of the first laser beam.

The frequency modulator 91 is implemented by, for example, a modulation element using an acousto-optic element or a modulation element using a lithium niobate crystal.

When the first frequency $f_1$ is output from the frequency mixer 26, the frequency modulator 91 modulates the optical frequency $f_0$ of the laser beam output from the optical distributor 31 by the first frequency $f_1$, and outputs the frequency-modulated laser beam to the pulse modulator 33 as the first laser beam. The optical frequency of the first laser beam is $f_0 + f_1$.

When the second frequency $f_2$ is output from the frequency mixer 26, the frequency modulator 91 modulates the optical frequency $f_0$ of the laser beam output from the optical distributor 31 by the second frequency $f_2$, and outputs the laser beam modulated by the second frequency $f_2$ to the pulse modulator 33 as the second laser beam. The optical frequency of the second laser beam is $f_0 + f_2$.

When the third frequency $f_3$ is output from the frequency mixer 26, the frequency modulator 91 modulates the optical frequency $f_0$ of the laser beam output from the optical distributor 31 by the third frequency $f_3$, and outputs the laser beam modulated by the third frequency $f_3$ to the pulse modulator 33 as the third laser beam. The optical frequency of the third laser beam is $f_0 + f_3$.

The optical receiving unit 83 includes an optical circulator 35, an optical antenna 36, an optical multiplexer 92, a balanced detector 93, a frequency discriminator 94, a frequency mixer 40, a signal multiplexer 95, and an A/D converter 96.

The optical receiving unit 83 receives, as scattered light, the first laser beam radiated by the optical transmission unit 82 and then scattered by the scatterer floating in the space, the second laser beam radiated by the optical transmission unit and then scattered by the scatterer, or the third laser beam radiated by the optical transmission unit and then scattered by the scatterer, and detects interference light between the scattered light and the reference light.

The optical multiplexer 92 is implemented by, for example, a beam splitter or a fiber type coupler.

The optical multiplexer 92 detects interference light between scattered light output from the optical circulator 35 and reference light output from the optical distributor 31.

The optical multiplexer 92 outputs the interference light to the balanced detector 93.

For example, in a case where the lidar device 1 and the scatterer or the like are close to each other due to the movement of the lidar device 1 or the movement of the gas and the scatterer, the scattered light is subjected to the Doppler shift, and the optical frequencies $f_0 + f_1$, $f_0 + f_2$, and $f_0 + f_3$ of the scattered light are shifted. That is, when the lidar device 1 and the scatterer or the like are close to each other, the optical frequencies $f_0 + f_1$, $f_0 + f_2$, and $f_0 + f_3$ of the scattered light are increased by, for example, the frequency $\Delta f_{sft}$. If the lidar device 1 and the scatterer or the like are away from each other, the optical frequencies $f_0 + f_1$, $f_0 + f_2$, and $f_0 + f_3$ of the scattered light are lowered by, for example, the frequency $\Delta f_{sft}$.

Therefore, when the lidar device 1 and the scatterer or the like are close to each other, the optical multiplexer 92 outputs the interference light having the optical frequency $f_1 + \Delta f_{sft}$ to the balanced detector 93 if the scattered light which is the scattered first laser beam is output from the optical circulator 35, and outputs the interference light having the optical frequency $f_2 + \Delta f_{sft}$ to the balanced detector 93 if the scattered light which is the scattered second laser beam is output from the optical circulator 35. Furthermore, when the lidar device 1 and the scatterer or the like are close to each other, if scattered light that is the scattered third laser beam is output from the optical circulator 35, the optical multiplexer 92 outputs interference light having the optical frequency $f_3 + \Delta f_{sft}$ to the balanced detector 93.

When the lidar device 1 and the scatterer or the like are away from each other, the optical multiplexer 92 outputs the interference light having the optical frequency $f_1 - \Delta f_{sft}$ to the balanced detector 93 if the scattered light which is the scattered first laser beam is output from the optical circulator 35, and outputs the interference light having the optical frequency $f_2 - \Delta f_{sft}$ to the balanced detector 93 if the scattered light which is the scattered second laser beam is output from the optical circulator 35. Furthermore, when the lidar device 1 and the scatterer or the like are away from each other, if scattered light that is the scattered third laser beam is output from the optical circulator 35, the optical multiplexer 92 outputs interference light having the optical frequency $f_3 - \Delta f_{sft}$ to the balanced detector 93.

In addition, when the lidar device 1 does not move and the scatterer or the like does not move, the optical multiplexer 92 outputs the interference light having the optical frequency $f_1$ to the balanced detector 93 if the scattered light that is the scattered first laser beam is output from the optical circulator 35, and outputs the interference light having the optical frequency $f_2$ to the balanced detector 93 if the scattered light that is the scattered second laser beam is output from the optical circulator 35. Furthermore, when the lidar device 1 does not move and the scatterer or the like does not move, if the scattered light that is the scattered third laser beam is output from the optical circulator 35, the optical multiplexer 92 outputs the interference light having the optical frequency $f_3$ to the balanced detector 93.

The balanced detector 93 is implemented by, for example, a balanced receiver that reduces in-phase noise by using two photodiodes.

The balanced detector 93 converts the interference light output from the optical multiplexer 92 into an electric signal.

The balanced detector 93 outputs the electric signal to the frequency discriminator 94.

When the electric signal related to the interference light having the optical frequency $f_2 + \Delta f_{sft}$, the electric signal related to the interference light having the optical frequency $f_2 - \Delta f_{sft}$, or the electric signal related to the interference light having the optical frequency $f_2$ is output from the balanced detector 93, the frequency discriminator 94 outputs these electric signals to the frequency mixer 40.

When the electric signal related to the interference light having the optical frequency $f_1 + \Delta f_{sft}$, the electric signal related to the interference light having the optical frequency $f_1 - \Delta f_{sft}$, or the electric signal related to the interference light having the optical frequency $f_1$ is output from the balanced detector 93, the frequency discriminator 94 outputs these electric signals to the signal multiplexer 95.

In addition, when the electric signal related to the interference light having the optical frequency $f_3 + \Delta f_{sft}$, the electric signal related to the interference light having the optical frequency $f_3 - \Delta f_{sft}$, or the electric signal related to the interference light having the optical frequency $f_3$ is output from the balanced detector 93, the frequency discriminator 94 outputs these electric signals to the signal multiplexer 95.

Upon receiving the electric signal from the frequency discriminator 94, the signal multiplexer 95 outputs the electric signal to the A/D converter 96.

Upon receiving the electric signal from the frequency mixer 40, the signal multiplexer 95 outputs the electric signal to the A/D converter 96.

The A/D converter 96 converts the analog electric signal output from the signal multiplexer 95 into a digital signal.

The A/D converter 96 outputs the digital signal to each of the density calculating unit 16 and the temperature calculating unit 84.

The temperature calculating unit 84 analyzes the optical frequency of the interference light detected by the optical receiving unit 83, and calculates the temperature of the gas from the analysis result of the optical frequency.

The lidar device 1 illustrated in FIG. 12 includes the temperature calculating unit 84. However, this is merely an example, and the lidar device 1 may not include the temperature calculating unit 84, and a computer or the like different from the lidar device 1 may implement the temperature calculating unit 84. In this case, the A/D converter 96 outputs the digital signal to a computer or the like different from the lidar device 1.

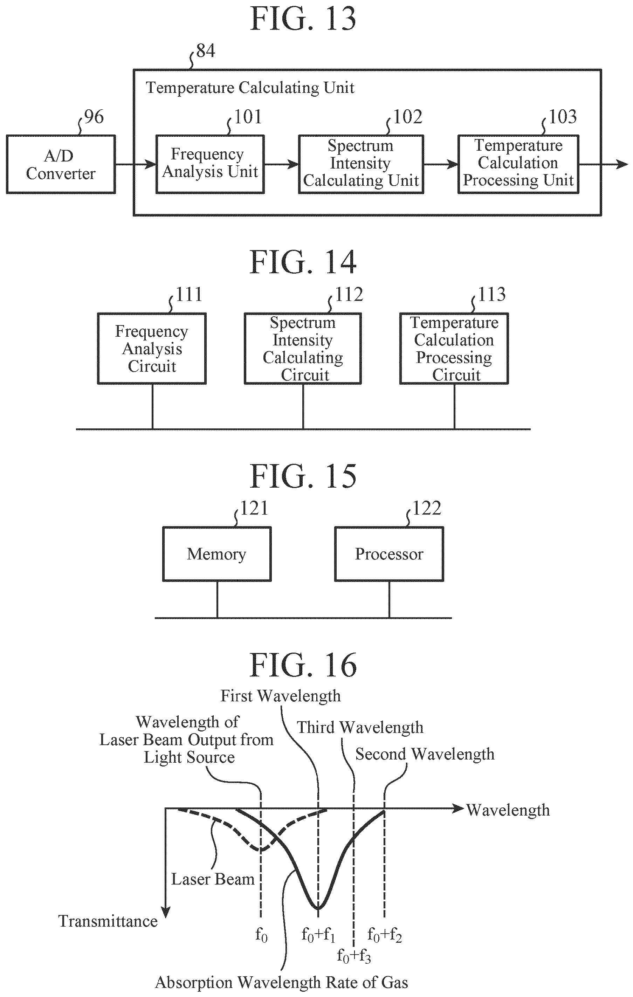

FIG. 13 is a configuration diagram illustrating the temperature calculating unit 84 of the lidar device 1 according to the second embodiment.

FIG. 14 is a hardware configuration diagram illustrating hardware of the temperature calculating unit 84 of the lidar device 1 according to the second embodiment.

The temperature calculating unit 84 illustrated in FIG. 13 includes a frequency analysis unit 101, a spectrum intensity calculating unit 102, and a temperature calculation processing unit 103.

The frequency analysis unit 101 is implemented by, for example, a frequency analysis circuit 111 illustrated in FIG. 14.

The frequency analysis unit 101 converts the digital signal output from the A/D converter 96 into a signal in a frequency domain by performing fast Fourier transform on the digital signal for each predetermined time gate.

The frequency analysis unit 101 outputs the signal in the frequency domain for a plurality of distance ranges to the spectrum intensity calculating unit 102.

The spectrum intensity calculating unit 102 is implemented by, for example, a spectrum intensity calculating circuit 112 illustrated in FIG. 14.

The spectrum intensity calculating unit 102 calculates the intensity of the reception spectrum for each distance range from the signal in the frequency domain for each distance range output from the frequency analysis unit 101.

The spectrum intensity calculating unit 102 calculates the intensity of the reception spectrum for each distance range from the signal in the frequency domain for each distance range output from the frequency analysis unit 101.

That is, when the interference light having the optical frequency $f_1 + \Delta f_{sft}$ or the interference light having the optical frequency $f_2 + \Delta f_{sft}$ is detected by the optical multiplexer 92, the spectrum intensity calculating unit 102 calculates the intensity of the reception spectrum at the frequency $f_1 + \Delta f_{sft}$ for each distance range.

When the interference light having the optical frequency $f_3 + \Delta f_{sft}$ is detected by the optical multiplexer 92, the spectrum intensity calculating unit 102 calculates the intensity of the reception spectrum at the frequency $f_3 + \Delta f_{sft}$ for each distance range.

When the interference light having the optical frequency $f_1 - \Delta f_{sft}$ or the interference light having the optical

frequency $f_2 - \Delta f_{sft}$ is detected by the optical multiplexer 92, the spectrum intensity calculating unit 102 calculates the intensity of the reception spectrum at the frequency $f_1 - \Delta f_{sft}$ for each distance range.

When the interference light having the optical frequency $f_3 - \Delta f_{sft}$ is detected by the optical multiplexer 92, the spectrum intensity calculating unit 102 calculates the intensity of the reception spectrum at the frequency $f_3 - \Delta f_{sft}$ for each distance range.

When the interference light having the optical frequency $f_1$ or the interference light having the optical frequency $f_2$ is detected by the optical multiplexer 92, the spectrum intensity calculating unit 102 calculates the intensity of the reception spectrum at the frequency $f_1$ for each distance range.

When the interference light having the optical frequency $f_3$ is detected by the optical multiplexer 92, the spectrum intensity calculating unit 102 calculates the intensity of the reception spectrum at the frequency $f_3$ for each distance range.

The spectrum intensity calculating unit 102 outputs the intensity of the reception spectrum for each distance range to the temperature calculation processing unit 103.

The temperature calculation processing unit 103 is implemented by, for example, a temperature calculation processing circuit 113 illustrated in FIG. 14.

The temperature calculation processing unit 103 calculates the temperature of the gas from the intensity of the reception spectrum for each distance range output from the spectrum intensity calculating unit 102.

In FIG. 13, it is assumed that each of the frequency analysis unit 101, the spectrum intensity calculating unit 102, and the temperature calculation processing unit 103, which are components of the temperature calculating unit 84, is implemented by dedicated hardware as illustrated in FIG. 14. That is, it is assumed that the temperature calculating unit 84 is implemented by the frequency analysis circuit 111, the spectrum intensity calculating circuit 112, and the temperature calculation processing circuit 113.

Each of the frequency analysis circuit 111, the spectrum intensity calculating circuit 112, and the temperature calculation processing circuit 113 corresponds to, for example, a single circuit, a composite circuit, a programmed processor, a parallel-programmed processor, ASIC, FPGA, or a combination thereof.

The components of the temperature calculating unit 84 are not limited to those implemented by dedicated hardware, and the temperature calculating unit 84 may be implemented by software, firmware, or a combination of software and firmware.

The software or firmware is stored in a memory of a computer as a program. The computer means hardware that executes a program, and corresponds to, for example, a CPU, a central processing unit, a processing unit, an arithmetic unit, a microprocessor, a microcomputer, a processor, or a DSP.

FIG. 15 is a hardware configuration diagram of a computer in a case where the temperature calculating unit 84 is implemented by software, firmware, or the like.

In a case where the temperature calculating unit 84 is implemented by software, firmware, or the like, a program for causing a computer to execute each processing procedure in the frequency analysis unit 101, the spectrum intensity calculating unit 102, and the temperature calculation processing unit 103 is stored in the memory 121. Then, a processor 122 of the computer executes the program stored in the memory 121.

In addition, FIG. 14 illustrates an example in which each of the components of the temperature calculating unit 84 is implemented by dedicated hardware, and FIG. 15 illustrates an example in which the temperature calculating unit 84 is implemented by software, firmware, or the like. However, this is merely an example, and some components in the temperature calculating unit 84 may be implemented by dedicated hardware, and the remaining components may be implemented by software, firmware, or the like.

Next, the operation of the lidar device 1 illustrated in FIG. 12 will be described.

As in the first embodiment, the light source 11 outputs the laser beam to the optical distributor 31.

The frequency output unit 81 outputs the first frequency $f_1$, the second frequency $f_2$, or the third frequency $f_3$ to the optical transmission unit 82. For example, the frequency output unit 81 sequentially outputs the first frequency $f_1$, the second frequency $f_2$, and the third frequency $f_3$ to the optical transmission unit 82.

Hereinafter, the frequency output operation by the frequency output unit 81 will be specifically described.

The first frequency oscillator 21 oscillates a first frequency $f_1$ and outputs the first frequency $f_1$ to the frequency mixer 26.

The second frequency oscillator 22 intermittently oscillates a frequency $\Delta f$ to be added, and intermittently outputs the frequency $\Delta f$ to be added to each of the frequency mixer 26 and the frequency mixer 40.

The third frequency oscillator 25 oscillates a third frequency $f_3$ and outputs the third frequency $f_3$ to the frequency mixer 26.

When the frequency $\Delta f$ to be added is not oscillated by the second frequency oscillator 22, the frequency mixer 26 outputs the first frequency $f_1$ oscillated by the first frequency oscillator 21 or the third frequency $f_3$ oscillated by the third frequency oscillator 25 to the frequency modulator 91.

When the frequency $\Delta f$ to be added is oscillated by the second frequency oscillator 22, the frequency mixer 26 outputs the frequency $f_1 + \Delta f$ of the sum of the first frequency $f_1$ and the frequency $\Delta f$ to be added to the frequency modulator 91 as the second frequency $f_2$.

Upon receiving the laser beam from the light source 11, the optical distributor 31 distributes the laser beam at a predetermined ratio, as in the first embodiment.

The optical distributor 31 outputs one of the distributed laser beams to the frequency modulator 91 and outputs the other of the distributed laser beams to the optical multiplexer 92.

The frequency modulator 91 acquires the laser beam from the optical distributor 31.

When acquiring the first frequency $f_1$ from the frequency mixer 26, the frequency modulator 91 modulates the optical frequency $f_0$ of the laser beam output from the optical distributor 31 by the first frequency $f_1$.

The frequency modulator 91 outputs the laser beam modulated by the first frequency $f_1$ to the pulse modulator 33 as a first laser beam. The optical frequency of the first laser beam is $f_0 + f_1$.

When acquiring the second frequency $f_2$ from the frequency mixer 26, the frequency modulator 91 modulates the optical frequency $f_0$ of the laser beam by the second frequency $f_2$.

The frequency modulator 91 outputs the laser beam modulated by the second frequency $f_2$ to the pulse modulator 33 as a second laser beam. The optical frequency of the second laser beam is $f_0 + f_2$.

When acquiring the third frequency $f_3$ from the frequency mixer 26, the frequency modulator 91 modulates the optical frequency $f_0$ of the laser beam by the third frequency $f_3$.

The frequency modulator 91 outputs the laser beam modulated by the third frequency $f_3$ to the pulse modulator 33 as a third laser beam. The optical frequency of the third laser beam is $f_0 + f_3$.

FIG. 16 is an explanatory diagram illustrating an absorption wavelength band of gas, a wavelength of a laser beam output from the light source 11, a first wavelength, a second wavelength, and a third wavelength.

In FIG. 16, the horizontal axis represents the wavelength, and the vertical axis represents the transmittance of the laser beam to the gas.

A broken line indicates a laser beam output from the light source 11, and a solid line indicates an absorption wavelength band of gas. The first wavelength is included in the absorption wavelength band of the gas, and the second wavelength is not included in the absorption wavelength band of the gas. In addition, the third wavelength is included in the absorption wavelength band of the gas and is different from the first wavelength. The transmittance of the second wavelength by the gas is larger than each of the transmittance of the first wavelength by the gas and the transmittance of the third wavelength by the gas. That is, the absorption rate of the second wavelength by the gas is smaller than each of the absorption rate of the first wavelength by the gas and the absorption rate of the third wavelength by the gas.

Since the operations of the pulse modulator 33, the optical amplifier 34, the optical circulator 35, and the optical antenna 36 are similar to those of the first embodiment, detailed description thereof will be omitted.

In the lidar device 1 illustrated in FIG. 12, the first laser beam, the second laser beam, or the third laser beam is radiated from the optical antenna 36 to the space.

The optical multiplexer 92 acquires scattered light from the optical circulator 35 and acquires reference light from the optical distributor 31.

The optical multiplexer 92 detects interference light between the scattered light and the reference light.

For example, in a case where the lidar device 1 moves or the gas and the scatterer move, the scattered light is subjected to the Doppler shift, and the optical frequencies $f_0 + f_1$, $f_0 + f_2$, and $f_0 + f_3$ of the scattered light are shifted. That is, when the lidar device 1 and the scatterer or the like are close to each other, the optical frequencies $f_0 + f_1$, $f_0 + f_2$, and $f_0 + f_3$ of the scattered light are increased by, for example, the frequency $\Delta f_{sft}$. Since the optical frequency of the reference light is $f_0$, the optical frequencies of the interference light are $f_1 + \Delta f_{sft}$ ($= f_0 + f_1 + \Delta f_{sft} - f_0$), $f_2 + \Delta f_{sft}$ ($= f_0 + f_2 + \Delta f_{sft} - f_0$), and $f_3 + \Delta f_{sft}$ ($= f_0 + f_3 + \Delta f_{sft} - f_0$).

If the lidar device 1 and the scatterer or the like are away from each other, the optical frequencies $f_0 + f_1$, $f_0 + f_2$, and $f_0 + f_3$ of the scattered light are lowered by, for example, the frequency $\Delta f_{sft}$. Since the optical frequency of the reference light is $f_0$, the optical frequencies of the interference light are $f_1 - \Delta f_{sft}$ ($= f_0 + f_1 - \Delta f_{sft} - f_0$), $f_2 - \Delta f_{sft}$ ($= f_0 + f_2 - \Delta f_{sft} - f_0$), and $f_3 - \Delta f_{sft}$ ($= f_0 + f_3 - \Delta f_{sft} - f_0$).

Therefore, when the lidar device 1 and the scatterer or the like are close to each other, if scattered light that is the scattered first laser beam is output from the optical circulator 35, the optical multiplexer 92 outputs interference light having an optical frequency $f_1 + \Delta f_{sft}$ to the balanced detector 93.

When the lidar device 1 and the scatterer or the like are close to each other, if the scattered light that is the scattered second laser beam is output from the optical circulator 35, the optical multiplexer 92 outputs the interference light having the optical frequency $f_2 + \Delta f_{sft}$ to the balanced detector 93.

Furthermore, when the lidar device 1 and the scatterer or the like are close to each other, if scattered light that is the scattered third laser beam is output from the optical circulator 35, the optical multiplexer 92 outputs interference light having the optical frequency $f_3 + \Delta f_{sft}$ to the balanced detector 93.

When the lidar device 1 and the scatterer or the like are away from each other, if the scattered light that is the scattered first laser beam is output from the optical circulator 35, the optical multiplexer 92 outputs the interference light having the optical frequency $f_1 - \Delta f_{sft}$ to the balanced detector 93.

When the lidar device 1 and the scatterer or the like are away from each other, if scattered light that is the scattered second laser beam is output from the optical circulator 35, the optical multiplexer 92 outputs interference light having the optical frequency $f_2 - \Delta f_{sft}$ to the balanced detector 93.

Furthermore, when the lidar device 1 and the scatterer or the like are away from each other, if scattered light that is the scattered third laser beam is output from the optical circulator 35, the optical multiplexer 92 outputs interference light having the optical frequency $f_3 - \Delta f_{sft}$ to the balanced detector 93.

The balanced detector 93 acquires interference light from the optical multiplexer 92 and converts the interference light into an electric signal.

The balanced detector 93 outputs the electric signal to the frequency discriminator 94.

When the frequency discriminator 94 acquires an electric signal related to the interference light having the optical frequency $f_2 + \Delta f_{sft}$, an electric signal related to the interference light having the optical frequency $f_2 - \Delta f_{sft}$, or an electric signal related to the interference light having the optical frequency $f_2$ from the balanced detector 93, the frequency discriminator outputs the acquired electric signal to the frequency mixer 40.

When the frequency discriminator 94 acquires the electric signal related to the interference light having the optical frequency $f_1 + \Delta f_{sft}$, the electric signal related to the interference light having the optical frequency $f_1 - \Delta f_{sft}$, or the electric signal related to the interference light having the optical frequency $f_1$ from the balanced detector 93, the frequency discriminator outputs the acquired electric signal to the signal multiplexer 95.

In addition, when the frequency discriminator 94 acquires an electric signal related to the interference light having the optical frequency $f_3 + \Delta f_{sft}$, an electric signal related to the interference light having the optical frequency $f_3 - \Delta f_{sft}$, or an electric signal related to the interference light having the optical frequency $f_3$ from the balanced detector 93, the frequency discriminator outputs the acquired electric signal to the signal multiplexer 95.

The frequency mixer 40 acquires the frequency $\Delta f (= f_2 - f_1)$ to be added from the second frequency oscillator 22, and acquires the electric signal from the frequency discriminator 94.

When the frequency of the electric signal output from the frequency discriminator 94 is $f_2 + \Delta f_{sft}$, the frequency mixer 40 down-converts the frequency of the electric signal to $f_1 + \Delta f_{sft}$ using the frequency $\Delta f$ to be added.

When the frequency of the electric signal output from the frequency discriminator 94 is $f_2 - \Delta f_{sft}$, the frequency mixer 40 down-converts the frequency of the electric signal to $f_1 - \Delta f_{sft}$ using the frequency $\Delta f$ to be added.

When the frequency of the electric signal output from the frequency discriminator 94 is $f_2$, the frequency mixer 40 down-converts the frequency of the electric signal to $f_1$ using the frequency $\Delta f$ to be added.

The frequency mixer 40 outputs the down-converted electric signal to the signal multiplexer 95.

Upon receiving the electric signal from the frequency discriminator 94, the signal multiplexer 95 outputs the electric signal to the A/D converter 96.

That is, when acquiring an electric signal having the frequency $f_1 + \Delta f_{sft}$, an electric signal having the frequency $f_1 - \Delta f_{sft}$, or an electric signal having the frequency $f_1$ from the frequency discriminator 94, the signal multiplexer 95 outputs the electric signal having the frequency $f_1 + \Delta f_{sft}$, the electric signal having the frequency $f_1 - \Delta f_{sft}$, or the electric signal having the frequency $f_1$ to the A/D converter 96.

In addition, when the signal multiplexer 95 acquires an electric signal having the frequency $f_3 + \Delta f_{sft}$, an electric signal having the frequency $f_3 - \Delta f_{sft}$, or an electric signal having the frequency $f_3$ from the frequency discriminator 94, the signal multiplexer 95 outputs the electric signal having the frequency $f_3 + \Delta f_{sft}$, the electric signal having the frequency $f_3 - \Delta f_{sft}$, or the electric signal having the frequency $f_3$ to the A/D converter 96.

Upon receiving the electric signal from the frequency mixer 40, the signal multiplexer 95 outputs the electric signal to the A/D converter 96.

That is, when acquiring an electric signal having the frequency $f_1 + \Delta f_{sft}$, an electric signal having the frequency $f_1 - \Delta f_{sft}$, or an electric signal having the frequency $f_1$ from the frequency mixer 40, the signal multiplexer 95 outputs the electric signal having the frequency $f_1 + \Delta f_{sft}$, the electric signal having the frequency $f_1 - \Delta f_{sft}$, or the electric signal having the frequency $f_1$ to the A/D converter 96.

The A/D converter 96 acquires the electric signal from the signal multiplexer 95.

The A/D converter 96 converts an analog electric signal into a digital signal, and outputs the digital signal to each of the density calculating unit 16 and the temperature calculating unit 84.

The density calculating unit 16 acquires the digital signal from the A/D converter 96.

Similarly to the first embodiment, the density calculating unit 16 converts the digital signal into a signal in the frequency domain by performing fast Fourier transform on the digital signal for each predetermined time gate, and analyzes the frequency of the interference light.

The density calculating unit 16 calculates the density of the gas from the analysis result of the frequency.

That is, in the lidar device 1 illustrated in FIG. 12, when the lidar device 1 and the scatterer or the like are close to each other, the density calculating unit 16 calculates the density of the gas from the intensity of the reception spectrum at the frequency $f_1 + \Delta f_{sft}$ when the first laser beam is radiated and the intensity of the reception spectrum at the frequency $f_1 + \Delta f_{sft}$ when the second laser beam is radiated, as in the first embodiment. When the lidar device 1 and the scatterer or the like are away from each other, the density calculating unit 16 calculates the density of the gas from the intensity of the reception spectrum at the frequency $f_1 - \Delta f_{sft}$ when the first laser beam is radiated and the intensity of the reception spectrum at the frequency $f_1 - \Delta f_{sft}$ when the second laser beam is radiated, as in the first embodiment. When the lidar device 1 does not move and the scatterer or the like does not move, the density calculating unit 16 calculates the density of the gas from the intensity of the reception spectrum at the frequency $f_1$ when the first laser beam is radiated and the intensity of the reception spectrum at the frequency $f_1$ when the second laser beam is radiated, as in the first embodiment.

However, this is merely an example, and when the lidar device 1 and the scatterer or the like are close to each other, the density calculating unit 16 may calculate the density of the gas from the intensity of the reception spectrum at the frequency $f_3 + \Delta f_{sft}$ which is the reception intensity of the ON wavelength and the intensity of the reception spectrum at the frequency $f_1 + \Delta f_{sft}$ which is the reception intensity of the OFF **wavelength.** When the lidar device 1 and the scatterer or the like are away from each other, the density calculating unit 16 may calculate the density of the gas from the intensity of the reception spectrum at the frequency $f_3 - \Delta f_{sft}$ which is the reception intensity of the ON wavelength and the intensity of the reception spectrum at the frequency $f_1 - \Delta f_{sft}$ which is the reception intensity of the OFF wavelength. When the lidar device 1 does not move and the scatterer or the like does not move, the density calculating unit 16 may calculate the density of the gas from the intensity of the reception spectrum at the frequency $f_3$ which is the reception intensity of the ON wavelength and the intensity of the reception spectrum at the frequency $f_1$ which is the reception intensity of the OFF wavelength.

The frequency analysis unit 101 of the temperature calculating unit 84 acquires a digital signal from the A/D converter 96.

Similarly to the frequency analysis unit 51 of the density calculating unit 16, the frequency analysis unit 101 converts the digital signal into a signal in the frequency domain by performing fast Fourier transform on the digital signal for each predetermined time gate.

The frequency analysis unit 101 outputs the signal in the frequency domain for a distance range corresponding to each time gate to the spectrum intensity calculating unit 102.

The spectrum intensity calculating unit 102 acquires the signal in the frequency domain for each distance range from the frequency analysis unit 101.

When the lidar device 1 and the scatterer or the like are close to each other, if the optical multiplexer 92 detects the interference light having the optical frequency $f_1 + \Delta f_{sft}$, the spectrum intensity calculating unit 102 detects the reception spectrum of the frequency $f_1 + \Delta f_{sft}$ from the signal in the frequency domain for each distance range. The reception spectrum of the frequency $f_1 + \Delta f_{sft}$ detected by the spectrum intensity calculating unit 102 is a spectrum obtained by converting the digital signal related to the electric signal of the frequency $f_1 + \Delta f_{sft}$ output from the frequency discriminator 94 into a signal in the frequency domain.

In addition, when the lidar device 1 and the scatterer or the like are close to each other, if the optical multiplexer 92 detects the interference light having the optical frequency $f_2 + \Delta f_{sft}$, the spectrum intensity calculating unit 102 detects the reception spectrum of the frequency $f_1 + \Delta f_{sft}$ from the signal in the frequency domain for each distance range. The reception spectrum at the frequency $f_1 + \Delta f_{sft}$ detected by the spectrum intensity calculating unit 102 is a spectrum obtained by converting the digital signal related to the electric signal having the frequency $f_1 + \Delta f_{sft}$ output from the frequency mixer 40 into a signal in the frequency domain.

When the lidar device 1 and the scatterer or the like are close to each other, if the optical multiplexer 92 detects the interference light having the optical frequency $f_3 + \Delta f_{sft}$, the spectrum intensity calculating unit 102 detects the reception spectrum of the frequency $f_3 + \Delta f_{sft}$ from the signal in the frequency domain for each distance range.

When the lidar device 1 and the scatterer or the like are away from each other, if the optical multiplexer 92 detects the interference light having the optical frequency $f_1 - \Delta f_{sft}$, the spectrum intensity calculating unit 102 detects the reception spectrum at the frequency $f_1 - \Delta f_{sft}$ for each distance range. The reception spectrum at the frequency $f_1 - \Delta f_{sft}$ detected by the spectrum intensity calculating unit 102 is a spectrum obtained by converting the digital signal related to the electric signal having the frequency $f_1 - \Delta f_{sft}$ output from the frequency discriminator 94 into a signal in the frequency domain.

In addition, when the lidar device 1 and the scatterer or the like are away from each other, if the optical multiplexer 92 detects the interference light having the optical frequency $f_2 - \Delta f_{sft}$, the spectrum intensity calculating unit 102 detects the reception spectrum at the frequency $f_1 - \Delta f_{sft}$ for each distance range. The reception spectrum at the frequency $f_1 - \Delta f_{sft}$ detected by the spectrum intensity calculating unit 102 is a spectrum obtained by converting the digital signal related to the electric signal having the frequency $f_1 - \Delta f_{sft}$ output from the frequency mixer 40 into a signal in the frequency domain.

When the lidar device 1 and the scatterer or the like are away from each other, if the optical multiplexer 92 detects the interference light having the optical frequency $f_3 - \Delta f_{sft}$, the spectrum intensity calculating unit 102 detects the reception spectrum at the frequency $f_3 - \Delta f_{sft}$ from the signal in the frequency domain for each distance range.

When the lidar device 1 does not move and the scatterer or the like does not move, if the optical multiplexer 92 detects the interference light having the optical frequency $f_1$, the spectrum intensity calculating unit 102 detects the reception spectrum at the frequency $f_1$ for each distance range. The reception spectrum at the frequency $f_1$ detected by the spectrum intensity calculating unit 102 is a spectrum obtained by converting the digital signal related to the electric signal having the frequency $f_1$ output from the frequency discriminator 94 into a signal in the frequency domain.

In addition, when the lidar device 1 does not move and the scatterer or the like does not move, if the optical multiplexer 92 detects the interference light having the optical frequency $f_2$, the spectrum intensity calculating unit 102 detects the reception spectrum at the frequency $f_1$ for each distance range. The reception spectrum at the frequency $f_1$ detected by the spectrum intensity calculating unit 102 is a spectrum obtained by converting the digital signal related to the electric signal having the frequency $f_1$ output from the frequency mixer 40 into a signal in the frequency domain.

When the lidar device 1 does not move and the scatterer or the like does not move, if the optical multiplexer 92 detects the interference light having the optical frequency $f_3$, the spectrum intensity calculating unit 102 detects the reception spectrum at the frequency $f_3$ for each distance range.

When the lidar device 1 and the scatterer or the like are close to each other, the spectrum intensity calculating unit 102 calculates, for each distance range, the intensity of the reception spectrum at the frequency $f_1 + \Delta f_{sft}$ when the first laser beam is radiated, the intensity of the reception spectrum at the frequency $f_1 + \Delta f_{sft}$ when the second laser beam is radiated, and the intensity of the reception spectrum at the frequency $f_3 + \Delta f_{sft}$ when the third laser beam is radiated.

When the lidar device 1 and the scatterer or the like are away from each other, the spectrum intensity calculating unit 102 calculates, for each distance range, the intensity of the reception spectrum at the frequency $f_1 - \Delta f_{sft}$ when the first laser beam is radiated, the intensity of the reception spectrum at the frequency $f_1 - \Delta f_{sft}$ when the second laser beam is radiated, and the intensity of the reception spectrum at the frequency $f_3 - \Delta f_{sft}$ when the third laser beam is radiated.

When the lidar device 1 does not move and the scatterer or the like does not move, the spectrum intensity calculating unit 102 calculates, for each distance range, the intensity of the reception spectrum at the frequency $f_1$ when the first laser beam is radiated, the intensity of the reception spectrum at the frequency $f_1$ when the second laser beam is radiated, and the intensity of the reception spectrum at the frequency $f_3$ when the third laser beam is radiated.

The processing of calculating the intensity of the reception spectrum by the spectrum intensity calculating unit 102 is similar to the processing of calculating the intensity of the reception spectrum by the spectrum intensity calculating unit 52.

The spectrum intensity calculating unit 102 outputs the intensity of the reception spectrum for each distance range to the temperature calculation processing unit 103.

When the lidar device 1 and the scatterer or the like are close to each other, the temperature calculation processing unit 103 acquires, from the spectrum intensity calculating unit 102, the intensity of the reception spectrum at the frequency $f_1 + \Delta f_{sft}$ when the first laser beam is radiated, the intensity of the reception spectrum at the frequency $f_1 + \Delta f_{sft}$ when the second laser beam is radiated, and the intensity of the reception spectrum at the frequency $f_3 + \Delta f_{sft}$ when the third laser beam is radiated, for each distance range.

The temperature calculation processing unit 103 calculates the temperature of the gas from the two intensities of the reception spectra at the frequency $f_1 + \Delta f_{sft}$ and the intensity of the reception spectrum at the frequency $f_3 + \Delta f_{sft}$ for each distance range.

When the lidar device 1 and the scatterer or the like are close to each other, the intensity of the reception spectrum at the frequency $f_1 + \Delta f_{sft}$ which is the reception intensity of the ON wavelength, the intensity of the reception spectrum at the frequency $f_1 + \Delta f_{sft}$ which is the reception intensity of the OFF wavelength, and the intensity of the reception spectrum at the frequency $f_3 + \Delta f_{sft}$ which is the reception intensity of the ON wavelength are used for calculation of the temperature of the gas by the temperature calculation processing unit 103.

When the lidar device 1 and the scatterer or the like are close to each other, the temperature calculation processing unit 103 acquires, from the spectrum intensity calculating unit 102, the intensity of the reception spectrum at the frequency $f_1 - \Delta f_{sft}$ when the first laser beam is radiated, the intensity of the reception spectrum at the frequency $f_1 - \Delta f_{sft}$ when the second laser beam is radiated, and the intensity of the reception spectrum at the frequency $f_3 - \Delta f_{sft}$ when the third laser beam is radiated, for each distance range.

The temperature calculation processing unit 103 calculates the temperature of the gas from the two intensities of the reception spectra at the frequency $f_1 - \Delta f_{sft}$ and the intensity of the reception spectrum at the frequency $f_3 - \Delta f_{sft}$ for each distance range.

When the lidar device 1 and the scatterer or the like are away from each other, the intensity of the reception spectrum at the frequency $f_1 - \Delta f_{sft}$ which is the reception intensity of the ON wavelength, the intensity of the reception spectrum at the frequency $f_1 - \Delta f_{sft}$ which is the reception intensity of the OFF wavelength, and the intensity of the reception spectrum at the frequency $f_3 - \Delta f_{sft}$ which is the reception intensity of the ON wavelength are used for calculation of the temperature of the gas by the temperature calculation processing unit 103.

When the lidar device 1 does not move and the scatterer or the like does not move, the temperature calculation processing unit 103 acquires, from the spectrum intensity calculating unit 102, the intensity of the reception spectrum at the frequency $f_1$ when the first laser beam is radiated, the intensity of the reception spectrum at the frequency $f_1$ when the second laser beam is radiated, and the intensity of the reception spectrum at the frequency $f_3$ when the third laser beam is radiated, for each distance range.

The temperature calculation processing unit 103 calculates the temperature of the gas from the two intensities of the reception spectra at the frequency $f_1$ and the intensity of the reception spectrum at the frequency $f_3$ for each distance

range.

When the lidar device 1 does not move and the scatterer or the like does not move, the intensity of the reception spectrum at the frequency $f_1$ which is the reception intensity of the ON wavelength, the intensity of the reception spectrum at the frequency $f_1$ which is the reception intensity of the OFF wavelength, and the intensity of the reception spectrum at the frequency $f_3$ which is the reception intensity of the ON wavelength are used for calculation of the temperature of the gas by the temperature calculation processing unit 103.

The processing itself of calculating the temperature of the gas from the three intensities of the reception spectra at the three frequencies is a known technique, and is disclosed in, for example, Non-Patent Literature 4 below. Therefore, details of the processing of calculating the temperature of the gas will be omitted.

[Non-Patent Literature 4]

Shibata, Yasukuni, Chikao Nagasawa, and Makoto Abo. "A direct detection 1.6 μm DIAL with three wavelengths for high accuracy measurements of vertical CO2 concentration and temperature profiles". Lidar Technologies, Techniques, and Measurements for Atmospheric Remote Sensing IX. Vol. 8894. International Society for Optics and Photonics, 2013.

In the second embodiment described above, the lidar device 1 is configured so that the frequency output unit 81 outputs the first frequency, the second frequency, or the third frequency to the optical transmission unit 82, the optical transmission unit 82 modulates the optical frequency of the laser beam output from the light source 11 by the third frequency when the third frequency is output from the frequency output unit 81, and radiates the laser beam modulated by the third frequency into space as the third laser beam having the wavelength included in the absorption wavelength band, and the optical receiving unit 83 receives the first laser beam scattered by the scatterer, the second laser beam scattered by the scatterer, or the third laser beam scattered by the scatterer as the scattered light, and detects the interference light between the scattered light and the reference light. In addition, the lidar device 1 includes a temperature calculating unit 84 that analyzes the optical frequency of the interference light detected by the optical receiving unit 83 and calculates the temperature of the gas from the analysis result of the optical frequency. Therefore, even in a situation where the relative position between the gas and the lidar device 1 changes or a situation where the distribution of the scatterers floating in the space changes, the lidar device 1 can calculate the temperature of the gas in addition to preventing the degradation of the calculation accuracy in the density of the gas.

In the lidar device 1 illustrated in FIG. 12, the first wavelength and the third wavelength are wavelengths included in the absorption wavelength band of the same gas. However, this is merely an example, and the first wavelength and the third wavelength may be wavelengths included in absorption wavelength bands of different gases. That is, the first wavelength may be a wavelength included in the absorption wavelength band of the first gas, and the third wavelength may be a wavelength included in the absorption wavelength band of the second gas. Note that, the second wavelength is a wavelength that is not included in the absorption wavelength band of the first gas and is not included in the absorption wavelength band of the second gas.

In this case, when the lidar device 1 and the scatterer or the like are close to each other, the density calculating unit 16 calculates the density of the first gas from the intensity of the reception spectrum at the frequency $f_1 + \Delta f_{sft}$ which is the reception intensity of the ON wavelength and the intensity of the reception spectrum at the frequency $f_1 + \Delta f_{sft}$ which is the reception intensity of the OFF wavelength, and calculates the density of the second gas from the intensity of the reception spectrum at the frequency $f_3 + \Delta f_{sft}$ which is the reception intensity of the ON wavelength and the intensity of the reception spectrum at the frequency $f_1 + \Delta f_{sft}$ which is the reception intensity of the OFF wavelength.

When the lidar device 1 and the scatterer or the like are away from each other, the density calculating unit 16 calculates the density of the first gas from the intensity of the reception spectrum at the frequency $f_1 - \Delta f_{sft}$ which is the reception intensity of the ON wavelength and the intensity of the reception spectrum at the frequency $f_1 - \Delta f_{sft}$ which is the reception intensity of the OFF wavelength, and calculates the density of the second gas from the intensity of the reception spectrum at the frequency $f_3 - \Delta f_{sft}$ which is the reception intensity of the ON wavelength and the intensity of the reception spectrum at the frequency $f_1 - \Delta f_{sft}$ which is the reception intensity of the OFF wavelength.

When the lidar device 1 does not move and the scatterer or the like does not move, the density calculating unit 16 calculates the density of the first gas from the intensity of the reception spectrum at the frequency $f_1$ which is the reception intensity of the ON wavelength and the intensity of the reception spectrum at the frequency $f_1$ which is the reception intensity of the OFF wavelength, and calculates the density of the second gas from the intensity of the reception spectrum at the frequency $f_3$ which is the reception intensity of the ON wavelength and the intensity of the reception spectrum at the frequency $f_1$ which is the reception intensity of the OFF wavelength. As a result, the lidar device 1 illustrated in FIG. 12 can calculate the densities of two different gases.

Third Embodiment.

In the third embodiment, a lidar device 1 in which a reference light output unit 131 includes a frequency modulator 141 in addition to the optical distributor 31 will be described.

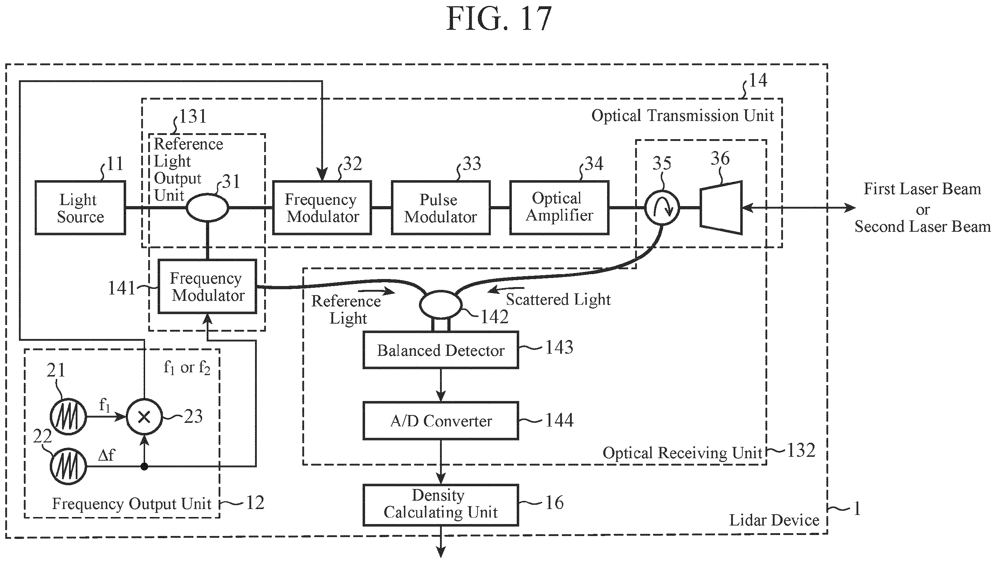

FIG. 17 is a configuration diagram illustrating the lidar device 1 according to the third embodiment. In FIG. 17, the

EP 4 283 341 B1

same reference numerals as those in FIG. 1 denote the same or corresponding parts, and thus description thereof is omitted.

The lidar device 1 illustrated in FIG. 17 includes a light source 11, a frequency output unit 12, the reference light output unit 131, an optical transmission unit 14, an optical receiving unit 132, and a density calculating unit 16.

In the lidar device 1 illustrated in FIG. 17, the frequency output unit 12 outputs the first frequency $f_1$ or the second frequency $f_2$ to the optical transmission unit 14 as in the first embodiment.

In the lidar device 1 illustrated in FIG. 17, the frequency output unit 12, when outputting the first frequency $f_1$ to the optical transmission unit 14, does not output the frequency $\Delta f$ to be added to the reference light output unit 131. The frequency output unit 12, when outputting the second frequency $f_2$ to the optical transmission unit 14, outputs the frequency $\Delta f$ to be added to the reference light output unit 131.

The reference light output unit 131 includes an optical distributor 31 and a frequency modulator 141.

When the first frequency $f_1$ is output from the frequency output unit 12 to the optical transmission unit 14, the reference light output unit 131 outputs the laser beam output from the light source 11 to the optical receiving unit 132 as reference light.

When the second frequency $f_2$ is output from the frequency output unit 12 to the optical transmission unit 14, the reference light output unit 131 modulates the laser beam output from the light source 11 by the frequency $\Delta f$ to be added.

The reference light output unit 131 outputs the laser beam modulated by the frequency $\Delta f$ to be added to the optical receiving unit 132 as reference light.

The frequency modulator 141 is implemented by, for example, a modulation element using an acousto-optic element or a modulation element using a lithium niobate crystal.

When the frequency $\Delta f$ to be added is not output from the second frequency oscillator 22, the frequency modulator 141 outputs the laser beam output from the optical distributor 31 to the optical multiplexer 142 as reference light. The optical frequency of the reference light is $f_0$.

When the frequency $\Delta f$ to be added is output from the second frequency oscillator 22, the frequency modulator 141 modulates the laser beam output from the optical distributor 31 by the frequency $\Delta f$ to be added.

The frequency modulator 141 outputs the laser beam modulated by the frequency $\Delta f$ to be added to the optical multiplexer 142 as reference light. The optical frequency of the reference light is $f_0 + \Delta f$ $(= f_0 + f_2 - f_1)$.

The optical receiving unit 132 includes an optical circulator 35, an optical antenna 36, an optical multiplexer 142, a balanced detector 143, and an A/D converter 144.

The optical receiving unit 132 receives, as scattered light, the first laser beam radiated from the optical transmission unit 14 and then scattered by the scatterer floating in the space or the second laser beam radiated from the optical transmission unit and then scattered by the scatterer, and detects interference light between the scattered light and the reference light.

The optical multiplexer 142 is implemented by, for example, a beam splitter or a fiber type coupler.

The optical multiplexer 142 detects interference light between scattered light output from the optical circulator 35 and reference light output from the frequency modulator 141.

The optical multiplexer 142 outputs the interference light to the balanced detector 143.

When the lidar device 1 and the scatterer or the like are close to each other, if scattered light that is the scattered first laser beam is output from the optical circulator 35, the optical multiplexer 142 outputs interference light having an optical frequency $f_1 + \Delta f_{sft}$ to the balanced detector 143 since the optical frequency of the reference light is $f_0$.

Furthermore, when the lidar device 1 and the scatterer or the like are close to each other, if scattered light that is the scattered second laser beam is output from the optical circulator 35, the optical multiplexer 142 outputs interference light having the optical frequency $f_1 + \Delta f_{sft}$ to the balanced detector 143 since the optical frequency of the reference light is $f_0 + f_2 - f_1$.

When the lidar device 1 and the scatterer or the like are away from each other, if scattered light that is the scattered first laser beam is output from the optical circulator 35, the optical multiplexer 142 outputs interference light having the optical frequency $f_1 - \Delta f_{sft}$ to the balanced detector 143 since the optical frequency of the reference light is $f_0$.

Furthermore, when the lidar device 1 and the scatterer or the like are away from each other, if scattered light that is the scattered second laser beam is output from the optical circulator 35, the optical multiplexer 142 outputs interference light having the optical frequency $f_1 - \Delta f_{sft}$ to the balanced detector 143 since the optical frequency of the reference light is $f_0 + f_2 - f_1$.

When the lidar device 1 does not move and the scatterer or the like does not move, if scattered light that is the scattered first laser beam is output from the optical circulator 35, the optical multiplexer 142 outputs the interference light having the optical frequency $f_1$ to the balanced detector 143 since the optical frequency of the reference light is $f_0$.

Furthermore, when the lidar device 1 does not move and the scatterer or the like does not move, if scattered light that is the scattered second laser beam is output from the optical circulator 35, the optical multiplexer 142 outputs interference light of the optical frequency $f_1$ to the balanced detector 143 since the optical frequency of the reference light is $f_0 + f_2 - f_1$.

The balanced detector 143 is implemented by, for example, a balanced receiver that reduces in-phase noise by using two photodiodes.

The balanced detector 143 converts the interference light output from the optical multiplexer 142 into an electric signal.

The balanced detector 143 outputs the electric signal to the A/D converter 144.

The A/D converter 144 converts the analog electric signal output from the balanced detector 143 into a digital signal.

The A/D converter 144 outputs the digital signal to the density calculating unit 16.

Next, the lidar device 1 illustrated in FIG. 17 will be described.

The light source 11 outputs the laser beam to the optical distributor 31.

The frequency output unit 12 outputs the first frequency $f_1$ or the second frequency $f_2$ to the optical transmission unit 14. For example, the frequency output unit 12 alternately outputs the first frequency $f_1$ and the second frequency $f_2$ to the optical transmission unit 14.

Hereinafter, the frequency output operation by the frequency output unit 12 will be specifically described.

The first frequency oscillator 21 oscillates a first frequency $f_1$ and outputs the first frequency $f_1$ to the frequency mixer 23.

The second frequency oscillator 22 intermittently oscillates the frequency $\Delta f$ to be added, and intermittently outputs the frequency $\Delta f$ to be added to the frequency mixer 23.

The second frequency oscillator 22, when outputting the frequency $\Delta f$ to be added to the frequency mixer 23, outputs the frequency $\Delta f$ to be added to the frequency modulator 141.

The second frequency oscillator 22, when not outputting the frequency $\Delta f$ to be added to the frequency mixer 23, does not output the frequency $\Delta f$ to be added to the frequency modulator 141.

When the frequency $\Delta f$ to be added is not output from the second frequency oscillator 22, the frequency mixer 23 outputs the first frequency $f_1$ oscillated by the first frequency oscillator 21 to the frequency modulator 32.

When the frequency $\Delta f$ to be added is output from the second frequency oscillator 22, the frequency mixer 23 outputs the frequency $f_1 + \Delta f$ of the sum of the first frequency $f_1$ and the frequency $\Delta f$ to be added to the frequency modulator 32 as the second frequency $f_2$.

Upon receiving the laser beam from the light source 11, the optical distributor 31 distributes the laser beam at a predetermined ratio. The predetermined ratio is, for example, a ratio of 90 on the frequency modulator 32 side and a ratio of 10 on the frequency modulator 141 side.

The optical distributor 31 outputs one of the distributed laser beams to the frequency modulator 32 and outputs the other of the distributed laser beams to the frequency modulator 141.

Since the operations of the frequency modulator 32, the pulse modulator 33, the optical amplifier 34, the optical circulator 35, and the optical antenna 36 are similar to those in the first embodiment, detailed description thereof will be omitted.

The first laser beam or the second laser beam is radiated from the optical antenna 36 to a space where gas is present. The first laser beam scattered by the scatterer floating in the space or the second laser beam scattered by the scatterer is received by the optical antenna 36 as scattered light.

The optical circulator 35 outputs the scattered light received by the optical antenna 36 to the optical multiplexer 142.

When the frequency $\Delta f$ to be added is not output from the second frequency oscillator 22, the frequency modulator 141 outputs the laser beam output from the light source 11 to the optical multiplexer 142 as reference light. The optical frequency of the reference light is $f_0$.

When the frequency $\Delta f$ to be added is output from the second frequency oscillator 22, the frequency modulator 141 modulates the optical frequency $f_0$ of the laser beam output from the light source 11 by the second frequency $f_2$.

The frequency modulator 141 outputs the laser beam modulated by the second frequency $f_2$ to the optical multiplexer 142 as reference light. The optical frequency of the reference light is $f_0 + f_2$.

The optical multiplexer 142 acquires scattered light from the optical circulator 35 and reference light from the frequency modulator 141.

The optical multiplexer 142 detects interference light between scattered light and reference light.

For example, when the lidar device 1 moves or the gas and the scatterer move, the scattered light is subjected to the Doppler shift, and the optical frequencies $f_0 + f_1$ and $f_0 + f_2$ of the scattered light are shifted. That is, when the lidar device 1 and the scatterer or the like are close to each other, the optical frequencies $f_0 + f_1$ and $f_0 + f_2$ of the scattered light are increased by, for example, the frequency $\Delta f_{sft}$. When scattered light having an optical frequency of $f_0 + f_1 + \Delta f_{sft}$ is acquired from the optical circulator 35, the optical frequency of the interference light is $f_1 + \Delta f_{sft} (= f_0 + f_1 + \Delta f_{sft} - f_0)$ because the optical frequency of the reference light output from the frequency modulator 141 is $f_0$. When scattered light having an optical frequency of $f_0 + f_2 + \Delta f_{sft}$ is acquired from the optical circulator 35, the optical frequency of the interference light is $f_1 + \Delta f_{sft} (= f_0 + f_2 + \Delta f_{sft} - (f_0 + f_2 - f_1))$ because the optical frequency of the reference light output from the frequency modulator 141 is $f_0 +$

$f_2 - f_1$.

When the lidar device 1 and the scatterer or the like are away from each other, the optical frequencies $f_0 + f_1$ and $f_0 + f_2$ of the scattered light are decreased by, for example, the frequency $\Delta f_{sft}$. When scattered light having an optical frequency of $f_0 + f_1 - \Delta f_{sft}$ is acquired from the optical circulator 35, the optical frequency of the interference light is $f_1 - \Delta f_{sft}$ (= $f_0 + f_1 - \Delta f_{sft} - f_0$) because the optical frequency of the reference light output from the frequency modulator 141 is $f_0$. When scattered light having an optical frequency of $f_0 + f_2 - \Delta f_{sft}$ is acquired from the optical circulator 35, the optical frequency of the interference light is $f_1 - \Delta f_{sft}$ (= $f_0 + f_2 - \Delta f_{sft} - (f_0 + f_2 - f_1)$) because the optical frequency of the reference light output from the frequency modulator 141 is $f_0 + f_2 - f_1$.

When the lidar device 1 does not move and the scatterer or the like does not move, the optical frequencies $f_0 + f_1$ and $f_0 + f_2$ of the scattered light do not change. $\Delta f_{sft} = 0$. When scattered light having an optical frequency of $f_0 + f_1$ is acquired from the optical circulator 35, the optical frequency of the interference light is $f_1$ (= $f_0 + f_1 - f_0$) because the optical frequency of the reference light output from the frequency modulator 141 is $f_0$. When scattered light having an optical frequency of $f_0 + f_2$ is acquired from the optical circulator 35, the optical frequency of the interference light is $f_1$ (= $f_0 + f_2 - (f_0 + f_2 - f_1)$) because the optical frequency of the reference light output from the frequency modulator 141 is $f_0 + f_2 - f_1$.

Therefore, when the lidar device 1 and the scatterer or the like are close to each other, if scattered light which is the scattered first laser beam is output from the optical circulator 35, the optical multiplexer 142 outputs interference light having an optical frequency $f_1 + \Delta f_{sft}$ to the balanced detector 143.

Furthermore, when the lidar device 1 and the scatterer or the like are close to each other, if scattered light which is the scattered second laser beam is output from the optical circulator 35, the optical multiplexer 142 outputs interference light having an optical frequency $f_1 + \Delta f_{sft}$ to the balanced detector 143, similarly to when the scattered first laser beam is output.

When the lidar device 1 and the scatterer or the like are away from each other, if the scattered light which is the scattered first laser beam is output from the optical circulator 35, the optical multiplexer 142 outputs the interference light having the optical frequency $f_1 - \Delta f_{sft}$ to the balanced detector 143.

Furthermore, when the lidar device 1 and the scatterer or the like are away from each other, if the scattered light which is the scattered second laser beam is output from the optical circulator 35, the optical multiplexer 142 outputs interference light having an optical frequency $f_1 - \Delta f_{sft}$ to the balanced detector 143, similarly to when the scattered first laser beam is output.

When the lidar device 1 does not move and the scatterer or the like does not move, if the scattered light which is the scattered first laser beam is output from the optical circulator 35, the optical multiplexer 142 outputs the interference light having the optical frequency $f_1$ to the balanced detector 143.

Furthermore, when the lidar device 1 does not move and the scatterer or the like does not move, if scattered light which is the scattered second laser beam is output from the optical circulator 35, the optical multiplexer 142 outputs interference light having the optical frequency $f_1$ to the balanced detector 143 similarly to when the scattered first laser beam is output.

The balanced detector 143 acquires interference light from the optical multiplexer 142 and converts the interference light into an electric signal.

The balanced detector 143 outputs the electric signal to the A/D converter 144.

The A/D converter 144 acquires the electric signal from the balanced detector 143.

The A/D converter 144 converts the analog electric signal into a digital signal and outputs the digital signal to the density calculating unit 16.

Upon receiving the digital signal from the A/D converter 144, the density calculating unit 16 calculates the density of the gas.

That is, when the lidar device 1 and the scatterer or the like are close to each other, the density calculating unit 16 calculates the density of the gas by substituting the intensity of the reception spectrum at the frequency $f_1 + \Delta f_{sft}$ when the first laser beam is radiated and the intensity of the reception spectrum at the frequency $f_1 + \Delta f_{sft}$ when the second laser beam is radiated into Formula (2).

When the lidar device 1 and the scatterer or the like are away from each other, the density calculating unit 16 calculates the density of the gas by substituting the intensity of the reception spectrum at the frequency $f_1 - \Delta f_{sft}$ when the first laser beam is radiated and the intensity of the reception spectrum at the frequency $f_1 - \Delta f_{sft}$ when the second laser beam is radiated into Formula (2).

When the lidar device 1 does not move and the scatterer or the like does not move, the density calculating unit 16 calculates the density of the gas by substituting the intensity of the reception spectrum at the frequency $f_1$ when the first laser beam is radiated and the intensity of the reception spectrum at the frequency $f_1$ when the second laser beam is radiated into Formula (2).

Also in the lidar device 1 illustrated in FIG. 17, similarly to the lidar device 1 illustrated in FIG. 1, the density of the gas can be calculated without including two light sources.

In the lidar device 1 illustrated in FIG. 17, the frequency discriminator 39, the frequency mixer 40, and the signal multiplexer 41 are unnecessary.

In the lidar device 1 illustrated in FIG. 17, the frequency modulator 141 is used in the lidar device 1 illustrated in FIG. 1. However, this is merely an example, and the frequency modulator 141 may be used in the lidar device 1 illustrated in FIG. 11 or the lidar device 1 illustrated in FIG. 12.

In the lidar device 1 illustrated in FIG. 17, the frequency mixer 23 of the frequency output unit 12 outputs the first frequency $f_1$ or the second frequency $f_2$ to the frequency modulator 32 of the optical transmission unit 14. In addition, only when the second frequency oscillator 22 of the frequency output unit 12 outputs the frequency $\Delta f$ to be added to the frequency mixer 23, the second frequency oscillator 22 outputs the frequency $\Delta f$ to be added to the frequency modulator 141 of the reference light output unit 131.

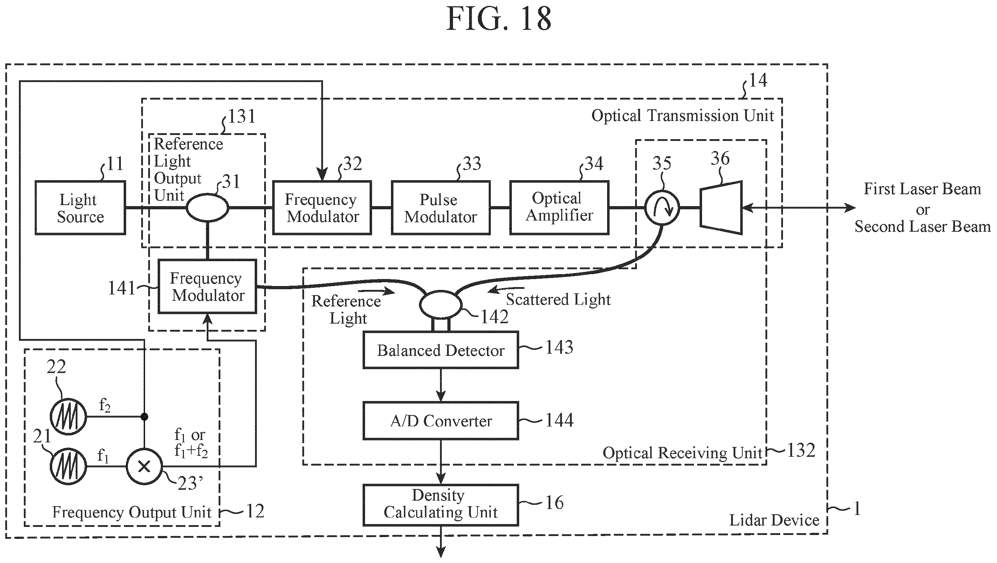

However, this is merely an example, and as illustrated in FIG. 18, the second frequency oscillator 22 of the frequency output unit 12 may intermittently output the second frequency $f_2$ to the frequency modulator 32, and the frequency mixer 23' may output the first frequency $f_1$ or the frequency $f_1 + f_2$ which is the sum of the first frequency $f_1$ and the second frequency $f_2$ to the frequency modulator 141.

FIG. 18 is a configuration diagram illustrating another lidar device 1 according to the third embodiment.

In the lidar device 1 illustrated in FIG. 18, the frequency output unit 12 includes a first frequency oscillator 21, a second frequency oscillator 22, and a frequency mixer 23'.

The second frequency oscillator 22 intermittently oscillates the second frequency $f_2$, and intermittently outputs the second frequency $f_2$ to each of the frequency modulator 32 and the frequency mixer 23'. When the second frequency $f_2$ is not output from the second frequency oscillator 22, the frequency mixer 23' outputs the first frequency $f_1$ oscillated by the first frequency oscillator 21 to the frequency modulator 141. When the second frequency $f_2$ is output from the second frequency oscillator 22, the frequency mixer 23' outputs the frequency $f_1 + f_2$, which is the sum of the first frequency $f_1$ and the second frequency $f_2$, to the frequency modulator 141.

In the lidar device 1 illustrated in FIG. 18, when the second frequency $f_2$ is not output from the second frequency oscillator 22, the frequency modulator 32 of the optical transmission unit 14 does not modulate the optical frequency $f_0$ of the laser beam output from the optical distributor 31 by the first frequency $f_1$, and outputs the laser beam to the pulse modulator 33 as the first laser beam. When the second frequency $f_2$ is output from the second frequency oscillator 22, the frequency modulator 32 generates the second laser beam by modulating the optical frequency $f_0$ of the laser beam output from the optical distributor 31 by the second frequency $f_2$, and outputs the second laser beam to the pulse modulator 33.

In the lidar device 1 illustrated in FIG. 18, it is assumed that the wavelength of the laser beam output from the light source 11 is included in the absorption wavelength band of the gas. In addition, it is assumed that the second laser beam generated by modulating by the second frequency $f_2$ has a lower absorption rate by gas than that of the first laser beam.

When the first frequency $f_1$ is output from the frequency mixer 23', the frequency modulator 141 of the reference light output unit 131 modulates the optical frequency $f_0$ of the laser beam output from the optical distributor 31 by the first frequency $f_1$, and outputs the laser beam modulated by the first frequency $f_1$ to the optical multiplexer 142 as reference light.

When the sum frequency $f_1 + f_2$ is output from the frequency mixer 23', the frequency modulator 141 modulates the optical frequency $f_0$ of the laser beam output from the optical distributor 31 by the sum frequency $f_1 + f_2$, and outputs the laser beam modulated by the sum frequency $f_1 + f_2$ to the optical multiplexer 142 as reference light.

When the lidar device 1 and the scatterer or the like are close to each other, if the first frequency $f_1$ is output from the frequency mixer 23' to the frequency modulator 141, the optical multiplexer 142 acquires the reference light having the optical frequency $f_0 + f_1$ from the frequency modulator 141 and acquires the scattered light having the optical frequency $f_0 + \Delta f_{sft}$ from the optical circulator 35. At this time, the optical frequency of the interference light detected by the optical multiplexer 142 is $-f_1 + \Delta f_{sft}$ $(= f_0 + \Delta f_{sft} - (f_0 + f_1))$.

When the lidar device 1 and the scatterer or the like are close to each other, if the sum frequency $f_1 + f_2$ is output from the frequency mixer 23' to the frequency modulator 141, the optical multiplexer 142 acquires the reference light having the optical frequency of $f_0 + f_1 + f_2$ from the frequency modulator 141 and acquires the scattered light having the optical frequency of $f_0 + f_2 + \Delta f_{sft}$ from the optical circulator 35. At this time, the optical frequency of the interference light detected by the optical multiplexer 142 is $-f_1 + \Delta f_{sft}$ $(= f_0 + f_2 + \Delta f_{sft} - (f_0 + f_1 + f_2))$.

When the lidar device 1 and the scatterer or the like are away from each other, if the first frequency $f_1$ is output from the frequency mixer 23' to the frequency modulator 141, the optical multiplexer 142 acquires the reference light having the optical frequency $f_0 + f_1$ from the frequency modulator 141 and acquires the scattered light having the optical frequency $f_0 - \Delta f_{sft}$ from the optical circulator 35. At this time, the optical frequency of the interference light detected by the optical multiplexer 142 is $-f_1 - \Delta f_{sft}$ $(= f_0 - \Delta f_{sft} - (f_0 + f_1))$.

When the lidar device 1 and the scatterer or the like are away from each other, if the sum frequency $f_1 + f_2$ is output from the frequency mixer 23' to the frequency modulator 141, the optical multiplexer 142 acquires the reference light having the optical frequency $f_0 + f_1 + f_2$ from the frequency modulator 141 and acquires the scattered light having the optical frequency $f_0 + f_2 - \Delta f_{sft}$ from the optical circulator 35. At this time, the optical frequency of the interference light detected by the optical multiplexer 142 is $-f_1 - \Delta f_{sft}$ $(= f_0 + f_2 - \Delta f_{sft} - (f_0 + f_1 + f_2))$.

When the lidar device 1 does not move and the scatterer or the like does not move, if the first frequency $f_1$ is output from the frequency mixer 23' to the frequency modulator 141, the optical multiplexer 142 acquires the reference light having the optical frequency $f_0 + f_1$ from the frequency modulator 141 and acquires the scattered light having the optical frequency $f_0$ from the optical circulator 35. At this time, the optical frequency of the interference light detected by the optical multiplexer 142 is $-f_1$ ($= f_0 - (f_0 + f_1)$).

When the lidar device 1 does not move and the scatterer or the like does not move, if the sum frequency $f_1 + f_2$ is output from the frequency mixer 23' to the frequency modulator 141, the optical multiplexer 142 acquires the reference light having the optical frequency $f_0 + f_1 + f_2$ from the frequency modulator 141 and acquires the scattered light having the optical frequency $f_0 + f_2$ from the optical circulator 35. At this time, the optical frequency of the interference light detected by the optical multiplexer 142 is $-f_1$ ($= f_0 + f_2 - (f_0 + f_1 + f_2)$).

The balanced detector 143 acquires interference light from the optical multiplexer 142 and converts the interference light into an electric signal.

The balanced detector 143 outputs the electric signal to the A/D converter 144.

The A/D converter 144 acquires the electric signal from the balanced detector 143.

The A/D converter 144 converts the analog electric signal into a digital signal and outputs the digital signal to the density calculating unit 16.

Upon receiving the digital signal from the A/D converter 144, the density calculating unit 16 calculates the density of the gas.

That is, when the lidar device 1 and the scatterer or the like are close to each other, the density calculating unit 16 calculates the density of the gas by substituting the intensity of the reception spectrum at the frequency $-f_1 + \Delta f_{sft}$ when the first laser beam is radiated and the intensity of the reception spectrum at the frequency $-f_1 + \Delta f_{sft}$ when the second laser beam is radiated into Formula (2).

When the lidar device 1 and the scatterer or the like are away from each other, the density calculating unit 16 calculates the density of the gas by substituting the intensity of the reception spectrum at the frequency $-f_1 - \Delta f_{sft}$ when the first laser beam is radiated and the intensity of the reception spectrum at the frequency $-f_1 - \Delta f_{sft}$ when the second laser beam is radiated into Formula (2).

When the lidar device 1 does not move and the scatterer or the like does not move, the density calculating unit 16 calculates the density of the gas by substituting the intensity of the reception spectrum at the frequency $-f_1$ when the first laser beam is radiated and the intensity of the reception spectrum at the frequency $-f_1$ when the second laser beam is radiated into Formula (2).

Fourth Embodiment.

In a fourth embodiment, a lidar device 1 in which an optical transmission unit 152 radiates a laser beam modulated by a first frequency into space as a first laser beam and radiates a laser beam modulated by a second frequency into space as a second laser beam will be described. That is, the lidar device 1 in which the optical transmission unit 152 simultaneously radiates the first laser beam and the second laser beam to the space will be described.

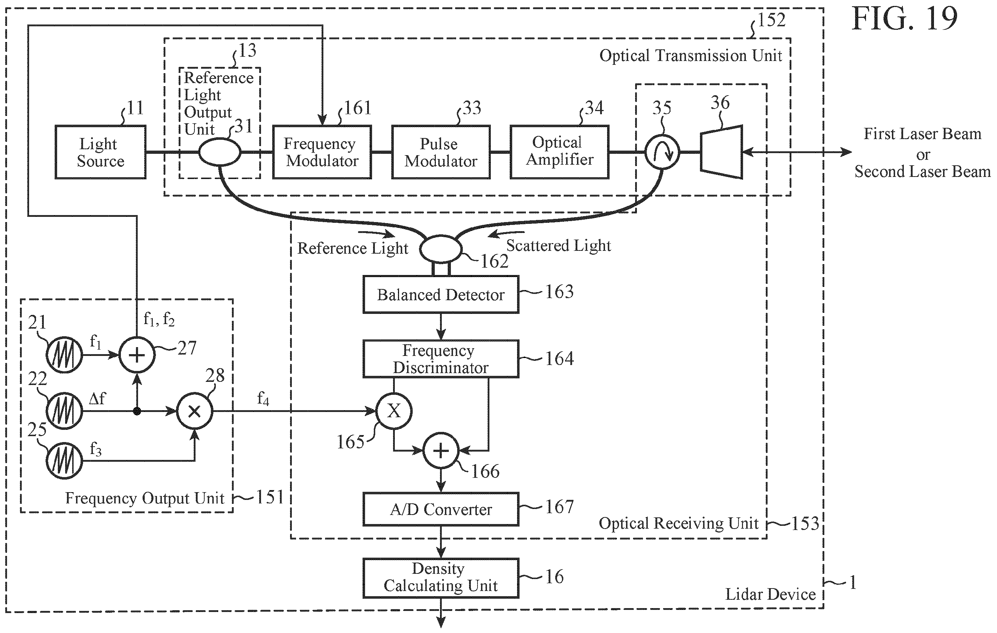

FIG. 19 is a configuration diagram illustrating the lidar device 1 according to the fourth embodiment. In FIG. 19, the same reference numerals as those in FIGS. 1 and 12 denote the same or corresponding parts, and thus description thereof is omitted.

The lidar device 1 illustrated in FIG. 19 includes a light source 11, a frequency output unit 151, a reference light output unit 13, an optical transmission unit 152, an optical receiving unit 153, and a density calculating unit 16.

The frequency output unit 151 includes a first frequency oscillator 21, a second frequency oscillator 22, a third frequency oscillator 25, a signal multiplexer 27, and a frequency conversion unit 28.

The frequency output unit 151 outputs each of the first frequency $f_1$ and the second frequency $f_2$ to the optical transmission unit 152.

The first frequency oscillator 21 oscillates a first frequency $f_1$ and outputs the first frequency $f_1$ to the signal multiplexer 27.

The second frequency oscillator 22 oscillates a frequency $\Delta f$ ($= f_2 - f_1$) to be added, and outputs the frequency $\Delta f$ to be added to each of the signal multiplexer 27 and the frequency conversion unit 28. In the lidar device 1 illustrated in FIG. 19, the second frequency oscillator 22 continuously oscillates the frequency $\Delta f$ to be added.

The third frequency oscillator 25 oscillates a third frequency $f_3$ and outputs the third frequency $f_3$ to the frequency conversion unit 28.

The signal multiplexer 27 calculates a frequency $f_1 + \Delta f$ ($= f_2 - f_1$) of the sum of the first frequency $f_1$ output from the first frequency oscillator 21 and the frequency $\Delta f$ to be added output from the second frequency oscillator 22 as a second frequency $f_2$.

The signal multiplexer 27 outputs both the first frequency $f_1$ and the second frequency $f_2$ to a frequency modulator 161 described later.

The frequency conversion unit 28 is implemented by, for example, a mixer.

The frequency conversion unit 28 converts the frequency $\Delta f$ to be added output from the second frequency oscillator 22 into a frequency $\Delta f + f_3$ $(= f_2 - f_1 + f_3)$ of the sum of the frequency $\Delta f$ to be added and the third frequency $f_3$ output from the third frequency oscillator 25.

The frequency conversion unit 28 outputs the sum frequency $\Delta f + f_3$ as a fourth frequency $f_4$ to frequency mixer 165 described later.

The optical transmission unit 152 includes an optical distributor 31, a frequency modulator 161, a pulse modulator 33, an optical amplifier 34, an optical circulator 35, and an optical antenna 36.

The optical transmission unit 152 acquires both the first frequency $f_1$ and the second frequency $f_2$ from the frequency output unit 151.

The optical transmission unit 152 modulates the optical frequency $f_0$ of the laser beam output from the light source 11 by the first frequency $f_1$, and modulates the optical frequency $f_0$ of the laser beam output from the light source 11 by the second frequency $f_2$.

The optical transmission unit 152 radiates the laser beam modulated by the first frequency $f_1$ into space as a first laser beam, and radiates the laser beam modulated by the second frequency $f_2$ into space as a second laser beam.

That is, the optical transmission unit 152 simultaneously radiates the first laser beam and the second laser beam to the space where the gas is present.

The frequency modulator 161 is implemented by, for example, a modulation element using an acousto-optic element or a modulation element using a lithium niobate crystal.

The frequency modulator 161 acquires both the first frequency $f_1$ and the second frequency $f_2$ from the signal multiplexer 27.

The frequency modulator 161 modulates the optical frequency $f_0$ of the laser beam output from the light source 11 by the first frequency $f_1$, and outputs the laser beam after the frequency modulation to the pulse modulator 33 as the first laser beam. The optical frequency of the first laser beam is $f_0 + f_1$.

The frequency modulator 161 modulates the optical frequency $f_0$ of the laser beam output from the light source 11 by the second frequency $f_2$, and outputs the laser beam after the frequency modulation to the pulse modulator 33 as the second laser beam. The optical frequency of the second laser beam is $f_0 + f_2$.

The optical receiving unit 153 includes an optical circulator 35, an optical antenna 36, an optical multiplexer 162, a balanced detector 163, a frequency discriminator 164, a frequency mixer 165, a signal multiplexer 166, and an A/D converter 167.

The optical receiving unit 153 receives, as scattered light, each of the first laser beam radiated by the optical transmission unit 152 and then scattered by the scatterer floating in the space and the second laser beam radiated by the optical transmission unit and then scattered by the scatterer, and detects interference light between the scattered light and the reference light.

The optical multiplexer 162 is implemented by, for example, a beam splitter or a fiber type coupler.

The optical multiplexer 162 detects interference light between scattered light output from the optical circulator 35 and reference light output from the optical distributor 31.

The optical multiplexer 162 outputs the interference light to the balanced detector 163.

For example, when the lidar device 1 moves or the gas and the scatterer move, the scattered light is subjected to the Doppler shift, and the optical frequencies $f_0 + f_1$ and $f_0 + f_2$ of the scattered light are shifted. That is, when the lidar device 1 and the scatterer or the like are close to each other, the optical frequencies $f_0 + f_1$ and $f_0 + f_2$ of the scattered light are increased by, for example, the frequency $\Delta f_{sft}$. When the lidar device 1 and the scatterer or the like are away from each other, the optical frequencies $f_0 + f_1$ and $f_0 + f_2$ of the scattered light are decreased by, for example, the frequency $\Delta f_{sft}$.

Therefore, when the lidar device 1 and the scatterer or the like are close to each other, the optical multiplexer 162 outputs the interference light having the optical frequency $f_1 + \Delta f_{sft}$ to the balanced detector 163 and outputs the interference light having the optical frequency $f_2 + \Delta f_{sft}$ to the balanced detector 163.

When the lidar device 1 and the scatterer or the like are away from each other, the optical multiplexer 162 outputs the interference light having the optical frequency $f_1 - \Delta f_{sft}$ to the balanced detector 163 and outputs the interference light having the optical frequency $f_2 - \Delta f_{sft}$ to the balanced detector 163.

When the lidar device 1 does not move and the scatterer or the like does not move, the optical multiplexer 162 outputs the interference light having the frequency $f_1$ to the balanced detector 163 and outputs the interference light having the frequency $f_2$ to the balanced detector 163 since the optical frequencies $f_0 + f_1$ and $f_0 + f_2$ of the scattered light are not shifted.

The balanced detector 163 is implemented by, for example, a balanced receiver that reduces in-phase noise by using two photodiodes.

The balanced detector 163 converts the interference light output from the optical multiplexer 162 into an electric signal.

The balanced detector 163 outputs the electric signal to the frequency discriminator 164.

When the electric signal related to the interference light having the optical frequency $f_2 + \Delta f_{sft}$, the electric signal related to the interference light having the optical frequency $f_2 - \Delta f_{sft}$, or the electric signal related to the interference light having the optical frequency $f_2$ is output from the balanced detector 163, the frequency discriminator 164 outputs these electric signals to the frequency mixer 165.

When the electric signal related to the interference light having the optical frequency $f_1 + \Delta f_{sft}$, the electric signal related to the interference light having the optical frequency $f_1 - \Delta f_{sft}$, or the electric signal related to the interference light having the optical frequency $f_1$ is output from the balanced detector 163, the frequency discriminator 164 outputs these electric signals to the signal multiplexer 166.

The frequency mixer 165 down-converts the frequency of the electric signal output from the frequency discriminator 164 using the fourth frequency $f_4$ output from the frequency conversion unit 28.

That is, when the frequency of the electric signal output from the frequency discriminator 164 is $f_2 + \Delta f_{sft}$, the frequency mixer 165 down-converts the frequency of the electric signal to $f_2 - f_4 + \Delta f_{sft}$ using the fourth frequency $f_4$.

When the frequency of the electric signal output from the frequency discriminator 164 is $f_2 - \Delta f_{sft}$, the frequency mixer 165 down-converts the frequency of the electric signal to $f_2 - f_4 - \Delta f_{sft}$ using the fourth frequency $f_4$.

When the frequency of the electric signal output from the frequency discriminator 164 is $f_2$, the frequency mixer 165 down-converts the frequency of the electric signal to $f_2 - f_4$ using the fourth frequency $f_4$.

The frequency mixer 165 outputs the down-converted electric signal to the signal multiplexer 166.

The signal multiplexer 166 multiplexes the electric signal output from the frequency discriminator 164 and the electric signal output from the frequency mixer 165, and outputs the multiplexed electric signal to the A/D converter 167.

The A/D converter 167 converts the analog electric signal output from the signal multiplexer 166 into a digital signal.

The A/D converter 167 outputs the digital signal to the density calculating unit 16.

Next, the lidar device 1 illustrated in FIG. 19 will be described.

The light source 11 outputs the laser beam to the optical distributor 31.

The frequency output unit 151 outputs each of the first frequency $f_1$ and the second frequency $f_2$ to the optical transmission unit 152.

Hereinafter, the frequency output operation by the frequency output unit 151 will be specifically described.

The first frequency oscillator 21 oscillates a first frequency $f_1$ and outputs the first frequency $f_1$ to the signal multiplexer 27.

The second frequency oscillator 22 oscillates a frequency $\Delta f$ to be added, and outputs the frequency $\Delta f$ to be added to each of the signal multiplexer 27 and the frequency conversion unit 28.

The third frequency oscillator 25 oscillates a third frequency $f_3$ and outputs the third frequency $f_3$ to the frequency conversion unit 28.

The signal multiplexer 27 acquires the first frequency $f_1$ from the first frequency oscillator 21 and acquires the frequency $\Delta f$ (= $f_2 - f_1$) to be added from the second frequency oscillator 22.

The signal multiplexer 27 calculates the frequency $f_1 + \Delta f$ of the sum of the first frequency $f_1$ and the frequency $\Delta f$ to be added as the second frequency $f_2$.

The signal multiplexer 27 outputs both the first frequency $f_1$ and the second frequency $f_2$ to the frequency modulator 161.

The frequency conversion unit 28 acquires the frequency $\Delta f$ to be added from the second frequency oscillator 22 and acquires the third frequency $f_3$ from the third frequency oscillator 25.

The frequency conversion unit 28 outputs frequency $\Delta f + f_3$ which is a sum of the frequency $\Delta f$ to be added and the third frequency $f_3$ to the frequency mixer 165 as the fourth frequency $f_4$.

The frequency modulator 161 acquires both the first frequency $f_1$ and the second frequency $f_2$ from the signal multiplexer 27.

The frequency modulator 161 modulates the optical frequency $f_0$ of the laser beam output from the light source 11 by the first frequency $f_1$, and outputs the laser beam after the frequency modulation to the pulse modulator 33 as the first laser beam. The optical frequency of the first laser beam is $f_0 + f_1$.

The frequency modulator 161 modulates the optical frequency $f_0$ of the laser beam output from the light source 11 by the second frequency $f_2$, and outputs the laser beam after the frequency modulation to the pulse modulator 33 as the second laser beam. The optical frequency of the second laser beam is $f_0 + f_2$.

The first laser beam having the optical frequency $f_0 + f_1$ has a first wavelength included in the absorption wavelength band of gas, and the second laser beam having the optical frequency $f_0 + f_2$ has a second wavelength not included in the absorption wavelength band of gas.

Since the operations of the pulse modulator 33, the optical amplifier 34, the optical circulator 35, and the optical antenna 36 are similar to those of the first embodiment, detailed description thereof will be omitted.

In the lidar device 1 illustrated in FIG. 19, the first laser beam and the second laser beam are simultaneously radiated from the optical antenna 36 to the space.

The optical antenna 36 receives each of the first laser beam scattered by the scatterer and the second laser beam scattered by the scatterer as scattered light.

The optical circulator 35 outputs the scattered light received by the optical antenna 36 to the optical multiplexer 162.

The optical multiplexer 162 acquires scattered light from the optical circulator 35 and reference light from the optical distributor 31.

The optical multiplexer 162 detects interference light between scattered light and reference light.

For example, when the lidar device 1 moves or the gas and the scatterer move, the scattered light is subjected to the Doppler shift, and the optical frequencies $f_0 + f_1$ and $f_0 + f_2$ of the scattered light are shifted. That is, when the lidar device 1 and the scatterer or the like are close to each other, the optical frequencies $f_0 + f_1$ and $f_0 + f_2$ of the scattered light are increased by, for example, the frequency $\Delta f_{sft}$. Since the optical frequency of the reference light output from the optical distributor 31 is $f_0$, the optical frequency of the interference light between the scattered light having the optical frequency $f_0 + f_1 + \Delta f_{sft}$ output from the optical circulator 35 and the reference light is $f_1 + \Delta f_{sft}$ ($= f_0 + f_1 + \Delta f_{sft} - f_0$). In addition, the optical frequency of the interference light between the scattered light having the optical frequency $f_0 + f_2 + \Delta f_{sft}$ output from the optical circulator 35 and the reference light is $f_2 + \Delta f_{sft}$ ($= f_0 + f_2 + \Delta f_{sft} - f_0$).

When the lidar device 1 and the scatterer or the like are away from each other, the optical frequencies $f_0 + f_1$ and $f_0 + f_2$ of the scattered light are decreased by, for example, the frequency $\Delta f_{sft}$. Since the optical frequency of the reference light output from the optical distributor 31 is $f_0$, the optical frequency of the interference light between the scattered light having the optical frequency $f_0 + f_1 - \Delta f_{sft}$ output from the optical circulator 35 and the reference light is $f_1 - \Delta f_{sft}$ ($= f_0 + f_1 - \Delta f_{sft} - f_0$). In addition, the optical frequency of the interference light between the scattered light having the optical frequency $f_0 + f_2 - \Delta f_{sft}$ output from the optical circulator 35 and the reference light is $f_2 - \Delta f_{sft}$ ($= f_0 + f_2 - \Delta f_{sft} - f_0$).

When the lidar device 1 does not move and the scatterer or the like does not move, the optical frequencies $f_0 + f_1$ and $f_0 + f_2$ of the scattered light do not change. $\Delta f_{sft} = 0$. Since the optical frequency of the reference light output from the optical distributor 31 is $f_0$, the optical frequency of the interference light between the scattered light having the optical frequency $f_0 + f_1$ output from the optical circulator 35 and the reference light is $f_1$ ($= f_0 + f_1 - f_0$). In addition, the optical frequency of the interference light between the scattered light having the optical frequency $f_0 + f_2$ output from the optical circulator 35 and the reference light is $f_2$ ($= f_0 + f_2 - f_0$).

Therefore, when the lidar device 1 and the scatterer or the like are close to each other, the optical multiplexer 162 outputs the interference light having the optical frequency $f_1 + \Delta f_{sft}$ and the interference light having the optical frequency $f_2 + \Delta f_{sft}$ to the balanced detector 163.

When the lidar device 1 and the scatterer or the like are away from each other, the optical multiplexer 162 outputs the interference light having the optical frequency $f_1 - \Delta f_{sft}$ and the interference light having the optical frequency $f_2 - \Delta f_{sft}$ to the balanced detector 163.

When the lidar device 1 does not move and the scatterer or the like does not move, the optical multiplexer 162 outputs the interference light having the optical frequency $f_1$ and the interference light having the optical frequency $f_2$ to the balanced detector 163.

The balanced detector 163 acquires interference light from the optical multiplexer 162 and converts the interference light into an electric signal.

The balanced detector 163 outputs the electric signal to the frequency discriminator 164.

When the frequency discriminator 164 acquires an electric signal related to the interference light having the optical frequency $f_2 + \Delta f_{sft}$, an electric signal related to the interference light having the optical frequency $f_2 - \Delta f_{sft}$, or an electric signal related to the interference light having the optical frequency $f_2$ from the balanced detector 163, the frequency discriminator 164 outputs the acquired electric signal to the frequency mixer 165.

When the frequency discriminator 164 acquires the electric signal related to the interference light having the optical frequency $f_1 + \Delta f_{sft}$, the electric signal related to the interference light having the optical frequency $f_1 - \Delta f_{sft}$, or the electric signal related to the interference light having the optical frequency $f_1$ from the balanced detector 163, the frequency discriminator outputs the acquired electric signal to the signal multiplexer 166.

The frequency mixer 165 acquires the fourth frequency $f_4$ from the second frequency oscillator 22 and acquires the electric signal from the frequency discriminator 164.

If the frequency of the electric signal output from the frequency discriminator 164 is $f_2 + \Delta f_{sft}$, the frequency mixer 165 down-converts the frequency of the electric signal to $f_2 - f_1 + \Delta f_{sft}$ using the fourth frequency $f_4$.

When the frequency of the electric signal output from the frequency discriminator 164 is $f_2 - \Delta f_{sft}$, the frequency mixer 165 down-converts the frequency of the electric signal to $f_2 - f_4 - \Delta f_{sft}$ using the fourth frequency $f_4$.

When the frequency of the electric signal output from the frequency discriminator 164 is $f_2$, the frequency mixer 165 down-converts the frequency of the electric signal to $f_2 - f_4$ using the fourth frequency $f_4$.

The frequency mixer 165 outputs the down-converted electric signal to the signal multiplexer 166.

The signal multiplexer 166 acquires the electric signal from the frequency discriminator 164 and acquires the electric signal from the frequency mixer 165.

The signal multiplexer 166 multiplexes the two electric signals and outputs the multiplexed electric signal to the A/D converter 167.

That is, when the electric signal related to the interference light having the optical frequency $f_2 + \Delta f_{sft}$ is output from the frequency discriminator 164 and the electric signal having the optical frequency $f_2 - f_1 + \Delta f_{sft}$ is output from the frequency mixer 165, the signal multiplexer 166 multiplexes these electric signals. The signal multiplexer 166 outputs the electric signal including the frequencies $f_2 + \Delta f_{sft}$ and $f_2 - f_4 + \Delta f_{sft}$ to the A/D converter 167 as the multiplexed electric signal.

When the electric signal related to the interference light having the optical frequency $f_2 - \Delta f_{sft}$ is output from the frequency discriminator 164 and the electric signal having the optical frequency $f_2 - f_4 - \Delta f_{sft}$ is output from the frequency mixer 165, the signal multiplexer 166 multiplexes these electric signals. The signal multiplexer 166 outputs the electric signal including the frequencies $f_2 - \Delta f_{sft}$ and $f_2 - f_4 - \Delta f_{sft}$ to the A/D converter 167 as the multiplexed electric signal.

When the electric signal related to the interference light having the optical frequency $f_2$ is output from the frequency discriminator 164 and the electric signal having the frequency $f_2 - f_4$ is output from the frequency mixer 165, the signal multiplexer 166 multiplexes these electric signals. The signal multiplexer 166 outputs the electric signal including the frequencies $f_2$ and $f_2 - f_4$ to the A/D converter 167 as the multiplexed electric signal.

The A/D converter 167 acquires an electric signal from the signal multiplexer 166.

The A/D converter 167 converts the analog electric signal into a digital signal, and outputs the digital signal to the frequency analysis unit 51 of the density calculating unit 16.

The frequency analysis unit 51 of the density calculating unit 16 acquires the digital signal from the A/D converter 167.

The frequency analysis unit 51 converts the digital signal into a signal in the frequency domain by performing fast Fourier transform on the digital signal for each predetermined time gate.

The frequency analysis unit 51 outputs the signal in the frequency domain for a distance range corresponding to each time gate to the spectrum intensity calculating unit 52.

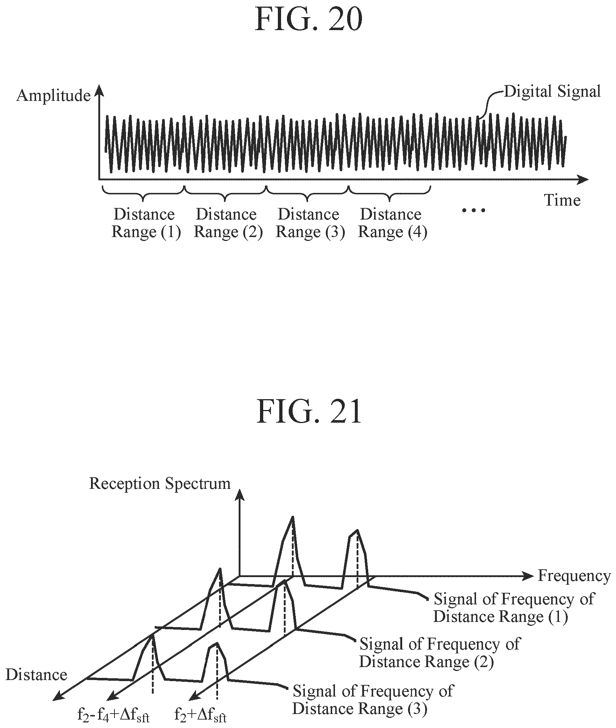

FIG. 20 is an explanatory diagram illustrating a relationship between a digital signal provided to the frequency analysis unit 51 and a distance range corresponding to each time gate.

Fig. 20 illustrates digital signals for the distance range (1), the distance range (2), the distance range (3), the distance range (4), ....

The spectrum intensity calculating unit 52 acquires the signal in the frequency domain for each distance range from the frequency analysis unit 51.

When the lidar device 1 and the scatterer or the like are close to each other, the spectrum intensity calculating unit 52 detects the reception spectrum at the frequency $f_2 + \Delta f_{sft}$ and the reception spectrum at the frequency $f_2 - f_4 + \Delta f_{sft}$ for each distance range.

When the lidar device 1 and the scatterer or the like are away from each other, the spectrum intensity calculating unit 52 detects the reception spectrum at the frequency $f_2 - \Delta f_{sft}$ and the reception spectrum of the frequency $f_2 - f_4 - \Delta f_{sft}$ for each distance range.

When the lidar device 1 does not move and the scatterer or the like does not move, the spectrum intensity calculating unit 52 detects the reception spectrum at the frequency $f_2$ and the reception spectrum at the frequency $f_2 - f_4$.

FIG. 21 is an explanatory diagram illustrating a signal in the frequency domain for each distance range and a reception spectrum for each distance range.

FIG. 21 illustrates each of the signals and the reception spectra in the frequency domain for the distance range (1), the distance range (2), and the distance range (3).

FIG. 21 illustrates each of the signal and the reception spectrum in the frequency domain when the lidar device 1 and the scatterer or the like are close to each other.

When the lidar device 1 and the scatterer or the like are close to each other, the spectrum intensity calculating unit 52 calculates the intensity of the reception spectrum at the frequency $f_2 + \Delta f_{sft}$ and the intensity of the reception spectrum at the frequency $f_2 - f_4 + \Delta f_{sft}$ for each distance range.

The processing of calculating the intensity of the reception spectrum is disclosed in, for example, Non-Patent Literature 2. Therefore, although the details of the processing of calculating the intensity of the reception spectrum are omitted, the intensity of the reception spectrum can be calculated from the area of the reception spectrum at the frequency $f_2 + \Delta f_{sft}$, and the intensity of the reception spectrum can be calculated from the area of the reception spectrum at the frequency $f_2 - f_1 + \Delta f_{sft}$.

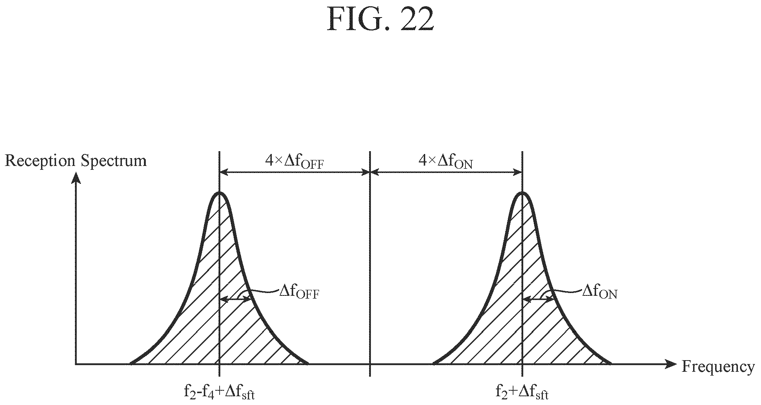

FIG. 22 is an explanatory diagram illustrating an area of a reception spectrum and a frequency difference between two reception spectra.

In Fig. 22, a hatched region indicates the area of the reception spectrum.

When the lidar device 1 and the scatterer or the like are away from each other, the spectrum intensity calculating unit 52 calculates the intensity of the reception spectrum at the frequency $f_2 - \Delta f_{sft}$ and the intensity of the reception spectrum at the frequency $f_2 - f_1 - \Delta f_{sft}$ for each distance range.

Also in this case, the intensity of the reception spectrum can be calculated from the area of the reception spectrum

at the frequency $f_2 - \Delta f_{sft}$, and the intensity of the reception spectrum can be calculated from the area of the reception spectrum at the frequency $f_2 - f_4 - \Delta f_{sft}$.

When the lidar device 1 does not move and the scatterer or the like does not move, the spectrum intensity calculating unit 52 calculates the intensity of the reception spectrum at the frequency $f_2$ and the intensity of the reception spectrum at the frequency $f_2 - f_4$ for each distance range.

Also in this case, the intensity of the reception spectrum can be calculated from the area of the reception spectrum at the frequency $f_2$, and the intensity of the reception spectrum can be calculated from the area of the reception spectrum at the frequency $f_2 - f_4$.

The spectrum intensity calculating unit 52 outputs the intensity of the reception spectrum for each distance range to the density calculation processing unit 53.

Hereinafter, each of the intensity of the reception spectrum at the frequency $f_2 + \Delta f_{sft}$, the intensity of the reception spectrum at the frequency $f_2 - \Delta f_{sft}$, and the intensity of the reception spectrum at the frequency $f_2$ is referred to as "reception intensity of ON wavelength". The "ON wavelength" means a wavelength included in an absorption wavelength band of a gas.

Further, each of the intensity of the reception spectrum at the frequency $f_2 - f_4 + \Delta f_{sft}$, the intensity of the reception spectrum at the frequency $f_2 - f_4 - \Delta f_{sft}$, and the intensity of the reception spectrum at the frequency $f_2 - f_4$ is referred to as "reception intensity of OFF wavelength". The "OFF wavelength" means a wavelength not included in the absorption wavelength band of the gas.

It is assumed that the distribution of the two reception spectra detected by the spectrum intensity calculating unit 52 is a Gaussian distribution as illustrated in FIG. 22.

Further, as illustrated in FIG. 22, the standard deviation value of one of the two reception spectra is $\Delta f_{ON}$, and the standard deviation value of the other reception spectrum is $\Delta f_{OFF}$.

At this time, when the frequency difference $\Delta f (= f_4)$ between $f_2$ and $(f_2 - f_4)$ is equal to or larger than the sum of four times the standard deviation value $\Delta f_{ON}$ and four times the standard deviation value $\Delta f_{OFF}$ as expressed in the following Formula (3), the intensities of the two reception spectra can be calculated with 99.99% accuracy.

$$\Delta f \geq 4 \times \Delta f_{ON} + 4 \times \Delta f_{OFF} \quad (3)$$

For example, when each of the standard deviation value $\Delta f_{ON}$ and the standard deviation value $\Delta f_{OFF}$ is 1 MHz, the frequency difference $\Delta f$ is 8 MHz or more.

Therefore, in the lidar device 1 illustrated in FIG. 19, the frequency output unit 151 outputs each of the first frequency $f_1$, the second frequency $f_2$, and the fourth frequency $f_4$ in which the frequency difference $\Delta f$ satisfies Formula (3).

The density calculation processing unit 53 acquires the intensity of the reception spectrum for each distance range from the spectrum intensity calculating unit 52.

The density calculation processing unit 53 calculates the density of the gas from the intensity of the reception spectrum for each distance range.

That is, the density calculation processing unit 53 calculates the density $n(z)$ of the gas by substituting the reception intensity of the ON wavelength and the reception intensity of the OFF wavelength at the position of the distance $z$ from the lidar device 1 and the reception intensity of the ON wavelength and the reception intensity of the OFF wavelength at the position of the distance $z + \Delta z$ from the lidar device 1 into the above Formula (2).

When the lidar device 1 and the scatterer or the like are close to each other, the intensity of the reception spectrum at the frequency $f_2 + \Delta f_{sft}$ is used as the reception intensity of the ON wavelength, and the intensity of the reception spectrum at the frequency $f_2 - f_4 + \Delta f_{sft}$ is used as the reception intensity of the OFF wavelength.

When the lidar device 1 and the scatterer or the like are away from each other, the intensity of the reception spectrum at the frequency $f_2 - \Delta f_{sft}$ is used as the reception intensity of the ON wavelength, and the intensity of the reception spectrum at the frequency $f_2 - f_4 - \Delta f_{sft}$ is used as the reception intensity of the OFF wavelength.

When the gas is stationary or even when the gas moves, if the distance between the gas and the lidar device 1 does not change, the intensity of the reception spectrum at the frequency $f_2$ is used as the reception intensity of the ON wavelength, and the intensity of the reception spectrum at the frequencies $f_2 - f_4$ is used as the reception intensity of the OFF wavelength.

In the fourth embodiment described above, the lidar device 1 is configured to radiate the first laser beam having the wavelength included in the absorption wavelength band of the observation target gas and the second laser beam having a lower absorption rate by the gas than that of the first laser beam to the space where the gas is present. In addition, the lidar device 1 includes a light source 11 to output a laser beam;

a frequency output unit 151 to output each of a first frequency and a second frequency; a reference light output unit 13 to output the laser beam output from the light source 11 as reference light; an optical transmission unit 152 to generate the first laser beam by modulating an optical frequency of the laser beam output from the light source 11 by the first frequency, generate the second laser beam by modulating the optical frequency of the laser beam output from the light source 11 by the second frequency, and radiate each of the first laser beam and the second laser beam to the space; and an optical receiving unit 153 to receive, as scattered light, each of the first laser beam radiated by the optical transmission unit 152 and then scattered by a scatterer floating in the space and the second laser beam radiated by the optical transmission unit and then scattered by the scatterer, and detect interference light between the scattered light and the reference light. Therefore, the lidar device 1 can calculate the density of the gas without including two light sources.

Fifth Embodiment.

In a fifth embodiment, the lidar device 1 in which the reference light output unit 171 includes a frequency modulator 181 in addition to the optical distributor 31 will be described.

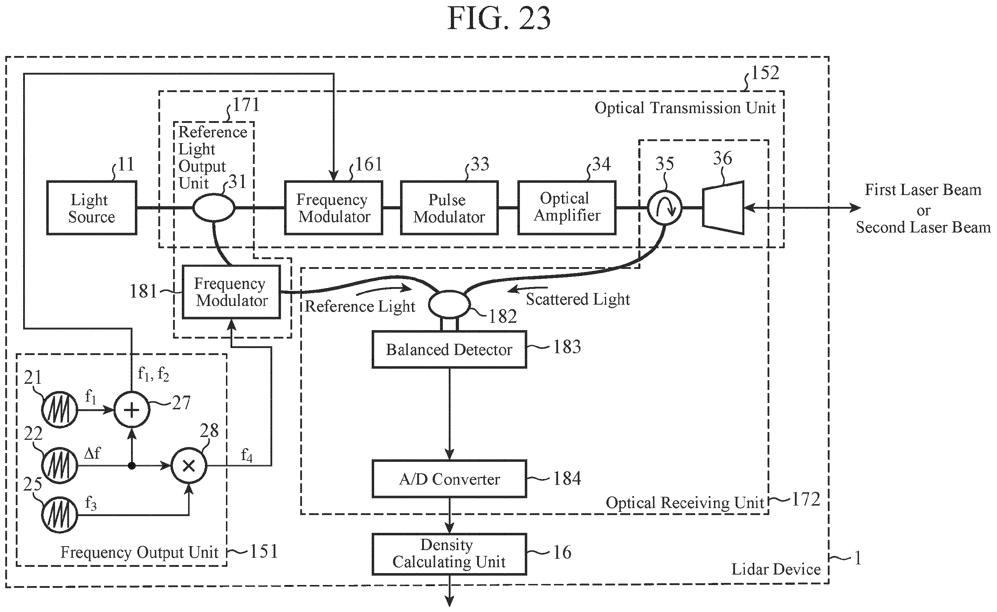

FIG. 23 is a configuration diagram illustrating the lidar device 1 according to the fifth embodiment. In FIG. 23, the same reference numerals as those in FIGS. 1 and 19 denote the same or corresponding parts, and thus description thereof is omitted.

The lidar device 1 illustrated in FIG. 23 includes a light source 11, a frequency output unit 151, a reference light output unit 171, an optical transmission unit 152, an optical receiving unit 172, and a density calculating unit 16.

In the lidar device 1 illustrated in FIG. 23, the frequency conversion unit 28 of the frequency output unit 151 outputs the fourth frequency $f_4$ to the frequency modulator 181.

The reference light output unit 171 includes an optical distributor 31 and a frequency modulator 181.

The reference light output unit 171 modulates the optical frequency $f_0$ of the laser beam output from the light source 11 by the fourth frequency $f_4$ output from the frequency output unit 151, and outputs the laser beam modulated by the fourth frequency $f_4$ to the optical receiving unit 172 as reference light.

The frequency modulator 181 is implemented by, for example, a modulation element using an acousto-optic element or a modulation element using a lithium niobate crystal.

The frequency modulator 181 modulates the optical frequency $f_0$ of the laser beam output from the optical distributor 31 by the fourth frequency $f_4$ output from the frequency conversion unit 28.

The frequency modulator 181 outputs the laser beam modulated by the fourth frequency $f_4$ to the optical multiplexer 182 as reference light. The optical frequency of the reference light is $f_0 + f_4$.

The optical receiving unit 172 includes an optical circulator 35, an optical antenna 36, an optical multiplexer 182, a balanced detector 183, and an A/D converter 184.

The optical receiving unit 172 receives, as scattered light, each of the first laser beam radiated by the optical transmission unit 152 and then scattered by the scatterer and the second laser beam radiated by the optical transmission unit and then scattered by the scatterer, and detects interference light between the scattered light and the reference light.

The optical multiplexer 182 is implemented by, for example, a beam splitter or a fiber type coupler.

The optical multiplexer 182 detects interference light between the scattered light output from the optical circulator 35 and the reference light output from the frequency modulator 181.

The optical multiplexer 182 outputs the interference light to the balanced detector 183.

That is, since the optical frequency of the reference light is $f_0 + f_4$, the optical multiplexer 182 outputs the interference light having the optical frequency $f_1 - f_4 + \Delta f_{sft}$ and the interference light having the optical frequency $f_2 - f_4 + \Delta f_{sft}$ to the balanced detector 183 when the lidar device 1 and the scatterer or the like are close to each other.

When the lidar device 1 and the scatterer or the like are away from each other, the optical multiplexer 182 outputs the interference light having the optical frequency $f_1 - f_4 - \Delta f_{sft}$ and the interference light having the optical frequency $f_2 - f_4 - \Delta f_{sft}$ to the balanced detector 183.

When the lidar device 1 does not move and the scatterer or the like does not move, the optical multiplexer 182 outputs the interference light having the optical frequency $f_1 - f_4$ and the interference light having the optical frequency $f_2 - f_4$ to the balanced detector 183.

The balanced detector 183 is implemented by, for example, a balanced receiver that reduces in-phase noise by using two photodiodes.

The balanced detector 183 converts the interference light output from the optical multiplexer 182 into an electric signal.

The balanced detector 183 outputs the electric signal to the A/D converter 184.

The A/D converter 184 converts the analog electric signal output from the balanced detector 183 into a digital signal.

The A/D converter 184 outputs the digital signal to the density calculating unit 16.

Next, the lidar device 1 illustrated in FIG. 23 will be described.

The light source 11 outputs the laser beam to the optical distributor 31.

The signal multiplexer 27 of the frequency output unit 151 outputs each of the first frequency $f_1$ and the second frequency $f_2$ to the frequency modulator 161.

The frequency conversion unit 28 of the frequency output unit 151 outputs the fourth frequency $f_4$ to the frequency modulator 181.

Upon receiving the laser beam from the light source 11, the optical distributor 31 distributes the laser beam at a predetermined ratio.

The optical distributor 31 outputs one of the distributed laser beams to the frequency modulator 161 and outputs the other of the distributed laser beams to the frequency modulator 181.

Since the operations of the frequency modulator 161, the pulse modulator 33, the optical amplifier 34, the optical circulator 35, and the optical antenna 36 are similar to those in the fourth embodiment, detailed description thereof will be omitted.

In the lidar device 1 illustrated in FIG. 23, the first laser beam and the second laser beam are simultaneously radiated from the optical antenna 36 to the space.

The optical antenna 36 receives each of the first laser beam scattered by the scatterer and the second laser beam scattered by the scatterer as scattered light.

The optical circulator 35 outputs the scattered light received by the optical antenna 36 to the optical multiplexer 182.

Upon receiving the laser beam from the optical distributor 31, the frequency modulator 181 modulates the optical frequency $f_0$ of the laser beam by the fourth frequency $f_4$ output from the frequency conversion unit 28.

The frequency modulator 181 outputs the laser beam modulated by the fourth frequency $f_4$ to the optical multiplexer 182 as reference light. The optical frequency of the reference light is $f_0 + f_4$.

The optical multiplexer 182 acquires scattered light from the optical circulator 35 and reference light from the frequency modulator 181.

The optical multiplexer 182 detects interference light between scattered light and reference light.

For example, when the lidar device 1 moves, or when the gas and the scatterer move, the scattered light is subjected to the Doppler shift, and the optical frequencies $f_0 + f_1$ and $f_0 + f_2$ of the scattered light are shifted. That is, when the lidar device 1 and the scatterer or the like are close to each other, the optical frequencies $f_0 + f_1$ and $f_0 + f_2$ of the scattered light are increased by, for example, the frequency $\Delta f_{sft}$. Since the optical frequency of the reference light output from the frequency modulator 181 is $f_0 + f_4$, the optical frequency of the interference light between the scattered light having the optical frequency $f_0 + f_1 + \Delta f_{sft}$ output from the optical circulator 35 and the reference light is $f_1 - f_4 + \Delta f_{sft}$ ($= f_0 + f_1 + \Delta f_{sft} - (f_0 + f_4)$). In addition, the optical frequency of the interference light between the scattered light having the optical frequency $f_0 + f_2 + \Delta f_{sft}$ output from the optical circulator 35 and the reference light is $f_2 - f_4 + \Delta f_{sft}$ ($= f_0 + f_2 + \Delta f_{sft} - (f_0 + f_4)$).

When the lidar device 1 and the scatterer or the like are away from each other, the optical frequencies $f_0 + f_1$ and $f_0 + f_2$ of the scattered light are decreased by, for example, the frequency $\Delta f_{sft}$. Since the optical frequency of the reference light output from the frequency modulator 181 is $f_0 + f_4$, the optical frequency of the interference light between the scattered light having the optical frequency $f_0 + f_1 - \Delta f_{sft}$ output from the optical circulator 35 and the reference light is $f_1 - f_4 - \Delta f_{sft}$ ($= f_0 + f_1 - \Delta f_{sft} - (f_0 + f_4)$). In addition, the optical frequency of the interference light between the scattered light having the optical frequency $f_0 + f_2 - \Delta f_{sft}$ output from the optical circulator 35 and the reference light is $f_2 - f_4 - \Delta f_{sft}$ ($= f_0 + f_2 - \Delta f_{sft} - (f_0 + f_4)$).

When the lidar device 1 does not move and the scatterer or the like does not move, the optical frequencies $f_0 + f_1$ and $f_0 + f_2$ of the scattered light do not change. $\Delta f_{sft} = 0$. Since the optical frequency of the reference light output from the frequency modulator 181 is $f_0 + f_4$, the optical frequency of the interference light between the scattered light having the optical frequency $f_0 + f_1$ output from the optical circulator 35 and the reference light is $f_1 - f_4$ ($= f_0 + f_1 - (f_0 + f_4)$). In addition, the optical frequency of the interference light between the scattered light having the optical frequency $f_0 + f_2$ output from the optical circulator 35 and the reference light is $f_2 - f_4$ ($= f_0 + f_2 - (f_0 + f_4)$).

Therefore, when the lidar device 1 and the scatterer or the like are close to each other, the optical multiplexer 182 outputs the interference light having the optical frequency $f_1 - f_4 + \Delta f_{sft}$ and the interference light having the optical frequency $f_2 - f_4 + \Delta f_{sft}$ to the balanced detector 183.

When the lidar device 1 and the scatterer or the like are away from each other, the optical multiplexer 182 outputs the interference light having the optical frequency $f_1 - f_4 - \Delta f_{sft}$ and the interference light having the optical frequency $f_2 - f_4 - \Delta f_{sft}$ to the balanced detector 183.

When the lidar device 1 does not move and the scatterer or the like does not move, the optical multiplexer 142 outputs the interference light having the optical frequencies $f_1 - f_4$ and the interference light having the optical frequencies $f_2 - f_4$ to the balanced detector 183.

The balanced detector 183 acquires interference light from the optical multiplexer 182 and converts the interference light into an electric signal.

The balanced detector 183 outputs the electric signal to the A/D converter 184.

The A/D converter 184 acquires the electric signal from the balanced detector 183.

The A/D converter 184 converts the analog electric signal into a digital signal and outputs the digital signal to the density calculating unit 16.

Upon receiving the digital signal from the A/D converter 184, the density calculating unit 16 calculates the density of the gas.

That is, when the lidar device 1 and the scatterer or the like are close to each other, the density calculating unit 16 calculates the density of the gas by substituting the intensity of the reception spectrum at the frequency $f_1 - f_4 + \Delta f_{sft}$ and the intensity of the reception spectrum at the frequency $f_2 - f_4 + \Delta f_{sft}$ into Formula (2).

When the lidar device 1 and the scatterer or the like are away from each other, the density calculating unit 16 calculates the density of the gas by substituting the intensity of the reception spectrum at the frequency $f_1 - f_4 - \Delta f_{sft}$ and the intensity of the reception spectrum at the frequency $f_2 - f_4 - \Delta f_{sft}$ into Formula (2).

When the lidar device 1 does not move and the scatterer or the like does not move, the density calculating unit 16 calculates the density of the gas by substituting the intensity of the reception spectrum at the frequency $f_1 - f_4$ and the intensity of the reception spectrum at the frequency $f_2 - f_4$ into Formula (2).

Also in the lidar device 1 illustrated in FIG. 23, similarly to the lidar device 1 illustrated in FIG. 19, the density of the gas can be calculated without including two light sources.

In the lidar device 1 illustrated in FIG. 23, the frequency discriminator 164, the frequency mixer 165, and the signal multiplexer 166 are unnecessary.

INDUSTRIAL APPLICABILITY

The present disclosure is suitable for a lidar device.

REFERENCE SIGNS LIST

1: lidar device, 11: light source, 12: frequency output unit, 13: reference light output unit, 14: optical transmission unit, 15: optical receiving unit, 16: density calculating unit, 21: first frequency oscillator, 22, 22': second frequency oscillator, 23, 23': frequency mixer, 24: frequency conversion unit, 25: third frequency oscillator, 26: frequency mixer, 27: signal multiplexer, 28: frequency conversion unit, 31: optical distributor, 32: frequency modulator, 33: pulse modulator, 34: optical amplifier, 35: optical circulator, 36: optical antenna, 37: optical multiplexer, 38: balanced detector, 39: frequency discriminator, 40: frequency mixer, 41: signal multiplexer, 42: A/D converter, 51: frequency analysis unit, 52: spectrum intensity calculating unit, 53: density calculation processing unit, 61: frequency analysis circuit, 62: spectrum intensity calculating circuit, 63: density calculation processing circuit, 71: memory, 72: processor, 81: frequency output unit, 82: optical transmission unit, 83: optical receiving unit, 84: temperature calculating unit, 91: frequency modulator, 92: optical multiplexer, 93: balanced detector, 94: frequency discriminator, 95: signal multiplexer, 96: A/D converter, 101: frequency analysis unit, 102: spectrum intensity calculating unit, 103: temperature calculation processing unit, 111: frequency analysis circuit, 112: spectrum intensity calculating circuit, 113: temperature calculation processing circuit, 121: memory, 122: processor, 131: reference light output unit, 132: optical receiving unit, 141: frequency modulator, 142: optical multiplexer, 143: balanced detector, 144: A/D converter, 151: frequency output unit, 152: optical transmission unit, 153: optical receiving unit, 161: frequency modulator, 162: optical multiplexer, 163: balanced detector, 164: frequency discriminator, 165: frequency mixer, 166: signal multiplexer, 167: A/D converter, 171: reference light output unit, 172: optical receiving unit, 181: frequency modulator, 182: optical multiplexer, 183: balanced detector, 184: A/D converter

**Claims**

1. A lidar device that radiates a first laser beam having a wavelength included in an absorption wavelength band of an observation target gas and a second laser beam having a lower absorption rate by the gas than that of the first laser beam to a space where the gas is present, the lidar device comprising:

   a light source (11) to output a laser beam;
   a frequency output unit (12; 81) to output a first frequency or a second frequency different from the first frequency;
   a reference light output unit (13; 131) to output the laser beam output from the light source as reference light;
   an optical transmission unit (14; 82) to generate the first laser beam by modulating an optical frequency of the laser beam output from the light source by the first frequency, generate the second laser beam by modulating the optical frequency of the laser beam output from the light source by the second frequency, and radiate each of the first laser beam and the second laser beam to the space; and
   an optical receiving unit (15; 83) to receive, as scattered light, the first laser beam radiated by the optical transmission unit and then scattered by a scatterer floating in the space or the second laser beam radiated by the optical transmission unit and then scattered by the scatterer, and detect interference light between the scattered light and the reference light,
   wherein the first laser beam has a first wavelength within an absorption wavelength band of the gas and the second laser beam has a second wavelength out of the absorption wavelength band of the gas, and
wherein the frequency output unit outputs the first frequency in a first period, and outputs the second frequency in
a second period different from the first period;
wherein the frequency output unit (12) includes:

a first frequency oscillator (21) to oscillate the first frequency;
a second frequency oscillator (22); and
a frequency mixer (23) to generate the second frequency by adding the first frequency and a frequency that is
oscillated by the second frequency oscillator;

wherein the lidar device further comprises:

a density calculating unit (16) to analyze an optical frequency of interference light detected by the optical
receiving unit and calculates density of the gas from a results of analysis of the optical frequency, wherein
the optical receiving unit (15; 83)
when having received the first laser beam scattered by the scatterer, detects interference light between the
received first laser beam and the reference light and outputs the interference light to the density calculating
unit,
**characterized in that**
when having received the second laser beam scattered by the scatterer, the optical receiving unit (15; 83)
detects interference light between the received second laser beam and the reference light, down-converts an
optical frequency of the interference light between the received second laser beam and the reference light
using the frequency oscillated by the second frequency oscillator, and outputs the downconverted interference light to the density calculating unit; and
the density calculating unit (16) is configured to calculate the density n(z) of the gas by substituting a reception
intensity of the first wavelength and a reception intensity of the second wavelength related to the scatterer
present at a position of a distance z from the lidar device and a reception intensity of the first wavelength and a
reception intensity of the second wavelength related to the scatterer present at a position of a distance z + $\Delta$z
from the lidar device into the formula

$$n(z) = \frac{1}{2 \cdot \Delta z \cdot (k_{ON} - k_{OFF})} \cdot \ln \left[ \frac{P_{r\_OFF}(z + \Delta z)}{P_{r\_ON}(z + \Delta z)} \cdot \frac{P_{r\_ON}(z)}{P_{r\_OFF}(z)} \right]$$

where $P_{r\_ON}(z)$ is the reception intensity of the first wavelength related to the scatterer present at the position
of the distance z from the lidar device, $P_{r\_OFF}(z)$ is the reception intensity of the second wavelength of the
scatterer present at the position of the distance z from the lidar device, $P_{r\_ON}(z + \Delta z)$ is the reception intensity
of the first wavelength related to the scatterer present at the position of the distance z + $\Delta$z from the lidar
device, $P_{r\_OFF}(z + \Delta z)$ is the reception intensity of the second wavelength related to the scatterer present at
the position of the distance z + $\Delta$z from the lidar device, $\Delta$z is a distance between two points in the observation
target gas, $k_{ON}$ is an absorption coefficient of the first wavelength, and $k_{OFF}$ is an absorption coefficient of the
second wavelength.

2. The lidar device according to claim 1, wherein
the reference light output unit (131), when the first frequency is output from the frequency output unit to the optical
transmission unit, outputs a laser beam output from the light source to the optical receiving unit as a reference, and
when the second frequency is output from the frequency output unit to the optical transmission unit, without outputting
a laser beam output from the light source as a reference light, modulates the optical frequency of the laser beam output
from the light source by a frequency oscillated by the second frequency oscillator, and outputs the laser beam
modulated by a frequency oscillated by the second frequency oscillator as a reference light to the optical receiving unit.

3. The lidar device according to claim 1, wherein

the second frequency oscillator (21) is configured to intermittently oscillate the second frequency and intermittently output the second frequency to the optical transmission unit; and
the frequency mixer (23) is configured to output the first frequency oscillated by the first frequency oscillator to the
reference light output unit when the second frequency is not output from the second frequency oscillator, and to
output a frequency of a sum of the first frequency and the second frequency to the reference light output unit when the second frequency is output from the second frequency oscillator,

wherein the optical transmission unit, when the second frequency is not output from the second frequency oscillator, uses a laser beam output from the light source as the first laser beam without modulating the optical frequency of the laser beam output from the light source by the first frequency, and when the second frequency is output from the second frequency oscillator, generates the second laser beam by modulating the optical frequency of the laser beam output from the light source by the second frequency, and

the reference light output unit, when the first frequency is output from the frequency mixer, modulates the optical frequency of the laser beam output from the light source by the first frequency, and outputs the laser beam modulated by the first frequency to the optical receiving unit as reference light, and when the frequency of the sum is output from the frequency mixer, modulates the optical frequency of the laser beam output from the light source by the frequency of the sum, and outputs the laser beam modulated by the frequency of the sum to the optical receiving unit as reference light.

**Patentansprüche**

1. Lidareinrichtung, die einen ersten Laserstrahl mit einer Wellenlänge, die in einem Absorptionswellenlängenband eines Beobachtungszielgases liegt, und einen zweiten Laserstrahl mit einer geringeren Absorptionsrate durch das Gas als jene des ersten Laserstrahls in einen Raum abstrahlt, in dem sich das Gas befindet, wobei die Lidareinrichtung umfasst:

eine Lichtquelle (11) zur Ausgabe eines Laserstrahls;
eine Frequenzausgabeeinheit (12; 81) zur Ausgabe einer ersten Frequenz oder einer zweiten Frequenz, die sich von der ersten Frequenz unterscheidet;
eine Referenzlichtausgabeeinheit (13; 131) zur Ausgabe des von der Lichtquelle ausgegebenen Laserstrahls als Referenzlicht;
eine optische Übertragungseinheit (14; 82) zum Erzeugen des ersten Laserstrahls durch Modulieren einer optischen Frequenz des von der Lichtquelle ausgegebenen Laserstrahls mit der ersten Frequenz, zum Erzeugen des zweiten Laserstrahls durch Modulieren der optischen Frequenz des von der Lichtquelle ausgegebenen Laserstrahls mit der zweiten Frequenz und zum Abstrahlen sowohl des ersten Laserstrahls als auch des zweiten Laserstrahls in den Raum; und
eine optische Empfangseinheit (15; 83) zum Empfangen, als gestreutes Licht, des ersten Laserstrahls, der von der optischen Übertragungseinheit abgestrahlt und dann von einem im Raum schwebenden Streuer gestreut wird, oder den zweiten Laserstrahl, der von der optischen Übertragungseinheit abgestrahlt und dann von dem Streuer gestreut wird, zu empfangen, und Interferenzlicht zwischen dem gestreuten Licht und dem Referenzlicht zu erfassen,
wobei der erste Laserstrahl eine erste Wellenlänge innerhalb eines Absorptionswellenlängenbandes des Gases hat und der zweite Laserstrahl eine zweite Wellenlänge außerhalb des Absorptionswellenlängenbandes des Gases hat, und
wobei die Frequenzausgabeeinheit die erste Frequenz in einer ersten Periode ausgibt, und die zweite Frequenz in einer zweiten Periode ausgibt, welche sich von der ersten Periode unterscheidet;
wobei die Frequenzausgabeeinheit (12) aufweist:

einen Erste-Frequenz-Oszillator (21), um die erste Frequenz oszillieren zu lassen;
einen Zweite-Frequenz-Oszillator (22); und
einen Frequenzmischer (23) zur Erzeugung der zweiten Frequenz durch Hinzufügen der ersten Frequenz und einer Frequenz, die durch den Zweite-Frequenz-Oszillator oszilliert wird;

wobei die Lidareinrichtung ferner umfasst:

eine Dichte-Berechnungseinheit (16) zum Analysieren einer optischen Frequenz von Interferenzlicht, das von der optischen Empfangseinheit erfasst wird, und zum Berechnen der Dichte des Gases aus einem Ergebnis der Analyse der optischen Frequenz, wobei
die optische Empfangseinheit (15; 83)
nach Empfang des vom Streuer gestreuten ersten Laserstrahls Interferenzlicht zwischen dem empfangenen ersten Laserstrahl und dem Referenzlicht erfasst, und das Interferenzlicht an die Dichte-Berechnungseinheit ausgibt,
**dadurch gekennzeichnet, dass**

wenn die optische Empfangseinheit (15; 83) den vom Streuer gestreuten zweiten Laserstrahl empfangen hat, das Interferenzlicht zwischen dem empfangenen zweiten Laserstrahl und dem Referenzlicht erfasst, eine optische Frequenz des Interferenzlichts zwischen dem empfangenen zweiten Laserstrahl und dem Referenzlicht unter Verwendung der vom Zweite-Frequenz-Oszillator oszillierten Frequenz abwärtskonvertiert und das abwärtskonvertierte Interferenzlicht an die Dichte-Berechnungseinheit ausgibt; und

die Dichte-Berechnungseinheit (16) konfiguriert ist, die Dichte n(z) des Gases zu berechnen, indem eine Empfangsintensität der ersten Wellenlänge und eine Empfangsintensität der zweiten Wellenlänge in Bezug auf den Streuer, der sich an einer Position mit einem Abstand z von der Lidareinrichtung befindet, und eine Empfangsintensität der ersten Wellenlänge und eine Empfangsintensität der zweiten Wellenlänge in Bezug auf den Streuer, der sich an einer Position mit einem Abstand z + $\Delta$z von der Lidareinrichtung befindet, ersetzt wird in der Formel

$$n(z) = \frac{1}{2 \cdot \Delta z \cdot (k_{ON} - k_{OFF})} \cdot \ln\left[\frac{P_{r\_OFF}(z + \Delta z)}{P_{r\_ON}(z + \Delta z)} \cdot \frac{P_{r\_ON}(z)}{P_{r\_OFF}(z)}\right]$$

wobei $P_{r\_ON}$(z) die Empfangsintensität der ersten Wellenlänge in Bezug auf den Streuer ist, der sich an der Position mit dem Abstand z von der Lidareinrichtung befindet, $P_r$ off(z) die Empfangsintensität der zweiten Wellenlänge des Streuers ist, der sich an der Position mit dem Abstand z von der Lidareinrichtung befindet, $P_{r\_ON}$(z + $\Delta$z) die Empfangsintensität der ersten Wellenlänge in Bezug auf den Streuer ist, der sich an der Position mit dem Abstand z + $\Delta$z von der Lidareinrichtung befindet, $P_{r\_OFF}$(z + $\Delta$z) die Empfangsintensität der zweiten Wellenlänge in Bezug auf den Streuer ist, der sich an der Position mit dem Abstand z + $\Delta$z von der Lidareinrichtung befindet, $\Delta$z ein Abstand zwischen zwei Punkten im Beobachtungszielgas ist, $k_{ON}$ ein Absorptionskoeffizient der ersten Wellenlänge ist, und $k_{OFF}$ ein Absorptionskoeffizient der zweiten Wellenlänge ist.

2. Lidareinrichtung nach Anspruch 1, wobei

die Referenzlichtausgabeeinheit (131), wenn die erste Frequenz von der Frequenzausgabeeinheit an die optische Übertragungseinheit ausgegeben wird, einen von der Lichtquelle ausgegebenen Laserstrahl an die optische Empfangseinheit als eine Referenz eine ausgibt, und

wenn die zweite Frequenz von der Frequenzausgabeeinheit an die optische Übertragungseinheit ausgegeben wird, ohne einen Laserstrahl, der von der Lichtquelle ausgegeben wird, als ein Referenzlicht auszugeben, die optische Frequenz des von der Lichtquelle ausgegebenen Laserstrahls durch eine vom Zweite-Frequenz-Oszillator oszillierte Frequenz moduliert, und den durch eine vom Zweite-Frequenz-Oszillator oszillierte Frequenz modulierten Laserstrahl als ein Referenzlicht an die optische Empfangseinheit ausgibt.

3. Lidareinrichtung nach Anspruch 1, wobei

der Zweite-Frequenz-Oszillator (21) konfiguriert ist, die zweite Frequenz intermittierend oszillieren zu lassen, und die zweite Frequenz intermittierend an die optische Übertragungseinheit auszugeben; und

der Frequenzmischer (23) konfiguriert ist, die von dem Erste-Frequenz-Oszillator oszillierte erste Frequenz an die Referenzlichtausgabeeinheit auszugeben, wenn die zweite Frequenz nicht von dem Zweite-Frequenz-Oszillator ausgegeben wird, und eine Frequenz einer Summe der ersten Frequenz und der zweiten Frequenz an die Referenzlichtausgabeeinheit auszugeben, wenn die zweite Frequenz von dem Zweite-Frequenz-Oszillator ausgegeben wird,

wobei die optische Übertragungseinheit, wenn die zweite Frequenz nicht vom Zweite-Frequenz-Oszillator ausgegeben wird, einen von der Lichtquelle ausgegebenen Laserstrahl als den ersten Laserstrahl nutzt, ohne die optische Frequenz des von der Lichtquelle ausgegebenen Laserstrahls durch die erste Frequenz zu modulieren, und wenn die zweite Frequenz vom Zweite-Frequenz-Oszillator ausgegeben wird, den zweiten Laserstrahl erzeugt, indem die optische Frequenz des von der Lichtquelle ausgegebenen Laserstrahls durch die zweite Frequenz moduliert wird, und

die Referenzlichtausgabeeinheit, wenn die erste Frequenz vom Frequenzmischer ausgegeben wird, die optische Frequenz des von der Lichtquelle ausgegebenen Laserstrahls mit der ersten Frequenz moduliert, und den mit der ersten Frequenz modulierten Laserstrahl als Referenzlicht an die optische Empfangseinheit ausgibt, und wenn die Frequenz der Summe vom Frequenzmischer ausgegeben wird, die optische Frequenz des von der Lichtquelle ausgegebenen Laserstrahls mit der Frequenz der Summe moduliert, und den durch die Frequenz der Summe modulierten Laserstrahl als Referenzlicht an die optische Empfangseinheit ausgibt.

**Revendications**

1.  Dispositif lidar qui rayonne un premier faisceau laser présentant une longueur d'onde incluse dans une bande de longueur d'onde d'absorption d'un gaz cible d'observation et un second faisceau laser présentant un taux d'absorption par le gaz inférieur à celui du premier faisceau laser vers un espace où le gaz est présent, le dispositif lidar comprenant :

    une source de lumière (11) pour délivrer en sortie un faisceau laser ;
    une unité de sortie de fréquence (12 ; 81) pour délivrer en sortie une première fréquence ou une seconde fréquence différente de la première fréquence ;
    une unité de sortie de lumière de référence (13 ; 131) pour délivrer en sortie le faisceau laser en sortie de la source de lumière en tant que lumière de référence ;
    une unité de transmission optique (14 ; 82) pour générer le premier faisceau laser en modulant une fréquence optique du faisceau laser en sortie de la source de lumière par la première fréquence, générer le second faisceau laser en modulant la fréquence optique du faisceau laser en sortie de la source de lumière par la seconde fréquence, et rayonner chacun du premier faisceau laser et du second faisceau laser vers l'espace ; et
    une unité de réception optique (15 ; 83) pour recevoir, sous forme de lumière diffusée, le premier faisceau laser rayonné par l'unité de transmission optique puis diffusé par un diffuseur flottant dans l'espace ou le second faisceau laser rayonné par l'unité de transmission optique puis diffusé par le diffuseur, et détecter une lumière d'interférence entre la lumière diffusée et la lumière de référence,
    dans lequel le premier faisceau laser présente une première longueur d'onde dans une bande de longueur d'onde d'absorption du gaz et le second faisceau laser présente une seconde longueur d'onde en dehors de la bande de longueur d'onde d'absorption du gaz, et
    dans lequel l'unité de sortie de fréquence délivre en sortie la première fréquence dans une première période, et délivre en sortie la seconde fréquence dans une seconde période différente de la première période ;
    dans lequel l'unité de sortie de fréquence (12) inclut :

    un premier oscillateur de fréquence (21) pour faire osciller la première fréquence ;
    un second oscillateur de fréquence (22) ; et
    un mélangeur de fréquences (23) pour générer la seconde fréquence en ajoutant la première fréquence et une fréquence qui est mise à osciller par le second oscillateur de fréquence ;

    dans lequel le dispositif lidar comprend en outre :

    une unité de calcul de densité (16) pour analyser une fréquence optique de lumière d'interférence détectée par l'unité de réception optique et calculer la densité du gaz à partir d'un résultat d'analyse de la fréquence optique, dans lequel
    l'unité de réception optique (15 ; 83)
    lorsqu'elle a reçu le premier faisceau laser diffusé par le diffuseur, détecte une lumière d'interférence entre le premier faisceau laser reçu et la lumière de référence et délivre en sortie la lumière d'interférence vers l'unité de calcul de densité,
    **caractérisé en ce que**
    après avoir reçu le second faisceau laser diffusé par le diffuseur, l'unité de réception optique (15 ; 83) détecte une lumière d'interférence entre le second faisceau laser reçu et la lumière de référence, abaissée en fréquence à la fréquence optique de la lumière d'interférence entre le second faisceau laser reçu et la lumière de référence en utilisant la fréquence mise à osciller par le second oscillateur de fréquence, et délivre en sortie la lumière d'interférence abaissée en fréquence à l'unité de calcul de densité ; et
    l'unité de calcul de densité (16) est configurée pour calculer la densité n(z) du gaz en substituant une intensité de réception de la première longueur d'onde et une intensité de réception de la seconde longueur d'onde relatives au diffuseur présent à une position d'une distance z du dispositif lidar et une intensité de réception de la première longueur d'onde et une intensité de réception de la seconde longueur d'onde relatives au diffuseur présent à une position d'une distance z + Δz du dispositif lidar dans la formule

$$n(z) = \frac{1}{2 \cdot \Delta z \cdot (k_{ON} - k_{OFF})} \cdot \ln \left[ \frac{P_{r\_OFF}(z + \Delta z)}{P_{r\_ON}(z + \Delta z)} \cdot \frac{P_{r\_ON}(z)}{P_{r\_OFF}(z)} \right]$$

    dans laquelle $P_{r\_ON}(z)$ est l'intensité de réception de la première longueur d'onde relative au diffuseur présent à la position de la distance z du dispositif lidar, $P_{r\_OFF}(z)$ est l'intensité de réception de la seconde longueur d'onde du diffuseur présent à la position de la distance z du dispositif lidar, $P_{r\_ON}(z + \Delta z)$ est l'intensité de réception de la première longueur d'onde relative au diffuseur présent à la position de la distance $z + \Delta z$ du dispositif lidar, $P_{r\_OFF}(z + \Delta z)$ est l'intensité de réception de la seconde longueur d'onde relative au diffuseur présent à la position de la distance $z + \Delta z$ du dispositif lidar, $\Delta z$ est une distance entre deux points dans le gaz cible d'observation, $k_{ON}$ est un coefficient d'absorption de la première longueur d'onde et $k_{OFF}$ est un coefficient d'absorption de la seconde longueur d'onde.

2. Dispositif lidar selon la revendication 1, dans lequel

l'unité de sortie de lumière de référence (131), lorsque la première fréquence est délivrée en sortie par l'unité de sortie de fréquence vers l'unité de transmission optique, délivre en sortie un faisceau laser depuis la source de lumière vers l'unité de réception optique en tant que référence, et
lorsque la seconde fréquence est délivrée en sortie par l'unité de sortie de fréquence vers l'unité de transmission optique, sans délivrer en sortie un faisceau laser en sortie de la source de lumière en tant que lumière de référence, module la fréquence optique du faisceau laser en sortie de la source de lumière par une fréquence mise à osciller par le second oscillateur de fréquence, et délivre en sortie le faisceau laser modulé par une fréquence mise à osciller par le second oscillateur de fréquence en tant que lumière de référence vers l'unité de réception optique.

3. Dispositif lidar selon la revendication 1, dans lequel

le second oscillateur de fréquences (21) est configuré pour faire osciller par intermittence la seconde fréquence et délivrer en sortie par intermittence la seconde fréquence vers l'unité de transmission optique ; et
le mélangeur de fréquences (23) est configuré pour délivrer en sortie la première fréquence mise à osciller par le premier oscillateur de fréquence vers l'unité de sortie de lumière de référence lorsque la seconde fréquence n'est pas délivrée en sortie par le second oscillateur de fréquence, et pour délivrer en sortie une fréquence d'une somme de la première fréquence et de la seconde fréquence vers l'unité de sortie de lumière de référence lorsque la seconde fréquence est délivrée en sortie par le second oscillateur de fréquence,
dans lequel l'unité de transmission optique, lorsque la seconde fréquence n'est pas délivrée en sortie par le second oscillateur de fréquence, utilise un faisceau laser en sortie de la source de lumière en tant que premier faisceau laser sans moduler la fréquence optique du faisceau laser en sortie de la source de lumière par la première fréquence, et lorsque la seconde fréquence est délivrée en sortie par le second oscillateur de fréquence, génère le second faisceau laser en modulant la fréquence optique du faisceau laser en sortie de la source de lumière par la seconde fréquence, et
l'unité de sortie de lumière de référence, lorsque la première fréquence est délivrée en sortie par le mélangeur de fréquences, module la fréquence optique du faisceau laser en sortie de la source de lumière par la première fréquence, et délivre en sortie le faisceau laser modulé par la première fréquence vers l'unité de réception optique en tant que lumière de référence, et lorsque la fréquence de la somme est délivrée en sortie par le mélangeur de fréquence, module la fréquence optique du faisceau laser en sortie de la source de lumière par la fréquence de la somme, et délivre en sortie le faisceau laser modulé par la fréquence de la somme vers l'unité de réception optique en tant que lumière de référence.

FIG. 1

# FIG. 2

# FIG. 3

# FIG. 4

# FIG. 5

START

Frequency Analysis Unit
Converts Digital Signal into
Signal in Frequency Domain —— ST1

Spectrum Intensity Calculating Unit
Detects Reception Spectrum for
Each Distance Range —— ST2

Spectrum Intensity Calculating Unit
Calculates Intensity of
Reception Spectrum for
Each Distance Range —— ST3

Density Calculation Processing Unit
Calculates Density of Gas —— ST4

END

# FIG. 6

Wavelength of Laser Beam
Output from Light Source

First Wavelength

Second Wavelength

Wavelength

Laser Beam

Transmittance

$f_0$ $f_0 + f_1$ $f_0 + f_2$

Absorption Wavelength Rate of Gas

# FIG. 7

Optical Frequency of Scattered Light

$f_0+f_2+\Delta f_{sft}$

$f_0+f_1+\Delta f_{sft}$

Time

Optical Frequency of Reference Light

$f_0$

Time

Reception Spectrum of Signal in Frequency Domain

$f_1+\Delta f_{sft}$

Frequency

$f_1+\Delta f_{sft}$

Frequency

Frequency

## FIG. 8

Reception Spectrum of Signal in
Frequency Domain

$f_1 + \Delta f_{sft}$

Frequency

## FIG. 9

Frequency

Time

## FIG. 10

$f_0 + f_2$

Wavelength

Second Laser Beam

Transmittance

FIG. 11

EP 4 283 341 B1

FIG. 12

# FIG. 13

Temperature Calculating Unit 84

A/D Converter 96 → Frequency Analysis Unit 101 → Spectrum Intensity Calculating Unit 102 → Temperature Calculation Processing Unit 103 →

# FIG. 14

Frequency Analysis Circuit 111

Spectrum Intensity Calculating Circuit 112

Temperature Calculation Processing Circuit 113

# FIG. 15

Memory 121

Processor 122

# FIG. 16

First Wavelength

Wavelength of Laser Beam Output from Light Source

Third Wavelength

Second Wavelength

Wavelength

Laser Beam

Transmittance

$f_0$  $f_0+f_1$  $f_0+f_2$
$f_0+f_3$

Absorption Wavelength Rate of Gas

# FIG. 17

EP 4 283 341 B1

# FIG. 18

# FIG. 19

EP 4 283 341 B1

# FIG. 20

Amplitude

Digital Signal

Distance Range (1)  Distance Range (2)  Distance Range (3)  Distance Range (4)  · · ·  Time

# FIG. 21

Reception Spectrum

Frequency

Signal of Frequency of Distance Range (1)

Signal of Frequency of Distance Range (2)

Signal of Frequency of Distance Range (3)

Distance

$f_2 - f_4 + \Delta f_{sft}$    $f_2 + \Delta f_{sft}$

# FIG. 22

# FIG. 23

EP 4 283 341 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3564652 A1

- EP 3081961 A1

**Non-patent literature cited in the description**

- **F. GIBERT** ; **D. EDOUART** ; **C. CENAC** ; **F. LE MOUNIER** ; **A. DUMAS**. 2-$\mu$m Ho emitter-based coherent DIAL for CO2 profiling in the atmosphere. *Opt. Lett*, 2015, vol. 40 (13), 3093-3096
- **M. IMAKI et al.** Wavelength selection and measurement error theoretical analysis based on ground-based coherent differential absorption lidar using 1.53 $\mu$m wavelength for simultaneous vertical profiling of water vapor density and wind speed. *Applied optics*, 2020, vol. 59 (8), 2238-2247

- **M. P. ARROYO** ; **R. K. HANSON**. Absorption measurements of water-vapor concentration, temperature, and line-shape parameters using a tunable InGaAsP diode laser. *Appl. Opt.*, 1993, vol. 32, 6104-6116
- **SHIBATA, YASUKUNI** ; **CHIKAO NAGASAWA** ; **MAKOTO ABO**. A direct detection 1.6 $\mu$m DIAL with three wavelengths for high accuracy measurements of vertical CO2 concentration and temperature profiles. *Lidar Technologies, Techniques, and Measurements for Atmospheric Remote Sensing IX.*, 2013, vol. 8894